# EUROPEAN PATENT SPECIFICATION

(11) **EP 3 335 102 B1**
(45) Date of publication and mention of the grant of the patent: **21.12.2022**
(21) Application number: 16753795.0
(22) Date of filing: 10.08.2016
(51) Int. Cl.: G06F 3/0481, G06F 3/0484

(54) **DEVICES, METHODS, AND GRAPHICAL USER INTERFACES FOR ADJUSTING USER INTERFACE OBJECTS**
VORRICHTUNGEN, VERFAHREN UND GRAFISCHE BENUTZEROBERFLÄCHEN ZUR EINSTELLUNG VON BENUTZERSCHNITTSTELLENOBJEKTEN
DISPOSITIFS, PROCÉDÉS ET INTERFACES UTILISATEUR GRAPHIQUES POUR AJUSTER DES OBJETS D'INTERFACE UTILISATEUR

(30) Priority: 10.08.2015 US 201562203387 P; 30.09.2015 US 201562235339 P; 28.01.2016 US 201615009661
(43) Date of publication of application: 20.06.2018
(73) Proprietor: Apple Inc., Cupertino CA 95014 (US)
(72) Inventor: KARUNAMUNI, Chanaka, G., Cupertino, CA 95014 (US); KING, Nicholas, V., Cupertino, CA 95014 (US); APODACA, Gregory, M., Cupertino, CA 95014 (US)
(74) Representative: Gillard, Matthew Paul
(86) International application number: PCT/US2016/046403
(87) International publication number: WO 2017/027623

(56) References cited:
- EP-A2- 2 530 677
- WO-A1-2013/169870
- WO-A1-2013/169870
- WO-A2-2006/013485
- US-A1- 2006 132 456
- US-A1- 2010 231 534
- US-A1- 2011 050 628
- US-A1- 2011 050 628
- US-A1- 2011 050 630
- US-A1- 2011 050 630
- GONZALO RAMOS ET AL: "Zliding: Fluid Zooming and Sliding for High Precision Parameter Manipulation", UIST 05. PROCEEDINGS OF THE 18TH. ANNUAL ACM SYMPOSIUM ON USER INTERFACE SOFTWARE AND TECHNOLOGY,, 23 October 2005 (2005-10-23), pages 143-152, XP002464850, ISBN: 978-1-59593-023-1

## Description

### TECHNICAL FIELD

This relates generally to electronic devices with touch-sensitive surfaces, including but not limited to electronic devices with touch-sensitive surfaces that detect inputs for adjusting user interface objects.

### BACKGROUND

The use of touch-sensitive surfaces as input devices for computers and other electronic computing devices has increased significantly in recent years. Exemplary touch-sensitive surfaces include touchpads and touch-screen displays. Such surfaces are widely used to manipulate user interface objects on a display.

Exemplary manipulations include adjusting the position and/or size of one or more user interface objects. Exemplary user interface objects include control elements such as buttons, sliders, and other graphics; digital images; video; text; and icons. A user will, in some circumstances, need to perform such manipulations on user interface objects in a digital content (e.g., videos and music) management application (e.g., iTunes from Apple Inc. of Cupertino, California), an image management application (e.g., Aperture, iPhoto, Photos from Apple Inc. of Cupertino, California), a document reader application (e.g., iBooks from Apple Inc. of Cupertino, California), or a communications management application (e.g., a messaging, e-mail, or telephone application).

But existing methods for performing these manipulations are cumbersome and inefficient. For example, using a sequence of mouse based inputs to select one or more user interface objects and perform one or more actions on the selected user interface objects is tedious and creates a significant cognitive burden on a user. In addition, these methods take longer than necessary, thereby wasting energy. This latter consideration is particularly important in battery-operated devices.

Patent Publication No. US 2011/050630 A1 describes an information processing apparatus that detects pressure intensity and a rate of change of the pressure intensity of an operating tool pressing a screen. The apparatus provides a specific function if the detected rate of change of the pressure intensity is high, and cancels an operation without providing the specific function if the rate of change of the pressure intensity is low.

Patent Publication No. WO 2013/169870 A1 describes a device, method, and graphical user interface for transitioning between display states in response to gesture. Here, an electronic device displays a user interface in a first display state and in response to detecting the end of a gesture: if a detected intensity of the respective contact of the gesture had reached a predefined intensity threshold prior to the end of the gesture, the device displays a second display state; otherwise, the device redisplays the first display state.

### SUMMARY

Accordingly, there is a need for electronic devices with faster, more efficient methods and interfaces for adjusting properties of displayed user interface elements. Such methods and interfaces optionally complement or replace conventional methods for adjusting properties of displayed user interface elements. Such methods and interfaces reduce the number, extent, and/or nature of the inputs from a user and produce a more efficient human-machine interface. For battery-operated devices, such methods and interfaces conserve power and increase the time between battery charges.

Additionally, there is a need for electronic devices with faster, more efficient methods and interfaces for adjusting a property of a user interface object.

In a first aspect, the invention provides a method in accordance with claim 1. In a second aspect, the invention provides an electronic device in accordance with claim 19.

The above deficiencies and other problems associated with user interfaces for electronic devices with touch-sensitive surfaces are reduced or eliminated by the disclosed devices. In some embodiments, the device is a desktop computer. In some embodiments, the device is portable (e.g., a notebook computer, tablet computer, or handheld device). In some embodiments, the device is a personal electronic device (e.g., a wearable electronic device, such as a watch). In some embodiments, the device has a touchpad. In some embodiments, the device has a touch-sensitive display (also known as a "touch screen" or "touch-screen display"). The device displays a user interface, such as a graphical user interface (GUI), and has one or more processors, memory and one or more modules, programs or sets of instructions stored in the memory for performing multiple functions. In some embodiments, the user interacts with the GUI primarily through stylus and/or finger contacts and gestures on the touch-sensitive surface. In some embodiments, the functions optionally include image editing, drawing, presenting, word processing, spreadsheet making, game playing, telephoning, video conferencing, e-mailing, instant messaging, workout support, digital photographing, digital videoing, web browsing, digital music playing, note taking, and/or digital video playing. Executable instructions for performing these functions are included in a non-transitory computer readable storage medium or other computer program product configured for execution by one or more processors.

Thus, electronic devices with displays, touch-sensitive surfaces and one or more sensors to detect intensity of contacts with the touch-sensitive surface are provided with faster, more efficient methods and interfaces for adjusting properties of displayed user interface elements, thereby increasing the effectiveness, efficiency, and user satisfaction with such devices. Such methods and interfaces may complement or replace conventional methods for adjusting properties of displayed user interface elements.

### BRIEF DESCRIPTION OF THE DRAWINGS

For a better understanding of the various described embodiments, reference should be made to the Description of Embodiments below, in conjunction with the following drawings in which like reference numerals refer to corresponding parts throughout the figures.
Figure 1A is a block diagram illustrating a portable multifunction device with a touch-sensitive display in accordance with some embodiments.
Figure 1B is a block diagram illustrating exemplary components for event handling in accordance with some embodiments.
Figure 2 illustrates a portable multifunction device having a touch screen in accordance with some embodiments.
Figure 3 is a block diagram of an exemplary multifunction device with a display and a touch-sensitive surface in accordance with some embodiments.
Figure 4A illustrates an exemplary user interface for a menu of applications on a portable multifunction device in accordance with some embodiments.
Figure 4B illustrates an exemplary user interface for a multifunction device with a touch-sensitive surface that is separate from the display in accordance with some embodiments.
Figures 4C-4E illustrate exemplary dynamic intensity thresholds in accordance with some embodiments.
Figures 5A-5I illustrate exemplary user interfaces for displaying an expanded portion of a slider in accordance with some embodiments.
Figures 6A-6S illustrate exemplary user interfaces for adjusting a property of a user interface element in accordance with some embodiments.
Figures 7A-7D are flow diagrams illustrating a method of displaying an expanded portion of a slider in accordance with some embodiments.
Figures 8A-8D are flow diagrams illustrating a method of adjusting a property of a user interface element in accordance with some embodiments.
Figures 9-10 are functional block diagrams of an electronic device in accordance with some embodiments.

### DESCRIPTION OF EMBODIMENTS

Users frequently seek to adjust properties of user interface elements such as images, control elements (such as buttons, sliders, and other graphics), video, text, and icons. Some conventional methods for adjusting properties such as height, width, area, and time interval require a user to provide input with multiple sequential or simultaneous components. For example, to enlarge an image, a user selects an edge of an image and drags the edge in a desired direction, or a user provides a gesture input using multiple points of contact. Many user interface elements are not individually adjustable.

Here, new methods are disclosed that streamline processes for adjusting properties of user interface elements by responding to changes in a characteristic intensity of a contact. The methods, devices and GUIs described herein provide visual and/or haptic feedback that makes manipulation of user interface objects more efficient and intuitive for a user.

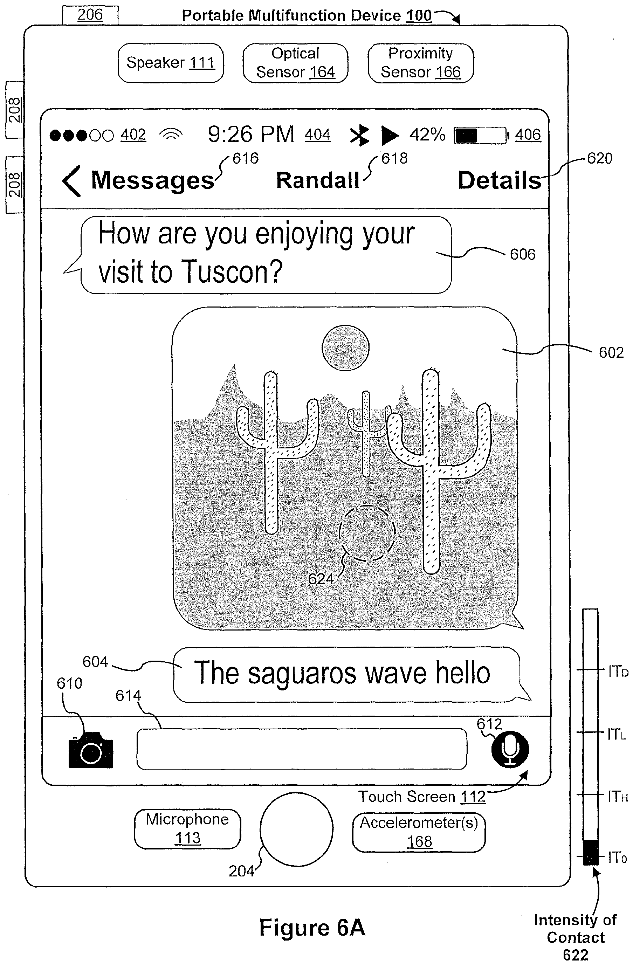

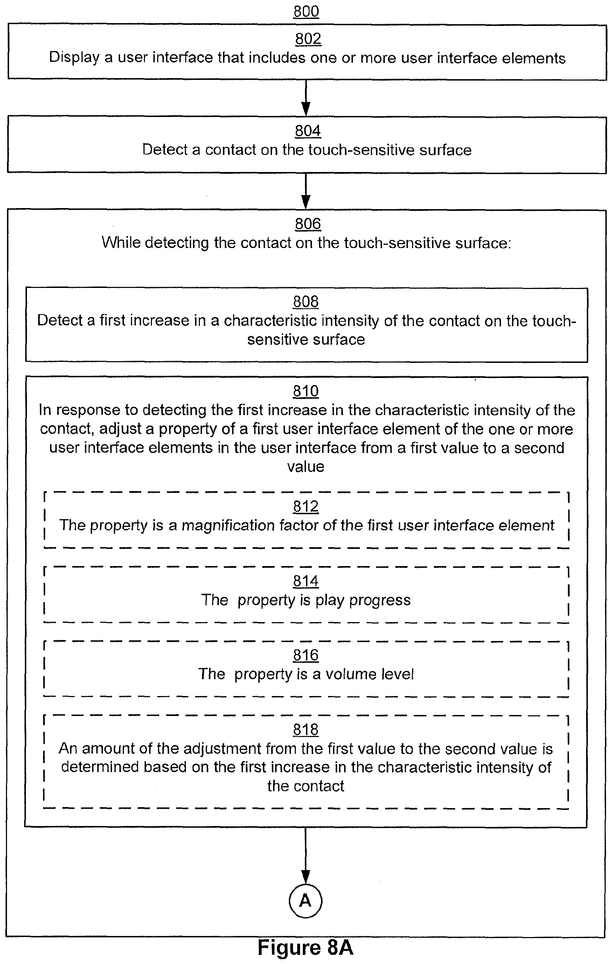

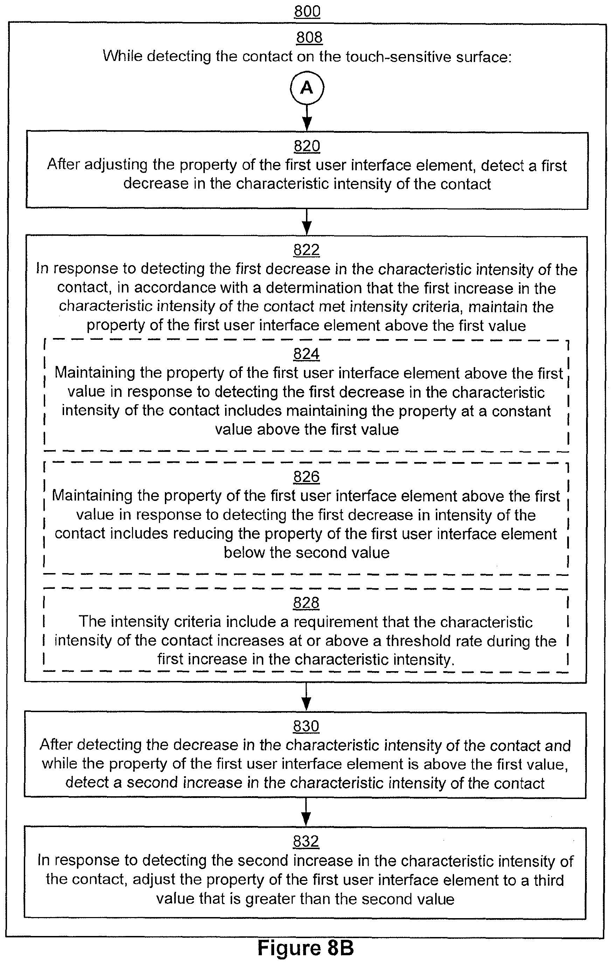

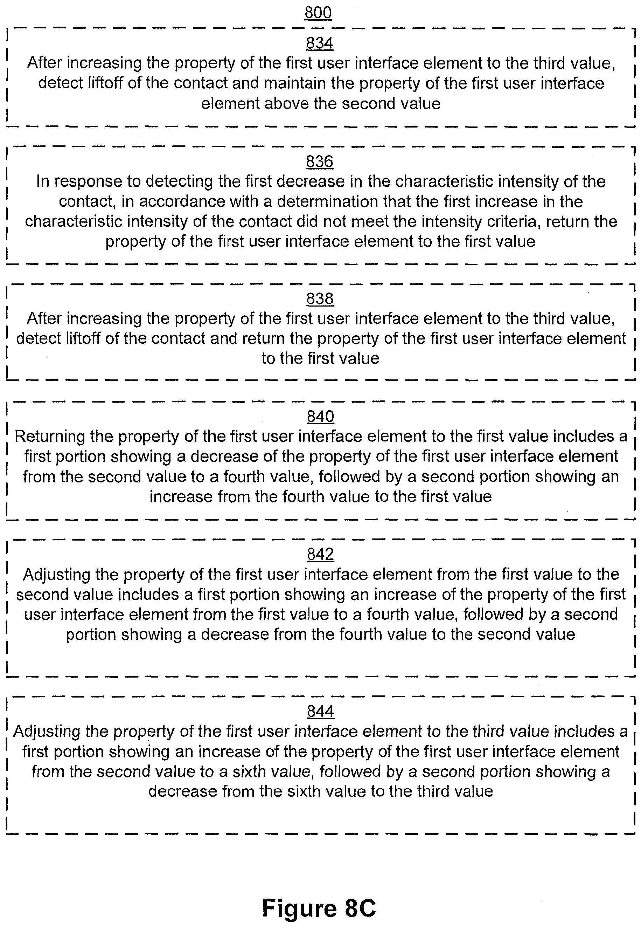

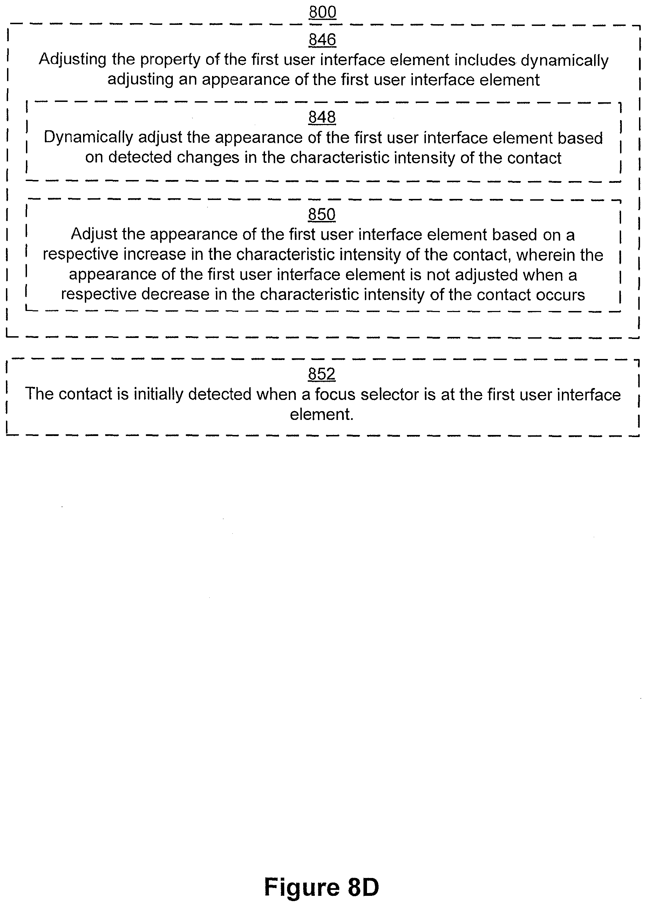

The present invention is principally described in detail in the processes of Figs. 8A-D, along with the exemplary user interfaces illustrated in Figs. 6A-S. The remaining parts of the description serve more to provide a better understanding of the context of the invention, but also describe user interface pressure-based controls other than the pressure control of a user interface element that forms the subject of the present invention. The skilled person will readily understand this when reading the following detailed description.

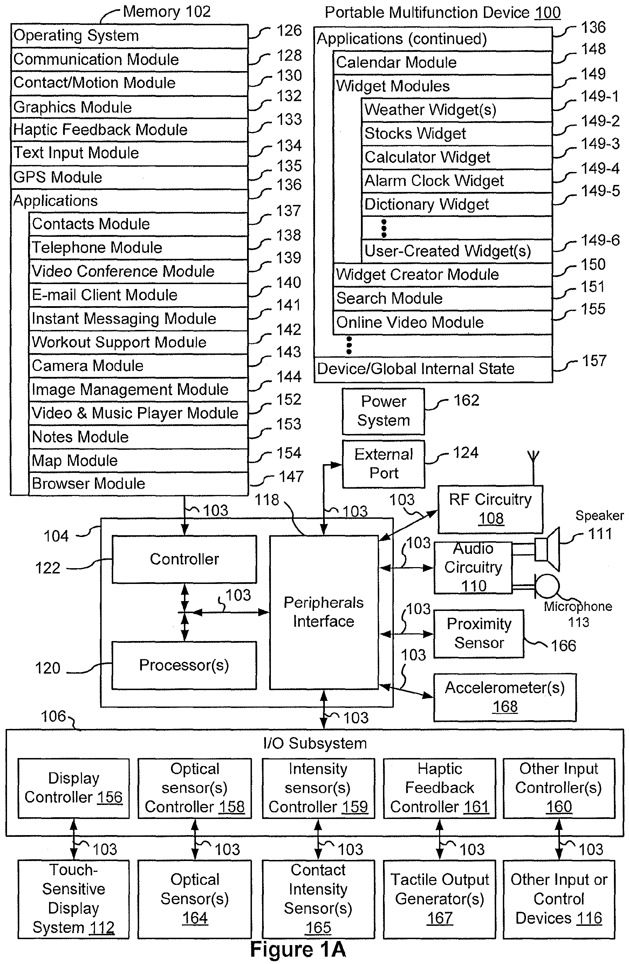

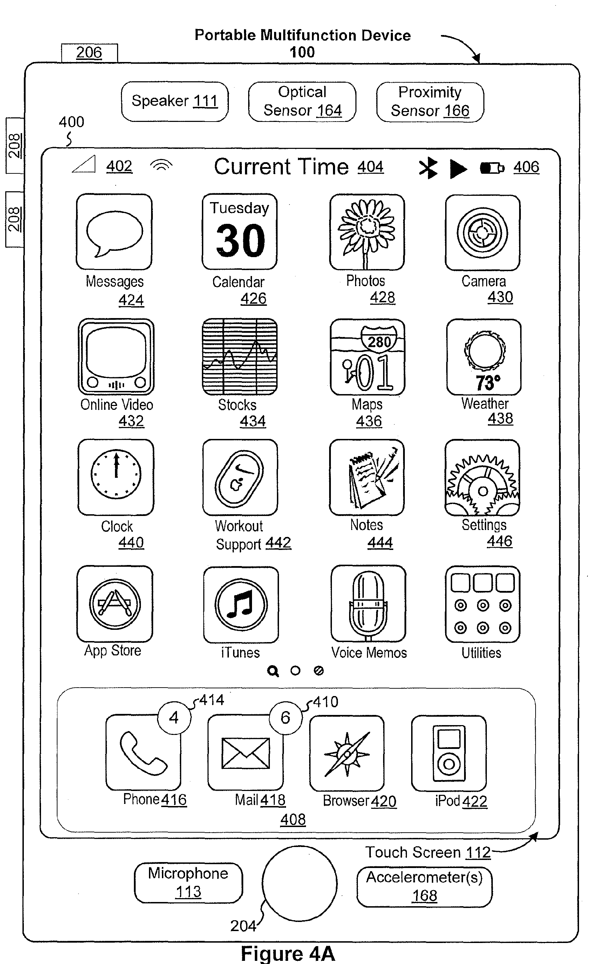

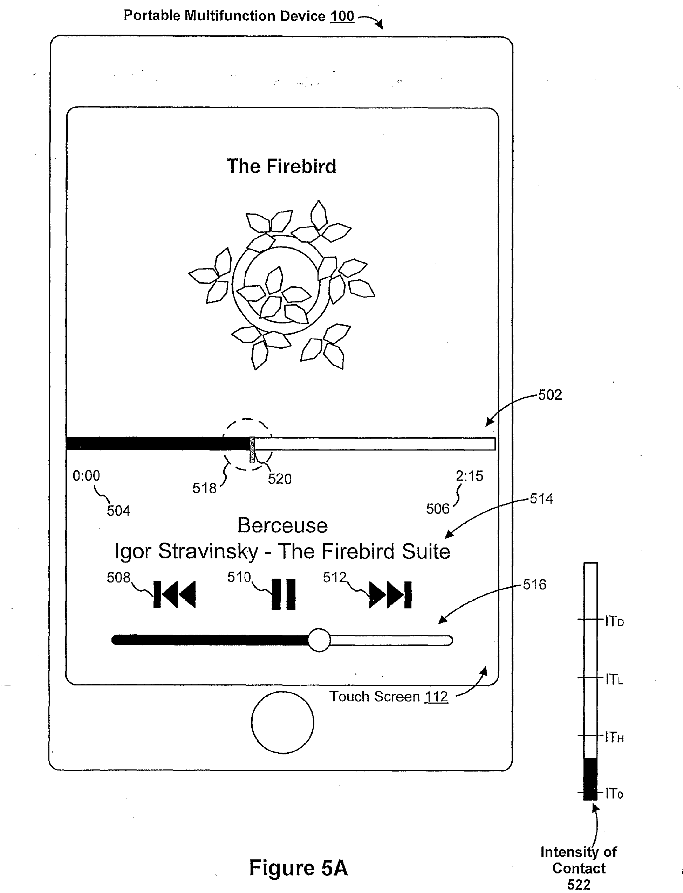

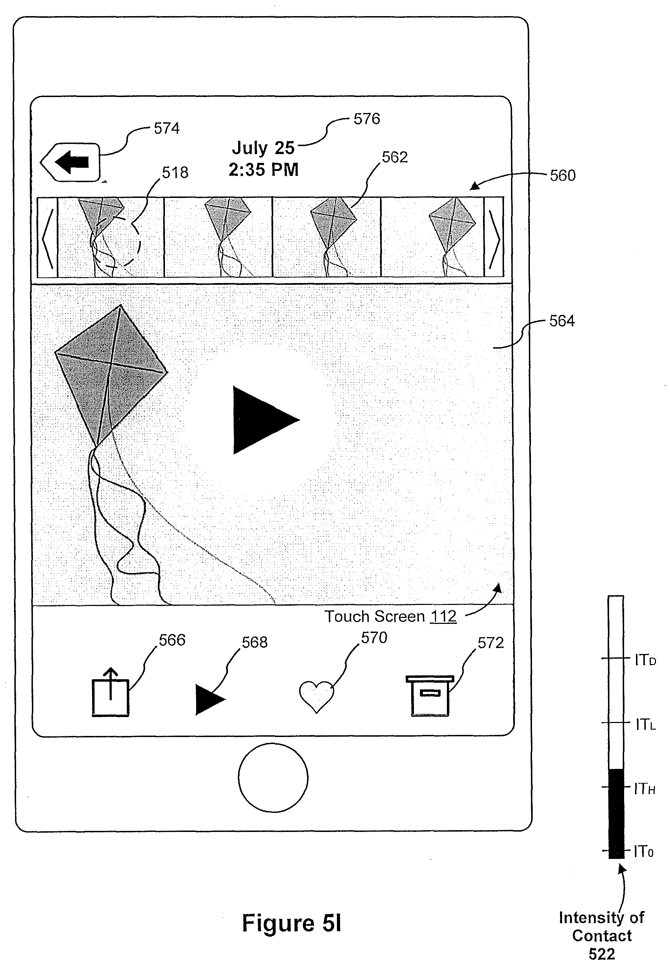

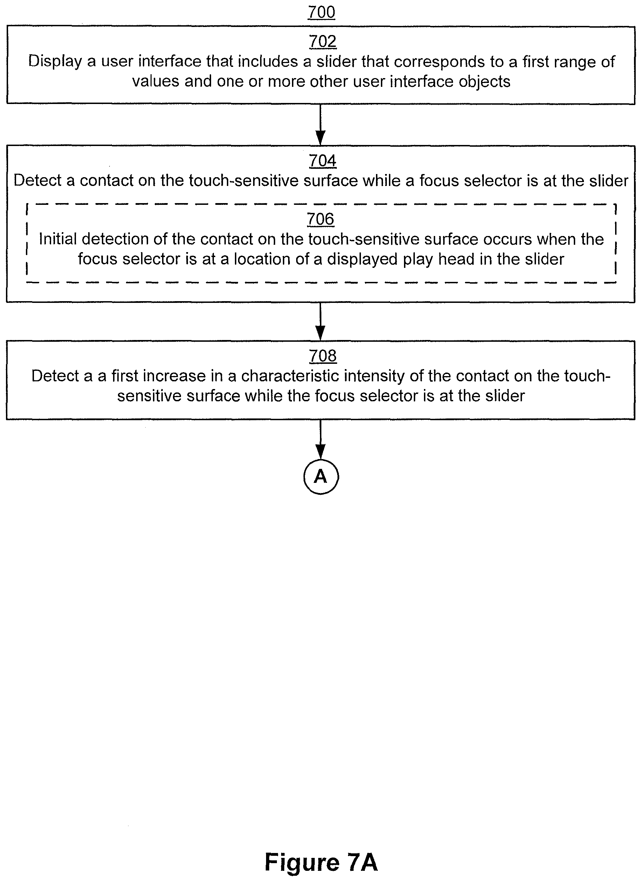

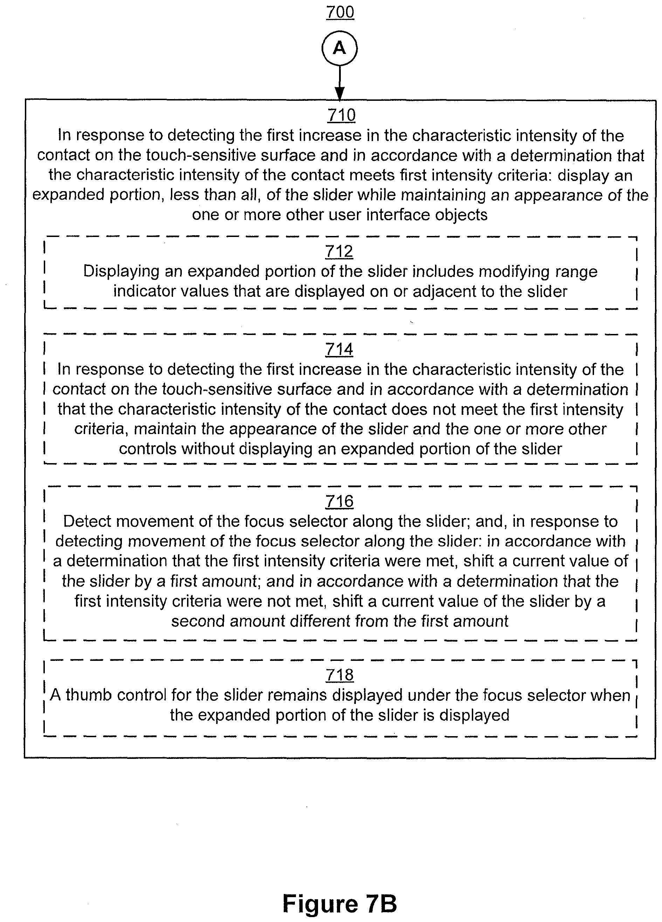

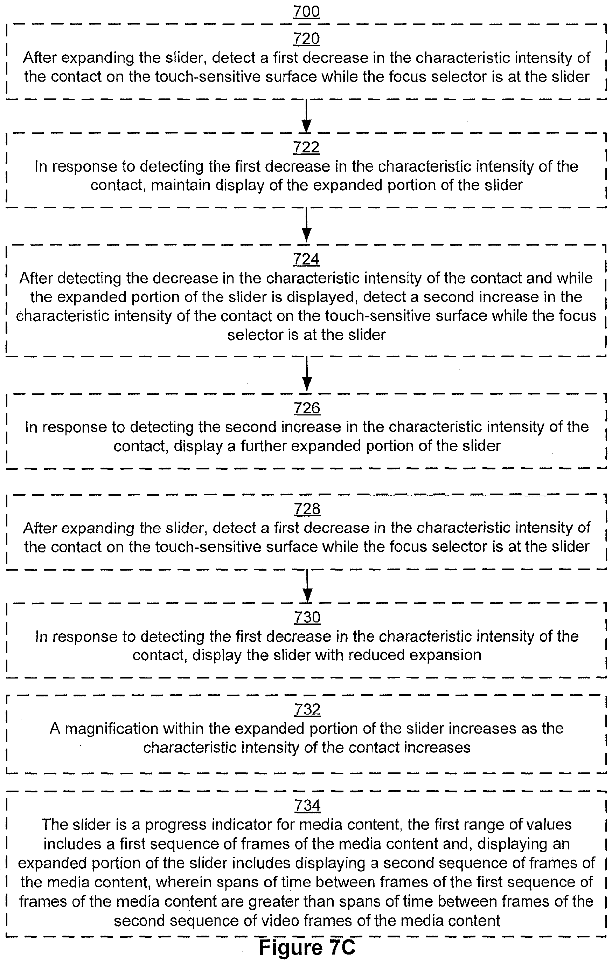

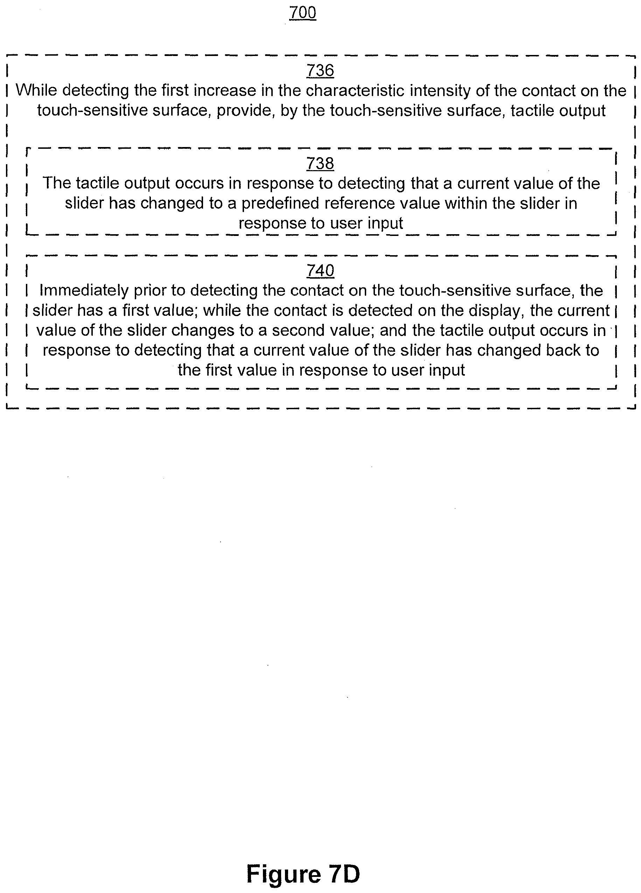

Below, Figures 1A-1B, 2, and 3 provide a description of exemplary devices. Figures 4A-4B, 5A-5I, and 6A-6S illustrate exemplary user interfaces. Figures 5A-5Iillustrate exemplary user interfaces for displaying an expanded portion of a slider. Figure 6A-6S illustrate exemplary user interfaces for adjusting a property of a user interface element, which forms the subject of the present invention. Figures 7A-7D illustrate a flow diagram of a method of displaying an expanded portion of a slider. Figures 8A-8D illustrate a flow diagram of a method of adjusting a property of a user interface element, which forms the subject of the present invention. The user interfaces in Figures 5A-5I and 6A-6S are used to illustrate the processes in Figures 7A-7D and 8A-8D.

### EXEMPLARY DEVICES

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact, unless the context clearly indicates otherwise.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch-screen displays and/or touchpads), are, optionally, used. It should also be understood that, in some embodiments, the device is not a portable communications device, but is a desktop computer with a touch-sensitive surface (e.g., a touch-screen display and/or a touchpad).

In the discussion that follows, an electronic device that includes a display and a touch-sensitive surface is described. It should be understood, however, that the electronic device optionally includes one or more other physical user-interface devices, such as a physical keyboard, a mouse and/or a joystick.

The device typically supports a variety of applications, such as one or more of the following: a note taking application, a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, a document reader application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. Figure 1A is a block diagram illustrating portable multifunction device 100 with touch-sensitive display system 112 in accordance with some embodiments. Touch-sensitive display system 112 is sometimes called a "touch screen" for convenience, and is sometimes simply called a touch-sensitive display. Device 100 includes memory 102 (which optionally includes one or more computer readable storage mediums), memory controller 122, one or more processing units (CPUs) 120, peripherals interface 118, RF circuitry 108, audio circuitry 110, speaker 111, microphone 113, input/output (I/O) subsystem 106, other input or control devices 116, and external port 124. Device 100 optionally includes one or more optical sensors 164. Device 100 includes one or more intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in Figure 1A are implemented in hardware, software, firmware, or a combination thereof, including one or more signal processing and/or application specific integrated circuits.

Memory 102 optionally includes high-speed random access memory and optionally also includes non-volatile memory, such as one or more magnetic disk storage devices, flash memory devices, or other non-volatile solid-state memory devices. Access to memory 102 by other components of device 100, such as CPU(s) 120 and the peripherals interface 118, is, optionally, controlled by memory controller 122.

Peripherals interface 118 can be used to couple input and output peripherals of the device to CPU(s) 120 and memory 102. The one or more processors 120 run or execute various software programs and/or sets of instructions stored in memory 102 to perform various functions for device 100 and to process data.

In some embodiments, peripherals interface 118, CPU(s) 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The wireless communication optionally uses any of a plurality of communications standards, protocols and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11ac, IEEE 802.11ax, IEEE 802.11b, IEEE 802.11g and/or IEEE 802.1In), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

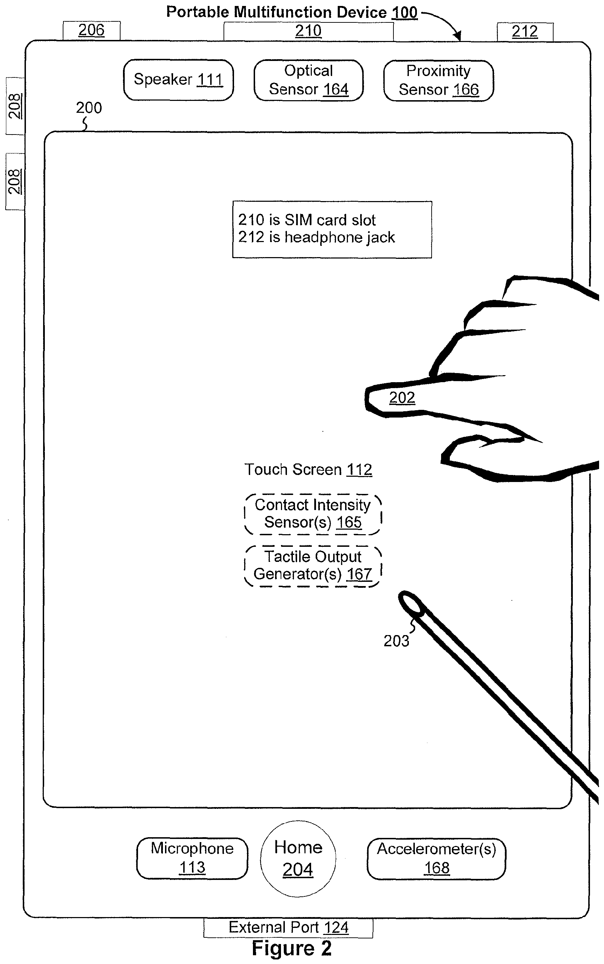

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, Figure 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch-sensitive display system 112 and other input or control devices 116, with peripherals interface 118. I/O subsystem 106 optionally includes display controller 156, optical sensor controller 158, intensity sensor controller 159, haptic feedback controller 161, and one or more input controllers 160 for other input or control devices. The one or more input controllers 160 receive/send electrical signals from/to other input or control devices 116. The other input or control devices 116 optionally include physical buttons (e.g., push buttons, rocker buttons, etc.), dials, slider switches, joysticks, click wheels, and so forth. In some alternate embodiments, input controller(s) 160 are, optionally, coupled with any (or none) of the following: a keyboard, infrared port, USB port, stylus, and/or a pointer device such as a mouse. The one or more buttons (e.g., 208, Figure 2) optionally include an up/down button for volume control of speaker 111 and/or microphone 113. The one or more buttons optionally include a push button (e.g., 206, Figure 2).

Touch-sensitive display system 112 provides an input interface and an output interface between the device and a user. Display controller 156 receives and/or sends electrical signals from/to touch-sensitive display system 112. Touch-sensitive display system 112 displays visual output to the user. The visual output optionally includes graphics, text, icons, video, and any combination thereof (collectively termed "graphics"). In some embodiments, some or all of the visual output corresponds to user interface objects. As used herein, the term "affordance" refers to a user-interactive graphical user interface object (e.g., graphical user interface object that is configured to respond to inputs directed toward the graphical user interface object). Examples of user-interactive graphical user interface objects include, without limitation, a button, slider, icon, selectable menu item, switch, or other user interface control.

Touch-sensitive display system 112 has a touch-sensitive surface, sensor, or set of sensors that accepts input from the user based on haptic and/or tactile contact. Touch-sensitive display system 112 and display controller 156 (along with any associated modules and/or sets of instructions in memory 102) detect contact (and any movement or breaking of the contact) on touch-sensitive display system 112 and converts the detected contact into interaction with user-interface objects (e.g., one or more soft keys, icons, web pages or images) that are displayed on touch-sensitive display system 112. In an exemplary embodiment, a point of contact between touch-sensitive display system 112 and the user corresponds to a finger of the user or a stylus.

Touch-sensitive display system 112 optionally uses LCD (liquid crystal display) technology, LPD (light emitting polymer display) technology, or LED (light emitting diode) technology, although other display technologies are used in other embodiments. Touch-sensitive display system 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch-sensitive display system 112. In an exemplary embodiment, projected mutual capacitance sensing technology is used, such as that found in the iPhone^{®}, iPod Touch^{®}, and iPad^{®} from Apple Inc. of Cupertino, California.

Touch-sensitive display system 112 optionally has a video resolution in excess of 100 dpi. In some embodiments, the touch screen video resolution is in excess of 400 dpi (e.g., 500 dpi, 800 dpi, or greater). The user optionally makes contact with touch-sensitive display system 112 using any suitable object or appendage, such as a stylus, a finger, and so forth. In some embodiments, the user interface is designed to work with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad (not shown) for activating or deactivating particular functions. In some embodiments, the touchpad is a touch-sensitive area of the device that, unlike the touch screen, does not display visual output. The touchpad is, optionally, a touch-sensitive surface that is separate from touch-sensitive display system 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes one or more optical sensors 164. Figure 1A shows an optical sensor coupled with optical sensor controller 158 in I/O subsystem 106. Optical sensor(s) 164 optionally include charge-coupled device (CCD) or complementary metal-oxide semiconductor (CMOS) phototransistors. Optical sensor(s) 164 receive light from the environment, projected through one or more lens, and convert the light to data representing an image. In conjunction with imaging module 143 (also called a camera module), optical sensor(s) 164 optionally capture still images and/or video. In some embodiments, an optical sensor is located on the back of device 100, opposite touch-sensitive display system 112 on the front of the device, so that the touch screen is enabled for use as a viewfinder for still and/or video image acquisition. In some embodiments, another optical sensor is located on the front of the device so that the user's image is obtained (e.g., for selfies, for videoconferencing while the user views the other video conference participants on the touch screen, etc.).

Device 100 also includes one or more contact intensity sensors 165. Figure 1A shows a contact intensity sensor coupled with intensity sensor controller 159 in I/O subsystem 106. Contact intensity sensor(s) 165 optionally include one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor(s) 165 receive contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch-screen display system 112 which is located on the front of device 100.

Device 100 optionally also includes one or more proximity sensors 166. Figure 1A shows proximity sensor 166 coupled with peripherals interface 118. Alternately, proximity sensor 166 is coupled with input controller 160 in I/O subsystem 106. In some embodiments, the proximity sensor turns off and disables touch-sensitive display system 112 when the multifunction device is placed near the user's ear (e.g., when the user is making a phone call).

Device 100 optionally also includes one or more tactile output generators 167. Figure 1A shows a tactile output generator coupled with haptic feedback controller 161 in I/O subsystem 106. Tactile output generator(s) 167 optionally include one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Tactile output generator(s) 167 receive tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch-sensitive display system 112, which is located on the front of device 100.

Device 100 optionally also includes one or more accelerometers 168. Figure 1A shows accelerometer 168 coupled with peripherals interface 118. Alternately, accelerometer 168 is, optionally, coupled with an input controller 160 in I/O subsystem 106. In some embodiments, information is displayed on the touch-screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

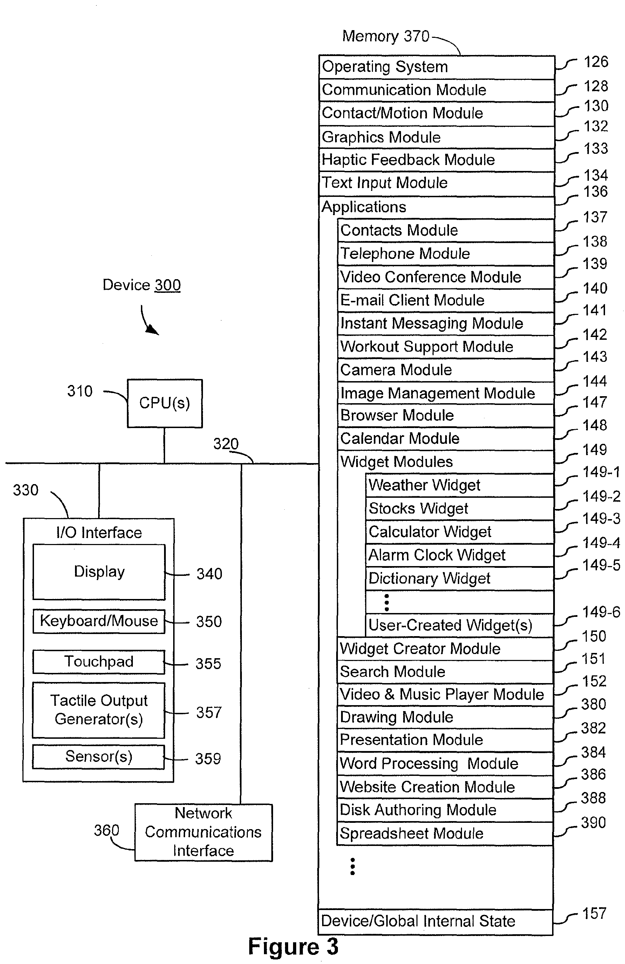

In some embodiments, the software components stored in memory 102 include operating system 126, communication module (or set of instructions) 128, contact/motion module (or set of instructions) 130, graphics module (or set of instructions) 132, haptic feedback module (or set of instructions) 133, text input module (or set of instructions) 134, Global Positioning System (GPS) module (or set of instructions) 135, and applications (or sets of instructions) 136. Furthermore, in some embodiments, memory 102 stores device/global internal state 157, as shown in Figures 1A and 3. Device/global internal state 157 includes one or more of: active application state, indicating which applications, if any, are currently active; display state, indicating what applications, views or other information occupy various regions of touch-sensitive display system 112; sensor state, including information obtained from the device's various sensors and other input or control devices 116; and location and/or positional information concerning the device's location and/or attitude.

Operating system 126 (e.g., iOS, Darwin, RTXC, LINUX, UNIX, OS X, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with the 30-pin connector used in some iPhone^{®}, iPod Touch^{®}, and iPad^{®} devices from Apple Inc. of Cupertino, California. In some embodiments, the external port is a Lightning connector that is the same as, or similar to and/or compatible with the Lightning connector used in some iPhone^{®}, iPod Touch^{®}, and iPad^{®} devices from Apple Inc. of Cupertino, California.

Contact/motion module 130 optionally detects contact with touch-sensitive display system 112 (in conjunction with display controller 156) and other touch-sensitive devices (e.g., a touchpad or physical click wheel). Contact/motion module 130 includes various software components for performing various operations related to detection of contact (e.g., by a finger or by a stylus), such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts or stylus contacts) or to multiple simultaneous contacts (e.g., "multitouch"/multiple finger contacts). In some embodiments, contact/motion module 130 and display controller 156 detect contact on a touchpad.

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (lift off) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (lift off) event. Similarly, tap, swipe, drag, and other gestures are optionally detected for a stylus by detecting a particular contact pattern for the stylus.

Graphics module 132 includes various known software components for rendering and displaying graphics on touch-sensitive display system 112 or other display, including components for changing the visual impact (e.g., brightness, transparency, saturation, contrast or other visual property) of graphics that are displayed. As used herein, the term "graphics" includes any object that can be displayed to a user, including without limitation text, web pages, icons (such as user-interface objects including soft keys), digital images, videos, animations and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing, to camera 143 as picture/video metadata, and to applications that provide location-based services such as weather widgets, local yellow page widgets, and map/navigation widgets).

Applications 136 optionally include the following modules (or sets of instructions), or a subset or superset thereof:
- contacts module 137 (sometimes called an address book or contact list);
- telephone module 138;
- video conferencing module 139;
- e-mail client module 140;
- instant messaging (IM) module 141;
- workout support module 142;
- camera module 143 for still and/or video images;
- image management module 144;
- browser module 147;
- calendar module 148;
- widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- widget creator module 150 for making user-created widgets 149-6;
- search module 151;
- video and music player module 152, which is, optionally, made up of a video player module and a music player module;
- notes module 153;
- map module 154; and/or
- online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch-sensitive display system 112, display controller 156, contact module 130, graphics module 132, and text input module 134, contacts module 137 includes executable instructions to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers and/or e-mail addresses to initiate and/or facilitate communications by telephone 138, video conference 139, e-mail 140, or IM 141; and so forth.

In conjunction with RF circuitry 108, audio circuitry 110, speaker 111, microphone 113, touch-sensitive display system 112, display controller 156, contact module 130, graphics module 132, and text input module 134, telephone module 138 includes executable instructions to enter a sequence of characters corresponding to a telephone number, access one or more telephone numbers in address book 137, modify a telephone number that has been entered, dial a respective telephone number, conduct a conversation and disconnect or hang up when the conversation is completed. As noted above, the wireless communication optionally uses any of a plurality of communications standards, protocols and technologies.

In conjunction with RF circuitry 108, audio circuitry 110, speaker 111, microphone 113, touch-sensitive display system 112, display controller 156, optical sensor(s) 164, optical sensor controller 158, contact module 130, graphics module 132, text input module 134, contact list 137, and telephone module 138, videoconferencing module 139 includes executable instructions to initiate, conduct, and terminate a video conference between a user and one or more other participants in accordance with user instructions.

In conjunction with RF circuitry 108, touch-sensitive display system 112, display controller 156, contact module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch-sensitive display system 112, display controller 156, contact module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, Apple Push Notification Service (APNs) or IMPS for Internet-based instant messages), to receive instant messages and to view received instant messages. In some embodiments, transmitted and/or received instant messages optionally include graphics, photos, audio files, video files and/or other attachments as are supported in a MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, APNs, or IMPS).

In conjunction with RF circuitry 108, touch-sensitive display system 112, display controller 156, contact module 130, graphics module 132, text input module 134, GPS module 135, map module 154, and music player module 146, workout support module 142 includes executable instructions to create workouts (e.g., with time, distance, and/or calorie burning goals); communicate with workout sensors (in sports devices and smart watches); receive workout sensor data; calibrate sensors used to monitor a workout; select and play music for a workout; and display, store and transmit workout data.

In conjunction with touch-sensitive display system 112, display controller 156, optical sensor(s) 164, optical sensor controller 158, contact module 130, graphics module 132, and image management module 144, camera module 143 includes executable instructions to capture still images or video (including a video stream) and store them into memory 102, modify characteristics of a still image or video, and/or delete a still image or video from memory 102.

In conjunction with touch-sensitive display system 112, display controller 156, contact module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch-sensitive display system 112, display system controller 156, contact module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch-sensitive display system 112, display system controller 156, contact module 130, graphics module 132, text input module 134, e-mail client module 140, and browser module 147, calendar module 148 includes executable instructions to create, display, modify, and store calendars and data associated with calendars (e.g., calendar entries, to do lists, etc.) in accordance with user instructions.

In conjunction with RF circuitry 108, touch-sensitive display system 112, display system controller 156, contact module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch-sensitive display system 112, display system controller 156, contact module 130, graphics module 132, text input module 134, and browser module 147, the widget creator module 150 includes executable instructions to create widgets (e.g., turning a user-specified portion of a web page into a widget).

In conjunction with touch-sensitive display system 112, display system controller 156, contact module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch-sensitive display system 112, display system controller 156, contact module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present or otherwise play back videos (e.g., on touch-sensitive display system 112, or on an external display connected wirelessly or via external port 124). In some embodiments, device 100 optionally includes the functionality of an MP3 player, such as an iPod (trademark of Apple Inc.).

In conjunction with touch-sensitive display system 112, display controller 156, contact module 130, graphics module 132, and text input module 134, notes module 153 includes executable instructions to create and manage notes, to do lists, and the like in accordance with user instructions.

In conjunction with RF circuitry 108, touch-sensitive display system 112, display system controller 156, contact module 130, graphics module 132, text input module 134, GPS module 135, and browser module 147, map module 154 includes executable instructions to receive, display, modify, and store maps and data associated with maps (e.g., driving directions; data on stores and other points of interest at or near a particular location; and other location-based data) in accordance with user instructions.

In conjunction with touch-sensitive display system 112, display system controller 156, contact module 130, graphics module 132, audio circuitry 110, speaker 111, RF circuitry 108, text input module 134, e-mail client module 140, and browser module 147, online video module 155 includes executable instructions that allow the user to access, browse, receive (e.g., by streaming and/or download), play back (e.g., on the touch screen 112, or on an external display connected wirelessly or via external port 124), send an e-mail with a link to a particular online video, and otherwise manage online videos in one or more file formats, such as H.264. In some embodiments, instant messaging module 141, rather than e-mail client module 140, is used to send a link to a particular online video.

Each of the above identified modules and applications correspond to a set of executable instructions for performing one or more functions described above and the methods described in this application (e.g., the computer-implemented methods and other information processing methods described herein). These modules (i.e., sets of instructions) need not be implemented as separate software programs, procedures or modules, and thus various subsets of these modules are, optionally, combined or otherwise re-arranged in various embodiments. In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

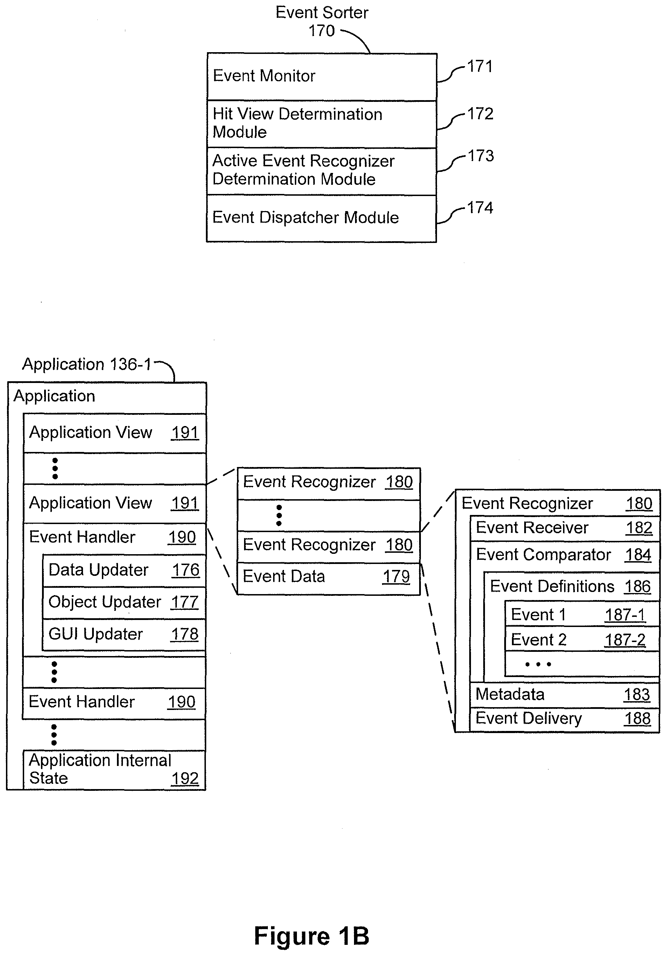

Figure 1B is a block diagram illustrating exemplary components for event handling in accordance with some embodiments. In some embodiments, memory 102 (in Figures 1A) or 370 (Figure 3) includes event sorter 170 (e.g., in operating system 126) and a respective application 136-1 (e.g., any of the aforementioned applications 136, 137-155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display system 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display system 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display system 112 or a touch-sensitive surface.

In some embodiments, event monitor 171 sends requests to the peripherals interface 118 at predetermined intervals. In response, peripherals interface 118 transmits event information. In other embodiments, peripheral interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views, when touch-sensitive display system 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (i.e., the first sub-event in the sequence of sub-events that form an event or potential event). Once the hit view is identified by the hit view determination module, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver module 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit (not shown) or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177 or GUI updater 178 to update the application internal state 192. Alternatively, one or more of the application views 191 includes one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170, and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event 187 include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first lift-off (touch end) for a predetermined phase, a second touch (touch begin) on the displayed object for a predetermined phase, and a second lift-off (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display system 112, and lift-off of the touch (touch end). In some embodiments, the event also includes information for one or more associated event handlers 190.

In some embodiments, event definition 187 includes a definition of an event for a respective user-interface object. In some embodiments, event comparator 184 performs a hit test to determine which user-interface object is associated with a sub-event. For example, in an application view in which three user-interface objects are displayed on touch-sensitive display system 112, when a touch is detected on touch-sensitive display system 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event 187 also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module 145. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input-devices, not all of which are initiated on touch screens. For example, mouse movement and mouse button presses, optionally coordinated with single or multiple keyboard presses or holds; contact movements such as taps, drags, scrolls, etc., on touch-pads; pen stylus inputs; movement of the device; oral instructions; detected eye movements; biometric inputs; and/or any combination thereof are optionally utilized as inputs corresponding to sub-events which define an event to be recognized.

Figure 2 illustrates a portable multifunction device 100 having a touch screen (e.g., touch-sensitive display system 112, Figure 1A) in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward) and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also includes one or more physical buttons, such as "home" or menu button 204. As described previously, menu button 204 is, optionally, used to navigate to any application 136 in a set of applications that are, optionally executed on device 100. Alternatively, in some embodiments, the menu button is implemented as a soft key in a GUI displayed on the touch-screen display.

In some embodiments, device 100 includes the touch-screen display, menu button 204, push button 206 for powering the device on/off and locking the device, volume adjustment button(s) 208, Subscriber Identity Module (SIM) card slot 210, head set jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In some embodiments, device 100 also accepts verbal input for activation or deactivation of some functions through microphone 113. Device 100 also, optionally, includes one or more contact intensity sensors 165 for detecting intensity of contacts on touch-sensitive display system 112 and/or one or more tactile output generators 167 for generating tactile outputs for a user of device 100.

Figure 3 is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch-screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to Figure 1A), sensors 359 (e.g., optical, acceleration, proximity, touch-sensitive, and/or contact intensity sensors similar to contact intensity sensor(s) 165 described above with reference to Figure 1A). Memory 370 includes high-speed random access memory, such as DRAM, SRAM, DDR RAM or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (Figure 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (Figure 1A) optionally does not store these modules.

Each of the above identified elements in Figure 3 are, optionally, stored in one or more of the previously mentioned memory devices. Each of the above identified modules corresponds to a set of instructions for performing a function described above. The above identified modules or programs (i.e., sets of instructions) need not be implemented as separate software programs, procedures or modules, and thus various subsets of these modules are, optionally, combined or otherwise re-arranged in various embodiments. In some embodiments, memory 370 optionally stores a subset of the modules and data structures identified above. Furthermore, memory 370 optionally stores additional modules and data structures not described above.

Attention is now directed towards embodiments of user interfaces ("UI") that are, optionally, implemented on portable multifunction device 100.

Figure 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   o Icon 416 for telephone module 138, labeled "Phone," which optionally includes an indicator 414 of the number of missed calls or voicemail messages;
   ∘ Icon 418 for e-mail client module 140, labeled "Mail," which optionally includes an indicator 410 of the number of unread e-mails;
   ∘ Icon 420 for browser module 147, labeled "Browser;" and
   ∘ Icon 422 for video and music player module 152, also referred to as iPod (trademark of Apple Inc.) module 152, labeled "iPod;" and
- Icons for other applications, such as:
   ∘ Icon 424 for IM module 141, labeled "Messages;"
   ∘ Icon 426 for calendar module 148, labeled "Calendar;"
   ∘ Icon 428 for image management module 144, labeled "Photos;"
   ∘ Icon 430 for camera module 143, labeled "Camera;"
   ∘ Icon 432 for online video module 155, labeled "Online Video;"
   ∘ Icon 434 for stocks widget 149-2, labeled "Stocks;"
   ∘ Icon 436 for map module 154, labeled "Map;"
   ∘ Icon 438 for weather widget 149-1, labeled "Weather;"
   ∘ Icon 440 for alarm clock widget 149-4, labeled "Clock;"
   ∘ Icon 442 for workout support module 142, labeled "Workout Support;"
   ∘ Icon 444 for notes module 153, labeled "Notes;" and
   ∘ Icon 446 for a settings application or module, which provides access to settings for device 100 and its various applications 136.

It should be noted that the icon labels illustrated in Figure 4A are merely exemplary. For example, in some embodiments, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

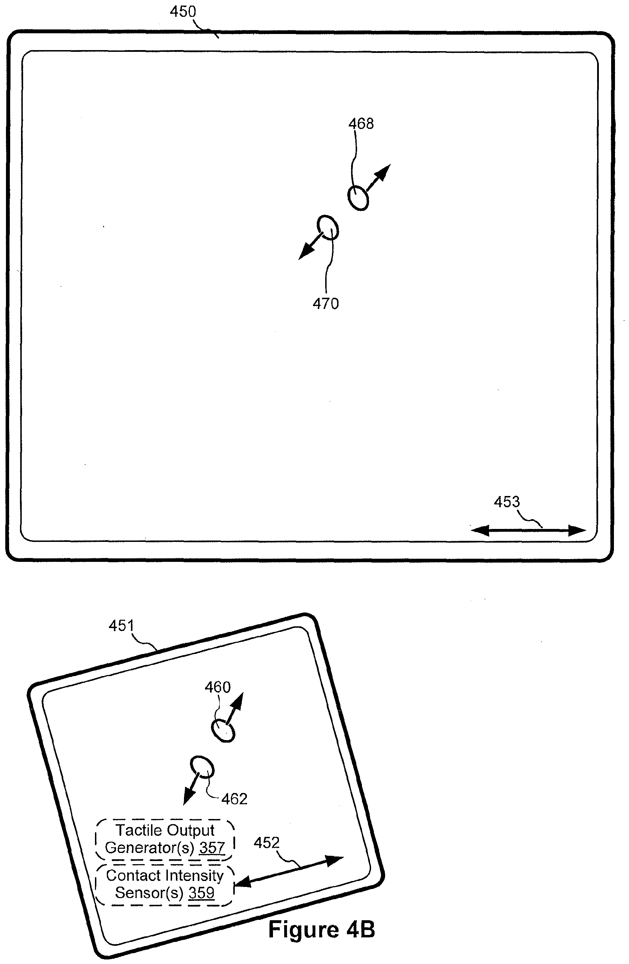

Figure 4B illustrates an exemplary user interface on a device (e.g., device 300, Figure 3) with a touch-sensitive surface 451 (e.g., a tablet or touchpad 355, Figure 3) that is separate from the display 450. Device 300 also, optionally, includes one or more contact intensity sensors (e.g., one or more of sensors 357) for detecting intensity of contacts on touch-sensitive surface 451 and/or one or more tactile output generators 359 for generating tactile outputs for a user of device 300.

Figure 4B illustrates an exemplary user interface on a device (e.g., device 300, Figure 3) with a touch-sensitive surface 451 (e.g., a tablet or touchpad 355, Figure 3) that is separate from the display 450. Although many of the examples that follow will be given with reference to inputs on touch screen display 112 (where the touch sensitive surface and the display are combined), in some embodiments, the device detects inputs on a touch-sensitive surface that is separate from the display, as shown in FIG. 4B. In some embodiments, the touch-sensitive surface (e.g., 451 in Figure 4B) has a primary axis (e.g., 452 in Figure 4B) that corresponds to a primary axis (e.g., 453 in Figure 4B) on the display (e.g., 450). In accordance with these embodiments, the device detects contacts (e.g., 460 and 462 in Figure 4B) with the touch-sensitive surface 451 at locations that correspond to respective locations on the display (e.g., in Figure 4B, 460 corresponds to 468 and 462 corresponds to 470). In this way, user inputs (e.g., contacts 460 and 462, and movements thereof) detected by the device on the touch-sensitive surface (e.g., 451 in Figure 4B) are used by the device to manipulate the user interface on the display (e.g., 450 in Figure 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures, etc.), it should be understood that, in some embodiments, one or more of the finger inputs are replaced with input from another input device (e.g., a mouse based input or a stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

As used herein, the term "focus selector" refers to an input element that indicates a current part of a user interface with which a user is interacting. In some implementations that include a cursor or other location marker, the cursor acts as a "focus selector," so that when an input (e.g., a press input) is detected on a touch-sensitive surface (e.g., touchpad 355 in Figure 3 or touch-sensitive surface 451 in Figure 4B) while the cursor is over a particular user interface element (e.g., a button, window, slider or other user interface element), the particular user interface element is adjusted in accordance with the detected input. In some implementations that include a touch-screen display (e.g., touch-sensitive display system 112 in Figure 1A or the touch screen in Figure 4A) that enables direct interaction with user interface elements on the touch-screen display, a detected contact on the touch-screen acts as a "focus selector," so that when an input (e.g., a press input by the contact) is detected on the touch-screen display at a location of a particular user interface element (e.g., a button, window, slider or other user interface element), the particular user interface element is adjusted in accordance with the detected input. In some implementations, focus is moved from one region of a user interface to another region of the user interface without corresponding movement of a cursor or movement of a contact on a touch-screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch-screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "intensity" of a contact on a touch-sensitive surface refers to the force or pressure (force per unit area) of a contact (e.g., a finger contact or a stylus contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average or a sum) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be readily accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch-screen display can be set to any of a large range of predefined thresholds values without changing the trackpad or touch-screen display hardware. Additionally, in some implementations a user of the device is provided with software settings for adjusting one or more of the set of intensity thresholds (e.g., by adjusting individual intensity thresholds and/or by adjusting a plurality of intensity thresholds at once with a system-level click "intensity" parameter).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds may include a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second intensity threshold results in a third operation. In some embodiments, a comparison between the characteristic intensity and one or more intensity thresholds is used to determine whether or not to perform one or more operations (e.g., whether to perform a respective option or forgo performing the respective operation) rather than being used to determine whether to perform a first operation or a second operation.

In some embodiments, a portion of a gesture is identified for purposes of determining a characteristic intensity. For example, a touch-sensitive surface may receive a continuous swipe contact transitioning from a start location and reaching an end location (e.g., a drag gesture), at which point the intensity of the contact increases. In this example, the characteristic intensity of the contact at the end location may be based on only a portion of the continuous swipe contact, and not the entire swipe contact (e.g., only the portion of the swipe contact at the end location). In some embodiments, a smoothing algorithm may be applied to the intensities of the swipe contact prior to determining the characteristic intensity of the contact. For example, the smoothing algorithm optionally includes one or more of: an unweighted sliding-average smoothing algorithm, a triangular smoothing algorithm, a median filter smoothing algorithm, and/or an exponential smoothing algorithm. In some circumstances, these smoothing algorithms eliminate narrow spikes or dips in the intensities of the swipe contact for purposes of determining a characteristic intensity.

The user interface figures described herein optionally include various intensity diagrams that show the current intensity of the contact on the touch-sensitive surface relative to one or more intensity thresholds (e.g., a contact detection intensity threshold IT₀, a light press intensity threshold IT_{L}, a deep press intensity threshold IT_{D} (e.g., that is at least initially higher than I_{L}), and/or one or more other intensity thresholds (e.g., an intensity threshold I_{H} that is lower than I_{L})). This intensity diagram is typically not part of the displayed user interface, but is provided to aid in the interpretation of the figures. In some embodiments, the light press intensity threshold corresponds to an intensity at which the device will perform operations typically associated with clicking a button of a physical mouse or a trackpad. In some embodiments, the deep press intensity threshold corresponds to an intensity at which the device will perform operations that are different from operations typically associated with clicking a button of a physical mouse or a trackpad. In some embodiments, when a contact is detected with a characteristic intensity below the light press intensity threshold (e.g., and above a nominal contact-detection intensity threshold IT₀ below which the contact is no longer detected), the device will move a focus selector in accordance with movement of the contact on the touch-sensitive surface without performing an operation associated with the light press intensity threshold or the deep press intensity threshold. Generally, unless otherwise stated, these intensity thresholds are consistent between different sets of user interface figures.

In some embodiments, the response of the device to inputs detected by the device depends on criteria based on the contact intensity during the input. For example, for some "light press" inputs, the intensity of a contact exceeding a first intensity threshold during the input triggers a first response. In some embodiments, the response of the device to inputs detected by the device depends on criteria that include both the contact intensity during the input and time-based criteria. For example, for some "deep press" inputs, the intensity of a contact exceeding a second intensity threshold during the input, greater than the first intensity threshold for a light press, triggers a second response only if a delay time has elapsed between meeting the first intensity threshold and meeting the second intensity threshold. This delay time is typically less than 200 ms in duration (e.g., 40, 100, or 120 ms, depending on the magnitude of the second intensity threshold, with the delay time increasing as the second intensity threshold increases). This delay time helps to avoid accidental deep press inputs. As another example, for some "deep press" inputs, there is a reduced-sensitivity time period that occurs after the time at which the first intensity threshold is met. During the reduced-sensitivity time period, the second intensity threshold is increased. This temporary increase in the second intensity threshold also helps to avoid accidental deep press inputs. For other deep press inputs, the response to detection of a deep press input does not depend on time-based criteria.

In some embodiments, one or more of the input intensity thresholds and/or the corresponding outputs vary based on one or more factors, such as user settings, contact motion, input timing, application running, rate at which the intensity is applied, number of concurrent inputs, user history, environmental factors (e.g., ambient noise), focus selector position, and the like. Exemplary factors are described in U.S. Patent Application Serial Nos. 14/399,606 and 14/624,296.

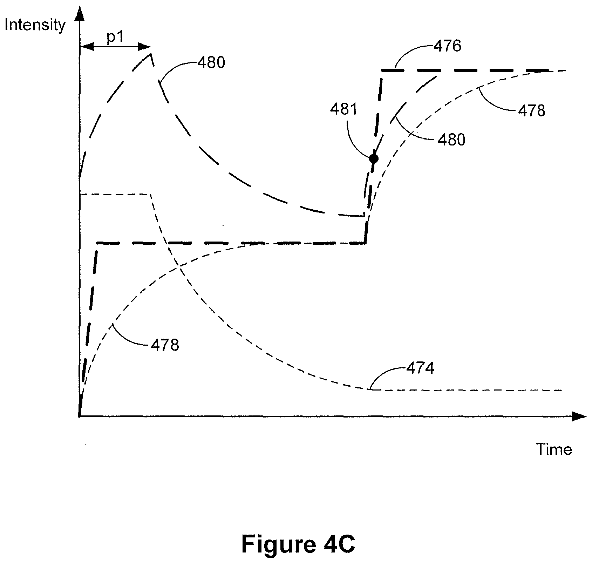

For example, Figure 4C illustrates a dynamic intensity threshold 480 that changes over time based in part on the intensity of touch input 476 over time. Dynamic intensity threshold 480 is a sum of two components, first component 474 that decays over time after a predefined delay time p1 from when touch input 476 is initially detected, and second component 478 that trails the intensity of touch input 476 over time. The initial high intensity threshold of first component 474 reduces accidental triggering of a "deep press" response, while still allowing an immediate "deep press" response if touch input 476 provides sufficient intensity. Second component 478 reduces unintentional triggering of a "deep press" response by gradual intensity fluctuations of in a touch input. In some embodiments, when touch input 476 satisfies dynamic intensity threshold 480 (e.g., at point 481 in Figure 4C), the "deep press" response is triggered.

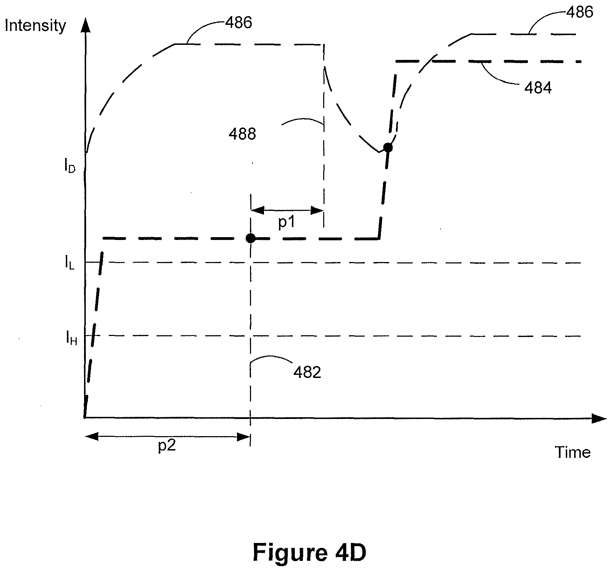

Figure 4D illustrates another dynamic intensity threshold 486 (e.g., intensity threshold I_{D}). Figure 4D also illustrates two other intensity thresholds: a first intensity threshold I_{H} and a second intensity threshold I_{L}. In Figure 4D, although touch input 484 satisfies the first intensity threshold I_{H} and the second intensity threshold I_{L} prior to time p2, no response is provided until delay time p2 has elapsed at time 482. Also in Figure 4D, dynamic intensity threshold 486 decays over time, with the decay starting at time 488 after a predefined delay time p1 has elapsed from time 482 (when the response associated with the second intensity threshold IL was triggered). This type of dynamic intensity threshold reduces accidental triggering of a response associated with the dynamic intensity threshold I_{D} immediately after, or concurrently with, triggering a response associated with a lower intensity threshold, such as the first intensity threshold I_{H} or the second intensity threshold I_{L}.

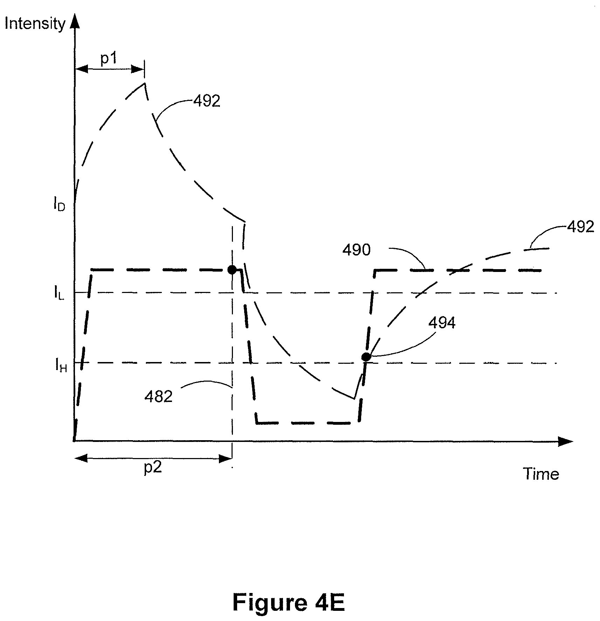

Figure 4E illustrate yet another dynamic intensity threshold 492 (e.g., intensity threshold I_{D}). In Figure 4E, a response associated with the intensity threshold I_{L} is triggered after the delay time p2 has elapsed from when touch input 490 is initially detected. Concurrently, dynamic intensity threshold 492 decays after the predefined delay time p1 has elapsed from when touch input 490 is initially detected. So a decrease in intensity of touch input 490 after triggering the response associated with the intensity threshold I_{L}, followed by an increase in the intensity of touch input 490, without releasing touch input 490, can trigger a response associated with the intensity threshold I_{D} (e.g., at time 494) even when the intensity of touch input 490 is below another intensity threshold, for example, the intensity threshold I_{L}.

An increase of characteristic intensity of the contact from an intensity below the light press intensity threshold IT_{L} to an intensity between the light press intensity threshold IT_{L} and the deep press intensity threshold IT_{D} is sometimes referred to as a "light press" input. An increase of characteristic intensity of the contact from an intensity below the deep press intensity threshold IT_{D} to an intensity above the deep press intensity threshold IT_{D} is sometimes referred to as a "deep press" input. An increase of characteristic intensity of the contact from an intensity below the contact-detection intensity threshold IT₀ to an intensity between the contact-detection intensity threshold IT₀ and the light press intensity threshold IT_{L} is sometimes referred to as detecting the contact on the touch-surface. A decrease of characteristic intensity of the contact from an intensity above the contact-detection intensity threshold IT₀ to an intensity below the contact-detection intensity threshold IT₀ is sometimes referred to as detecting liftoff of the contact from the touch-surface. In some embodiments IT₀ is zero. In some embodiments, IT₀ is greater than zero. In some illustrations a shaded circle or oval is used to represent intensity of a contact on the touch-sensitive surface. In some illustrations, a circle or oval without shading is used represent a respective contact on the touch-sensitive surface without specifying the intensity of the respective contact.

In some embodiments, described herein, one or more operations are performed in response to detecting a gesture that includes a respective press input or in response to detecting the respective press input performed with a respective contact (or a plurality of contacts), where the respective press input is detected based at least in part on detecting an increase in intensity of the contact (or plurality of contacts) above a press-input intensity threshold. In some embodiments, the respective operation is performed in response to detecting the increase in intensity of the respective contact above the press-input intensity threshold (e.g., the respective operation is performed on a "down stroke" of the respective press input). In some embodiments, the press input includes an increase in intensity of the respective contact above the press-input intensity threshold and a subsequent decrease in intensity of the contact below the press-input intensity threshold, and the respective operation is performed in response to detecting the subsequent decrease in intensity of the respective contact below the press-input threshold (e.g., the respective operation is performed on an "up stroke" of the respective press input).

In some embodiments, the device employs intensity hysteresis to avoid accidental inputs sometimes termed "jitter," where the device defines or selects a hysteresis intensity threshold with a predefined relationship to the press-input intensity threshold (e.g., the hysteresis intensity threshold is X intensity units lower than the press-input intensity threshold or the hysteresis intensity threshold is 75%, 90%, or some reasonable proportion of the press-input intensity threshold). Thus, in some embodiments, the press input includes an increase in intensity of the respective contact above the press-input intensity threshold and a subsequent decrease in intensity of the contact below the hysteresis intensity threshold that corresponds to the press-input intensity threshold, and the respective operation is performed in response to detecting the subsequent decrease in intensity of the respective contact below the hysteresis intensity threshold (e.g., the respective operation is performed on an "up stroke" of the respective press input). Similarly, in some embodiments, the press input is detected only when the device detects an increase in intensity of the contact from an intensity at or below the hysteresis intensity threshold to an intensity at or above the press-input intensity threshold and, optionally, a subsequent decrease in intensity of the contact to an intensity at or below the hysteresis intensity, and the respective operation is performed in response to detecting the press input (e.g., the increase in intensity of the contact or the decrease in intensity of the contact, depending on the circumstances).

For ease of explanation, the description of operations performed in response to a press input associated with a press-input intensity threshold or in response to a gesture including the press input are, optionally, triggered in response to detecting: an increase in intensity of a contact above the press-input intensity threshold, an increase in intensity of a contact from an intensity below the hysteresis intensity threshold to an intensity above the press-input intensity threshold, a decrease in intensity of the contact below the press-input intensity threshold, or a decrease in intensity of the contact below the hysteresis intensity threshold corresponding to the press-input intensity threshold. Additionally, in examples where an operation is described as being performed in response to detecting a decrease in intensity of a contact below the press-input intensity threshold, the operation is, optionally, performed in response to detecting a decrease in intensity of the contact below a hysteresis intensity threshold corresponding to, and lower than, the press-input intensity threshold. As described above, in some embodiments, the triggering of these responses also depends on time-based criteria being met (e.g., a delay time has elapsed between a first intensity threshold being met and a second intensity threshold being met).

### USER INTERFACES AND ASSOCIATED PROCESSES

Attention is now directed towards embodiments of user interfaces ("UI") and associated processes that may be implemented on an electronic device, such as portable multifunction device 100 or device 300, with a display, a touch-sensitive surface, and one or more sensors to detect intensities of contacts with the touch-sensitive surface.

Figures 5A-5I illustrate exemplary user interfaces for displaying an expanded portion of a slider, in accordance with some embodiments. The user interfaces in these figures are used to illustrate the processes described below, including the processes in Figures 7A-7D and 8A-8D. For convenience of explanation, some of the embodiments will be discussed with reference to operations performed on a device with a touch-sensitive display system 112. In such embodiments, the focus selector is, optionally: a respective finger or stylus contact, a representative point corresponding to a finger or stylus contact (e.g., a centroid of a respective contact or a point associated with a respective contact), or a centroid of two or more contacts detected on the touch-sensitive display system 112. However, analogous operations are, optionally, performed on a device with a display 450 and a separate touch- sensitive surface 451 in response to detecting the contacts on the touch-sensitive surface 451 while displaying the user interfaces shown in the figures on the display 450, along with a focus selector.

Figure 5A illustrates a user interface that includes user interface objects, in accordance with some embodiments. The illustrative user interface of Figure 5A includes user interface objects for a media playback application, including a media playback slider 502 and other user interface objects: media playback controls (previous track control 508, pause control 510, next track control 512), content identification information object 514, and volume slider 516. Media playback slider 502 represents an audio track. Lower range value indicator 504 indicates a time value (0:00) of a position in the audio track corresponding to the left edge of media playback slider 502 and upper range value indicator 506 indicates a time value (2:15) of a position in the audio track corresponding to the right edge of media playback slider 502. A contact with touch screen 112 is received at a location indicated by focus selector 518. Focus selector 518 is at a location of play head 520. Play head 520 is a thumb control for slider 502. As a contact with touch screen 112 is moved along media playback slider 502 from the location indicated by focus selector 518, play head 520 is moved in the direction of the contact's movement. In some embodiments, play back of the audio track represented by media playback slider 502 is initiated and/or resumed from a position in time indicated by play head 520. The characteristic intensity of the contact is indicated by intensity meter 522. In Figure 5A, the characteristic intensity of the contact (as indicated by intensity meter 522) is between a contact-detection intensity threshold IT₀ and a hint intensity threshold IT_{H}.

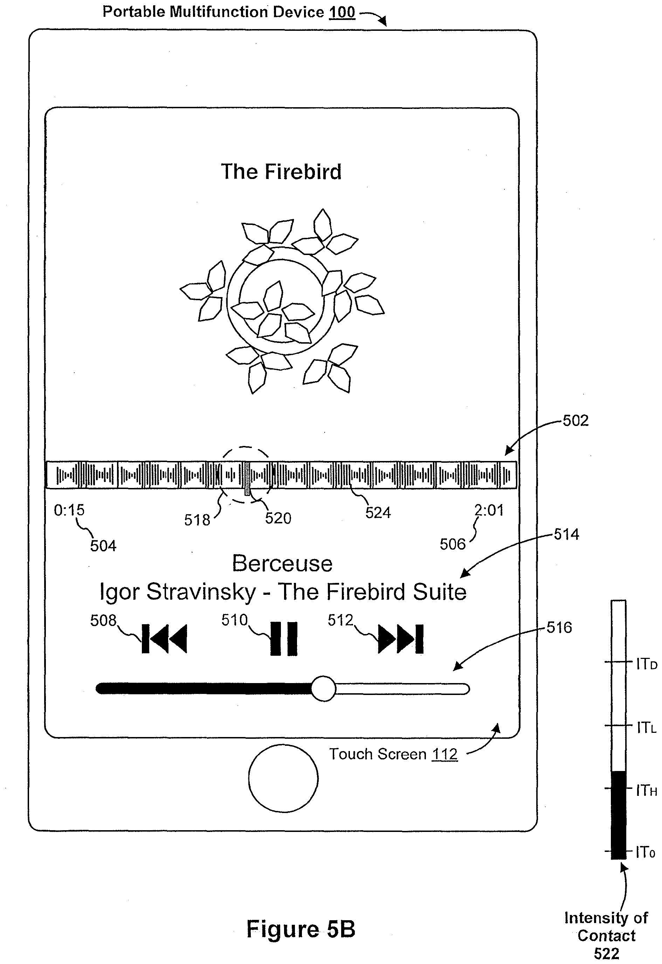

Figure 5B illustrates a user interface in which an expanded portion of media playback slider 502 is displayed, in accordance with some embodiments. In Figure 5B, the characteristic intensity of the contact at the location indicated by focus selector 518 has increased to above the hint intensity threshold IT_{H}, as indicated by intensity meter 522. In comparison with media playback slider 502 as shown in Figure 5A, media playback slider 502 as shown in Figure 5B is vertically expanded, magnifying the slider to reveal an audio waveform 524 (or to further reveal audio waveform 526, if audio waveform 524 was previously visible) corresponding to the audio track represented by media playback slider 502. The expanded portion of media playback slider 502 as shown in Figure 5B, with time value 0:15 shown at lower range value indicator 504 and time value 2:01 shown at upper range value indicator 506, is less than all of media playback slider 502 as shown in Figure 5A (in which lower range value indicator 504 showed time value 0:00 and upper range value indicator 506 showed time value 2:15). In Figure 5B, the appearance of user interface objects 508, 510, 512, 514, and 516 is maintained (i.e., the appearance of user interface objects 508, 510, 512, 514, and 516 is not changed from the appearance of these user interface objects in Figure 5A) while the expanded portion of media playback slider 502 is displayed. Play head 520 remains displayed under focus selector 518 when the expanded portion of media playback slider 502 is displayed.

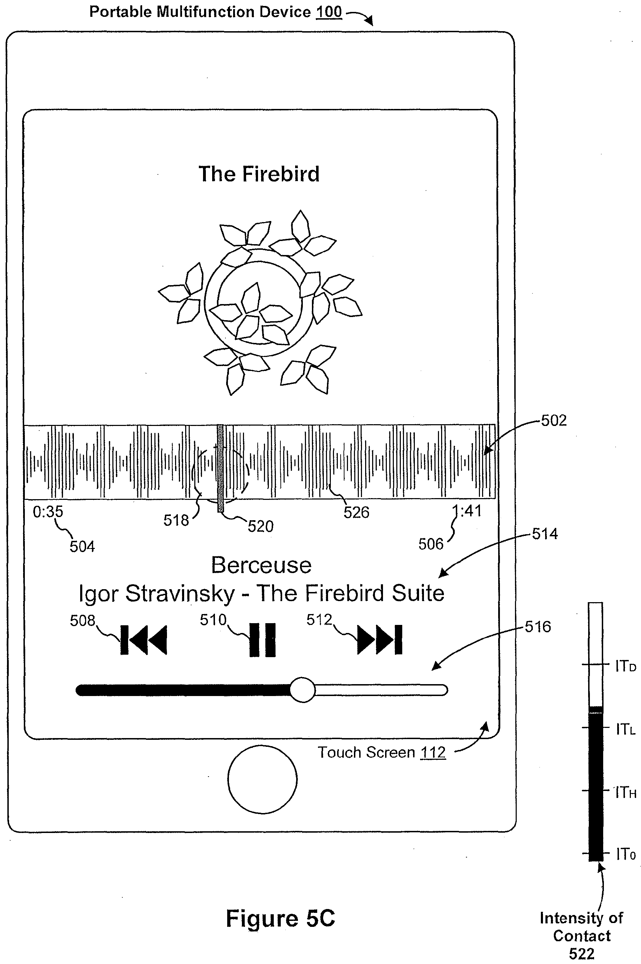

Figure 5C illustrates a user interface in which a further expanded portion of media playback slider 502 is shown, in accordance with some embodiments. In response to detecting a second increase in the characteristic intensity of the contact at the location indicated by focus selector 518, a further expanded portion of media playback slider 502 is displayed. For example, the second increase in the characteristic intensity is an increase from above the hint intensity threshold IT_{H}, as shown in Figure 5B, to above a light press intensity threshold IT_{L}, as shown by intensity meter 522 of Figure 5C. Alternatively, the second increase in the characteristic intensity is an increase in the characteristic intensity (e.g., an increase to above the hint intensity threshold IT_{H}) that follows a decrease in characteristic intensity (e.g., a decrease below the hint intensity threshold IT_{H}) subsequent to the first increase in the characteristic intensity (e.g., the increase above the hint intensity threshold IT_{H} as shown by intensity level meter 522 in Figure 5B). In comparison with media playback slider 502, as shown in Figure 5B, media playback slider 502 as shown in Figure 5C is vertically expanded, e.g., magnified to further reveal audio waveform 526. The expanded portion of media playback slider 502 as shown in Figure 5C, with time value 0:35 shown by lower range value indicator 504 and time value 1:41 shown by upper range value indicator 506, is less than all of media playback slider 502 as shown in Figure 5B (in which lower range value indicator 504 showed time value 0:15 and upper range value indicator 506 showed time value 2:01). In Figure 5C, the appearance of user interface objects 508, 510, 512, 514, and 516 is maintained (e.g., the appearance of user interface objects 508, 510, 512, 514, and 516 is not changed from the appearance of these user interface objects in Figure 5A) while the further expanded portion of media playback slider 502 is displayed. Play head 520 remains displayed under focus selector 518 when the further expanded portion of media playback slider 502 is displayed.

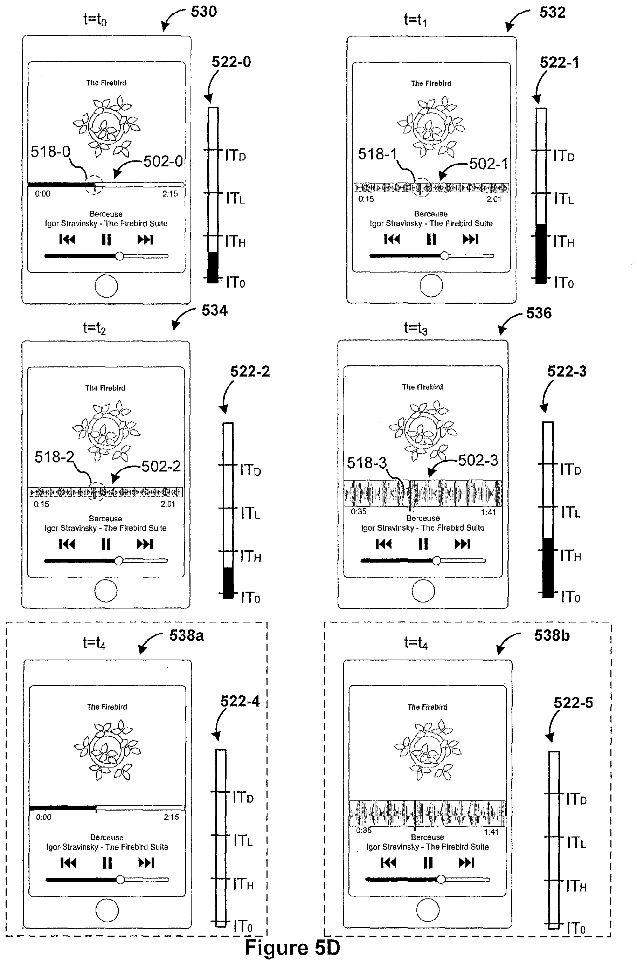

Figure 5D illustrates a series of user interfaces 530, 532, 534, 536, and 538a/ 538b (which occur at sequential times t₀, t₁, t₂, t₃, and t₄, respectively) in which media playback slider 502 is shown with varying degrees of expansion, in accordance with some embodiments.

In user interface 530, a characteristic intensity level of a contact at a location indicated by focus selector 518-0 is between a contact-detection intensity threshold IT₀ and a hint intensity threshold IT_{H}, as indicated by intensity level meter 522-0 shown adjacent to user interface 530. Media playback slider 502-0 of user interface 530 is shown in an initial state.

In user interface 532, the characteristic intensity level of the contact at the location indicated by focus selector 518-1 has increased to above IT_{H}, as indicated by intensity level meter 522-1 shown adjacent to user interface 532. In response to the increase in the characteristic intensity (from the characteristic intensity indicated by intensity meter 522-0 shown adjacent to user interface 530), an expanded portion of media playback slider 502-1 is displayed.

In user interface 534, the characteristic intensity of the contact at the location indicated by focus selector 518-2 has decreased to below IT_{H}, as indicated by intensity meter 522-2 shown adjacent to user interface 534. In response to the decrease in the characteristic intensity (from the characteristic intensity indicated by intensity meter 522-1 shown adjacent to user interface 532), the display of the expanded portion of media playback slider 502-2 is maintained (e.g., the same expanded portion of media playback slider 502 is shown in user interface 532 and user interface 534).

In user interface 536, the characteristic intensity of the contact at the location indicated by focus selector 518-3 has again increased to above IT_{H}, as indicated by intensity meter 522-3 shown adjacent to user interface 536. In response to the second increase in the characteristic intensity (from the characteristic intensity indicated by intensity meter 522-2 shown adjacent to user interface 534), a further expanded portion of media playback slider 502-3 is displayed.

Subsequent to displaying user interface 536, a user interface as shown in 538a is displayed, in accordance with some embodiments. In user interface 538a, the contact has lifted off from touch screen 112. In response to the liftoff, media playback slider 502 is displayed at its initial state.

Alternatively, subsequent to displaying user interface 536, a user interface as shown in 538b is displayed, in accordance with some embodiments. In user interface 538b, the contact has lifted off from touch screen 112. In response to the liftoff, display of the further expanded portion media playback slider 502 is maintained.

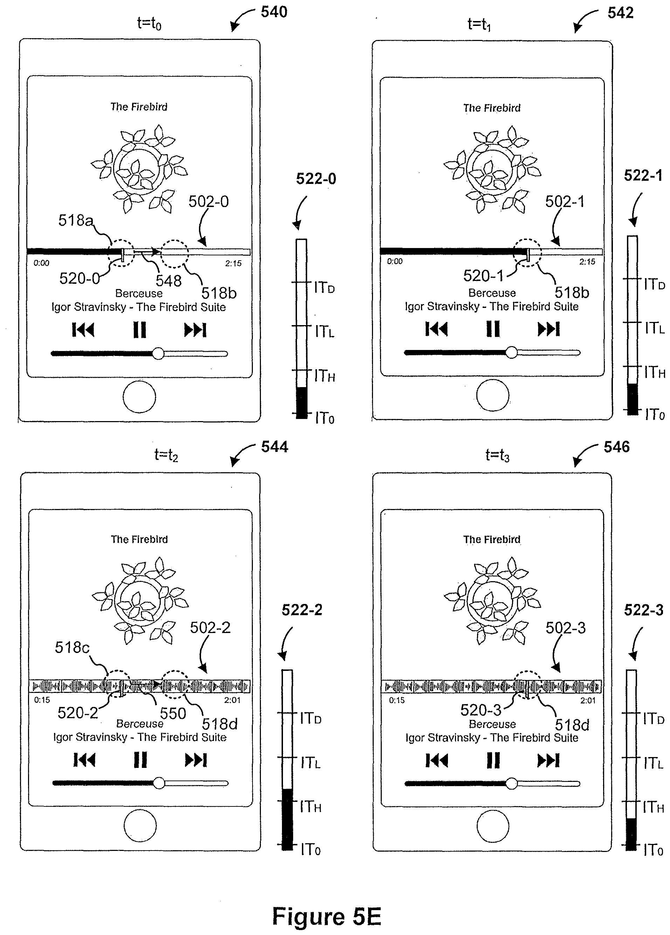

Figure 5E illustrates a first series of user interfaces 540-542 (occurring at sequential times t₀ and t₁) and a second series of user interfaces 544-546 (occurring at sequential times t₂ and t₃) in which movement of the focus selector 518 along media playback slider 502 occurs, in accordance with some embodiments. The first series of user interfaces 540-542 illustrate user interfaces that occur when intensity criteria are not met. The second series of user interfaces 544-546 illustrate user interfaces that occur when intensity criteria are met. In the illustrative example of Figure 5E, intensity criteria are met when a characteristic intensity of a contact exceeds an intensity threshold IT_{H}, as indicated by intensity meter 522.

In user interface 540, a contact moves play head 520-0 along media playback slider 502-0 from a first position indicated by focus selector 518a to a second position indicated by focus selector 518b, as indicated by arrow 548. A characteristic intensity of the contact has not met first criteria (e.g. the characteristic intensity of the contact has not exceeded an intensity threshold IT_{H}, during and/or prior to the movement of the focus selector along media playback slider 502-0).

In user interface 542, the value of the media playback slider 502-2 (e.g., the position indicated by play head 520-1) is shifted by a first amount (e.g., shifted from time value 1:00, at focus selector location 518a of user interface 540, to time value 1:40, at focus selector location 518b of user interface 542).

In user interface 544, a contact moves play head 520-2 along media playback slider 502-2 from a first position indicated by focus selector 518c to a second position indicated by focus selector 518d, as indicated by arrow 550. A characteristic intensity of the contact has met the first criteria (e.g. the characteristic intensity of the contact has exceeded the intensity threshold IT_{H}, during and/or prior to the movement of the focus selector along media playback slider 502-2).

In user interface 546, the value of the media playback slider 502-3 (e.g., the position indicated by play head 520-3) is shifted by a second amount (e.g., shifted from time value 1:20, at focus selector location 518c of user interface 544, to time value 1:40, at focus selector location 518d of user interface 546).

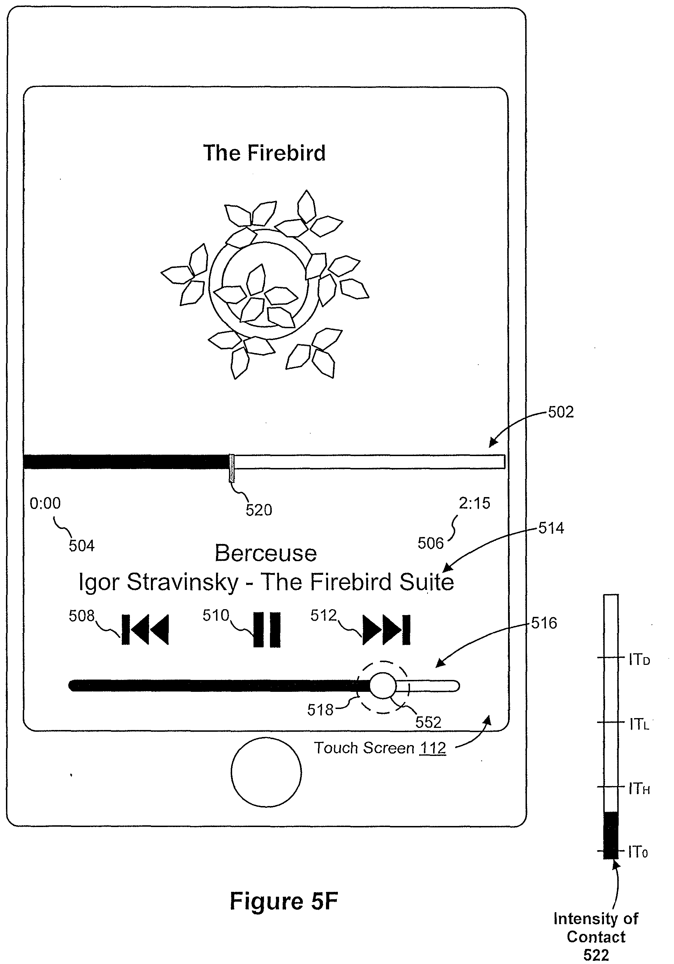

Figures 5F-5G illustrate expansion of a portion of a volume slider 516, in accordance with some embodiments.

In Figure 5F, a contact with touch screen 112 is received at a location indicated by focus selector 518. Focus selector 518 is at a location of volume control 552. Volume control 552 is a thumb control for volume slider 516. As a contact with touch screen 112 is moved along volume slider 516 from the location indicated by focus selector 518, volume control 552 is moved in the direction of the contact's movement. In some embodiments, the sound level of media playback is increased or decreased based on the position along volume slider 516 indicated by volume control 552. The characteristic intensity of the contact is indicated by intensity meter 522. In Figure 5F, the characteristic intensity of the contact (as indicated by intensity meter 522) is between a contact-detection intensity threshold IT₀ and a hint intensity threshold IT_{H}.

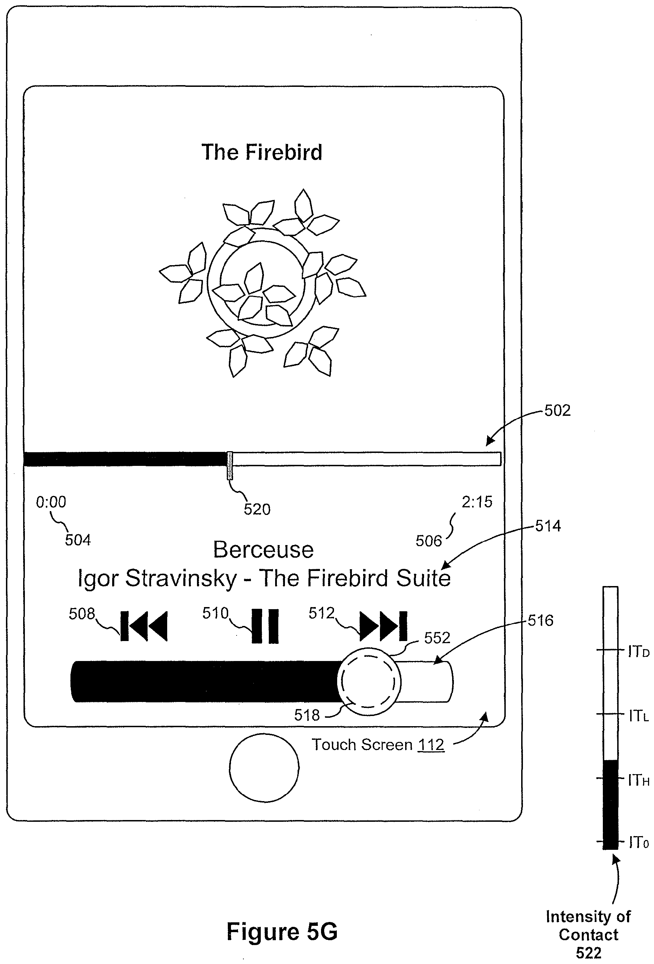

Figure 5G illustrates a user interface in which an expanded portion of volume slider 516 is displayed, in accordance with some embodiments. In Figure 5G, the characteristic intensity of the contact at the location indicated by focus selector 518 has increased to above the hint intensity threshold IT_{H}, as indicated by intensity meter 522. In comparison with volume slider 516 as shown in Figure 5F, volume slider 516 as shown in Figure 5G is vertically expanded. In Figure 5G, the appearance of user interface objects 502, 504, 506, 508, 510, 512, 514, and 520 is maintained (e.g., the appearance of user interface objects 502, 504, 506, 508, 510, 512, 514, and 520 is not changed from the appearance of these user interface objects in Figure 5F) while the expanded portion of volume slider 516 is displayed. Volume control 552 remains displayed under focus selector 518 when the expanded portion of volume slider 516 is displayed.

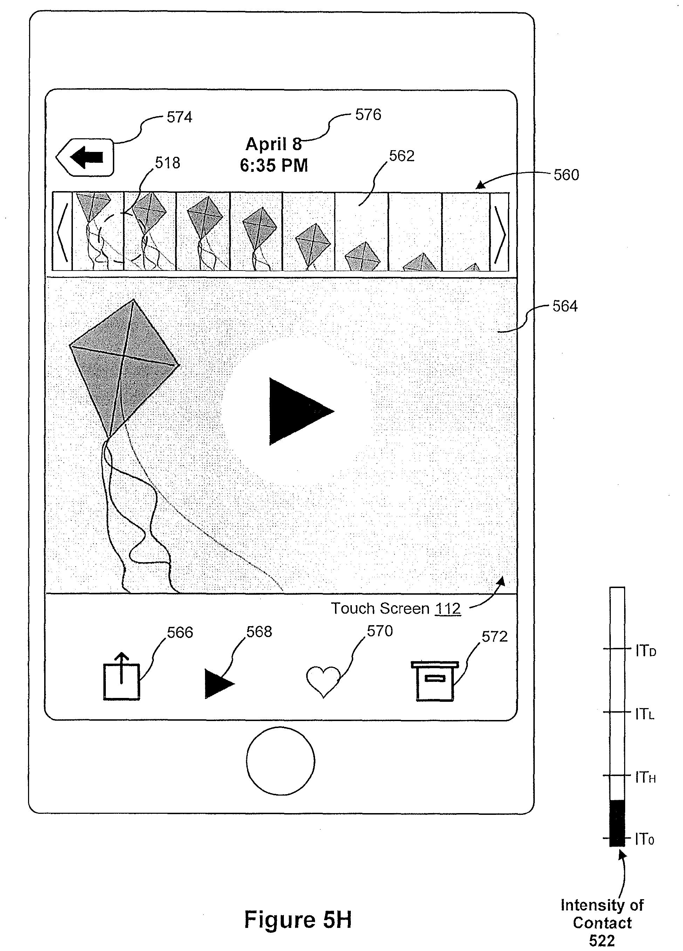

Figures 5H-5I illustrate expansion of a portion of a video timeline slider 560, in accordance with some embodiments.

Figure 5H illustrates a user interface that includes user interface objects, in accordance with some embodiments. The illustrative user interface of Figure 5H includes user interface objects for a video application, including video timeline slider 560 and other user interface objects: video playback window 564; video management tools 566, 568, 570, and 572; back button 574, and video identification information object 576. In Figure 5H, a contact with touch screen 112 is received at a location indicated by focus selector 518. Focus selector 518 is at a location of video timeline slider 560. Video timeline slider 560 is a representation of a video and includes a sequence of eight frames, including frame 562, indicating various locations (e.g., at periodic intervals) within the video. As a contact with touch screen 112 is moved along video timeline slider 560 from the location indicated by focus selector 518, a playback position within a video represented by video timeline slider 560 is adjusted (e.g., set at a location within the video indicated by a frame under focus selector 518 or set at a location within an interval between adjacent frames of video timeline based on the location of focus selector 518 within a frame). The characteristic intensity of the contact is indicated by intensity meter 522. In Figure 5H, the characteristic intensity of the contact (as indicated by intensity meter 522) is between a contact-detection intensity threshold IT₀ and a hint intensity threshold IT_{H}.

Figure 51 illustrates a user interface in which an expanded portion of video timeline slider 560 is displayed, in accordance with some embodiments. In Figure 51, the characteristic intensity of the contact at the location indicated by focus selector 518 has increased to above the hint intensity threshold IT_{H}, as indicated by intensity meter 522. In comparison with video timeline slider 560 as shown in Figure 5H, video timeline slider 560 as shown in Figure 51 is expanded. The expanded portion of video timeline slider 560 includes a sequence of four frames. The spans of time between the frames of video timeline slider 560 as shown in Figure 5H are greater than the spans of time between the frames of video timeline slider 560 as shown in Figure 51 (for example, the movement of the kite from frame to frame in video timeline slider 560 of Figure 51 is less than the movement as shown in video timeline slider 560 of Figure 5H). In Figure 51, the appearance of user interface objects 564, 566, 568, 570, 572, 574, and 576 is maintained (e.g., the appearance of user interface objects 564, 566, 568, 570, 572, 574, and 576 is not changed from the appearance of these user interface objects in Figure 5H) while the expanded portion of video timeline slider 560 is displayed.

Figures 6A-6S illustrate exemplary user interfaces for adjusting a property of a user interface element in accordance with embodiments of the invention. . The user interfaces in these figures are used to illustrate the processes described below, including the processes in Figures 7A-7D and 8A-8D. Although some of the examples which follow will be given with reference to inputs on a touch-screen display (where the touch-sensitive surface and the display are combined), in some embodiments, the device detects inputs on a touch-sensitive surface 451 that is separate from the display 450, as shown in Figure 4B.

Figure 6A illustrates a user interface that includes multiple user interface elements, in accordance with some embodiments. User interface elements of Figure 6A include image message 602 (also referred to herein as "image 602"), text messages 604 and 606, messaging controls 610 and 612, text entry box 614, back button 616, messaging information objects 618 and 620, signal strength indicators 402, time indicator 404, and battery status indicator 406. A contact with touch screen 112 is detected at a location indicated by focus selector 624. Focus selector 624 is at a location of image 602. The characteristic intensity of the contact is indicated by intensity meter 622. In Figure 6A, the characteristic intensity of the contact (as indicated by intensity meter 622) is between a contact-detection intensity threshold IT₀ and a hint intensity threshold IT_{H}.

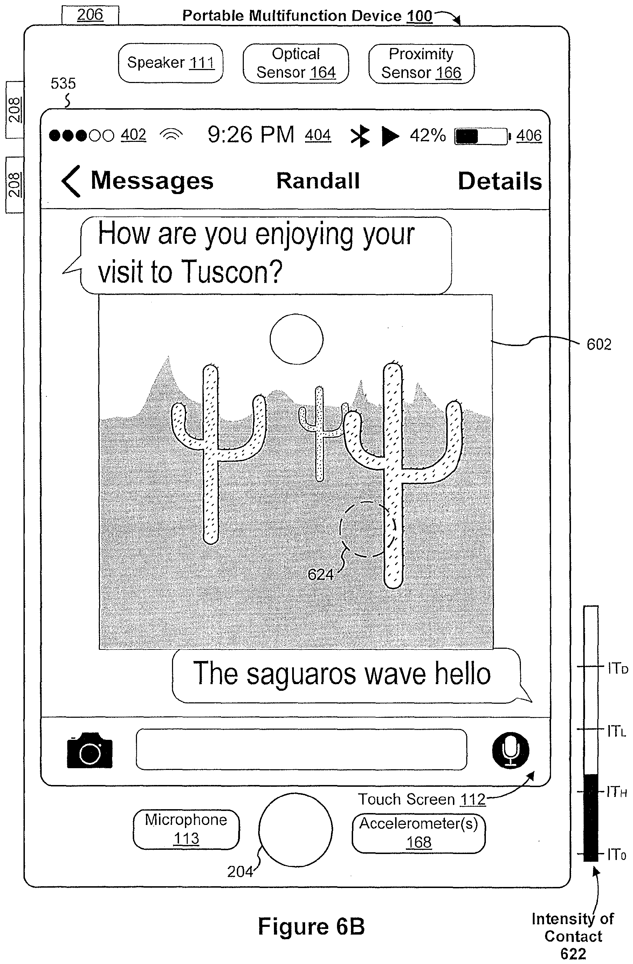

Figure 6B illustrates a user interface in which a property of a user interface element has been adjusted (and an increase in the characteristic intensity of a contact does not meet intensity criteria), in accordance with some embodiments. In the illustrative example of Figure 6B, a user interface element that is adjusted is image 602 and the property of image 602 that is adjusted is the area/display size of image 602. In Figure 6B, the characteristic intensity of the contact at the location indicated by focus selector 624 has increased to an intensity level above the hint intensity threshold IT_{H}, as indicated by intensity meter 622, from an intensity level below the hint intensity threshold IT_{H} (e.g., as indicated by intensity meter 622 of Figure 6A). In comparison with image 602 as shown in Figure 6A, the area/display size of image 602 as shown in Figure 6B is expanded. In some embodiments, a presentation layout of image 602 is adjusted (e.g., image 602 transitions from a message balloon format, as shown in Figure 6A, to a rectangular format, as shown in Figure 6B). In some embodiments, if an increase in the characteristic intensity of the contact does not meet intensity criteria (such as intensity criteria including a criterion that is met when an intensity level increases above the hint intensity threshold IT_{H}), when a decrease in the characteristic intensity of the contact is detected, the property (e.g., the area/display size) of the user interface element (e.g., image 602) returns to its previous value (e.g., image 602's original state, as shown in Figure 6A).

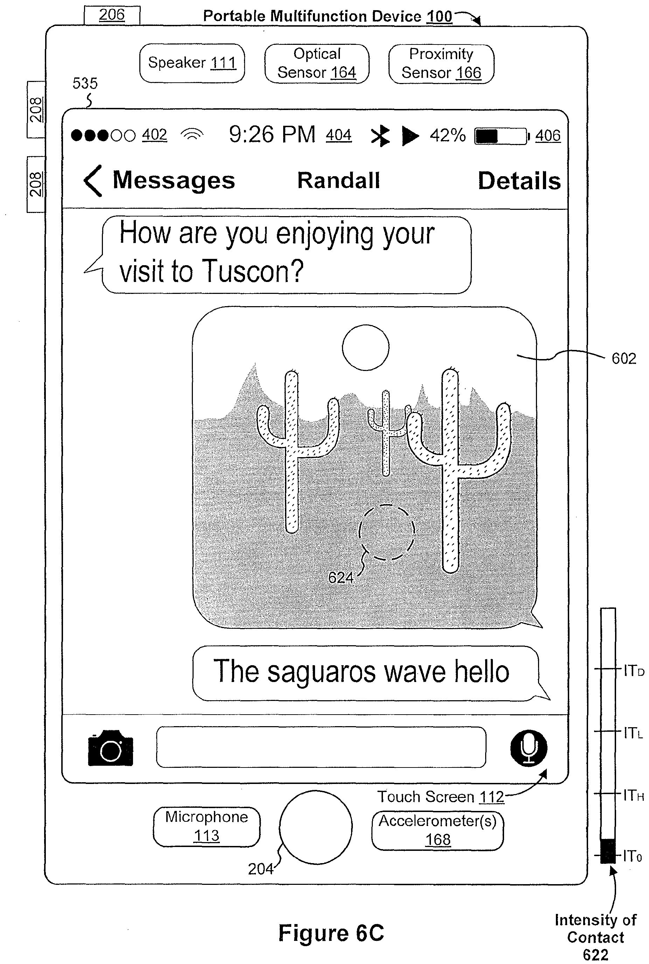

Figure 6C illustrates a user interface in which the property of the user interface element has been returned to its previous value, in accordance with some embodiments. The user interface of Figure 6C is shown, for example, in response to a determination that an increase in the characteristic intensity of a contact (e.g., as described with regard to Figure 6B) did not meet intensity criteria (e.g., the characteristic intensity of the contact in Figure 6B did not increase above the hint intensity threshold IT_{H}). In Figure 6C, the characteristic intensity of the contact at the location indicated by focus selector 624 has decreased to an intensity level below the hint intensity threshold IT_{H}, as indicated by intensity meter 622. In comparison with image 602 as shown in Figure 6B, the area/display size of image 602 as shown in Figure 6C is decreased. The area of image 602 as shown in Figure 6C is the same as the area of image 602 as shown in Figure 6A.

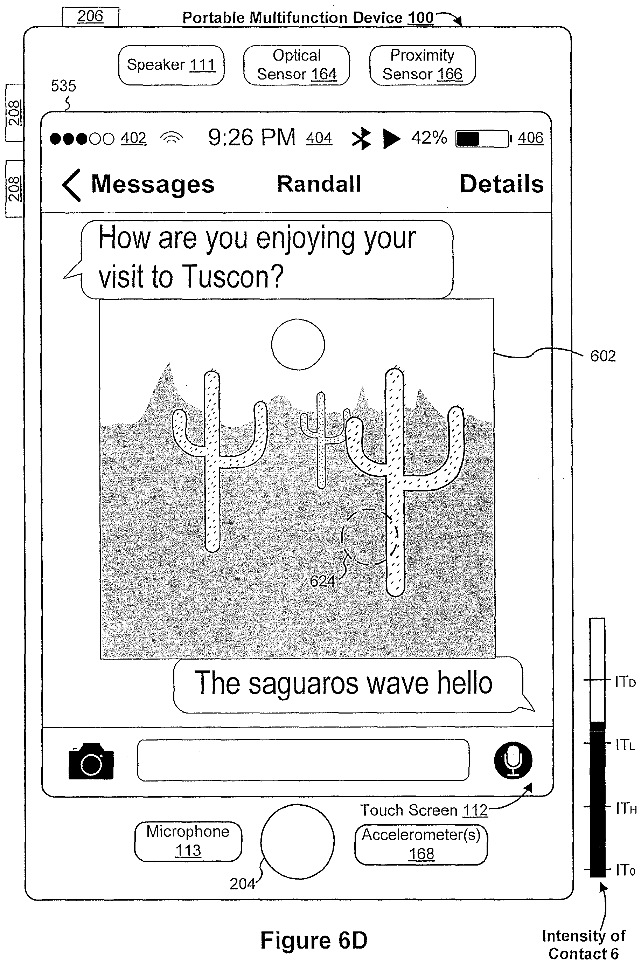

Figures 6D-6F illustrate user interfaces in which the property of the user interface element has been adjusted and an increase in the characteristic intensity of a contact has met intensity criteria.

In Figure 6D, the characteristic intensity of the contact at the location indicated by focus selector 624 has increased to an intensity level above a light press intensity threshold IT_{L}, as indicated by intensity meter 622 of Figure 6D, from an intensity level below the light press intensity threshold IT_{L} (e.g., as indicated by intensity meter 622 of Figure 6A). In response to the increase in the characteristic intensity of the contact, image 602 is increased from an initial value (e.g., an initial area/display size of image 602 as shown in Figure 6A) to an expanded area/display size as shown in Figure 6D.

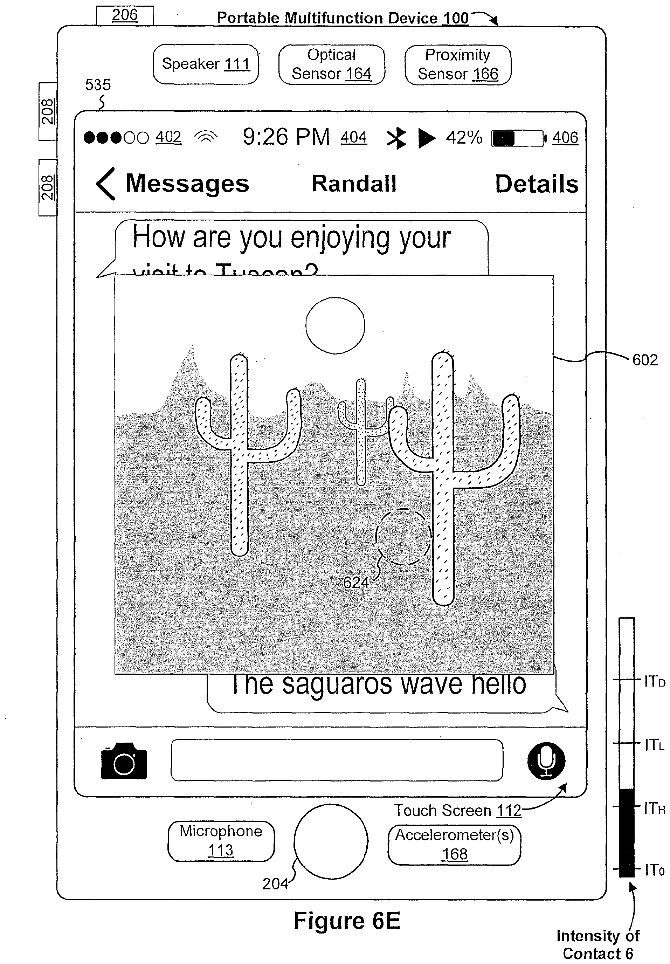

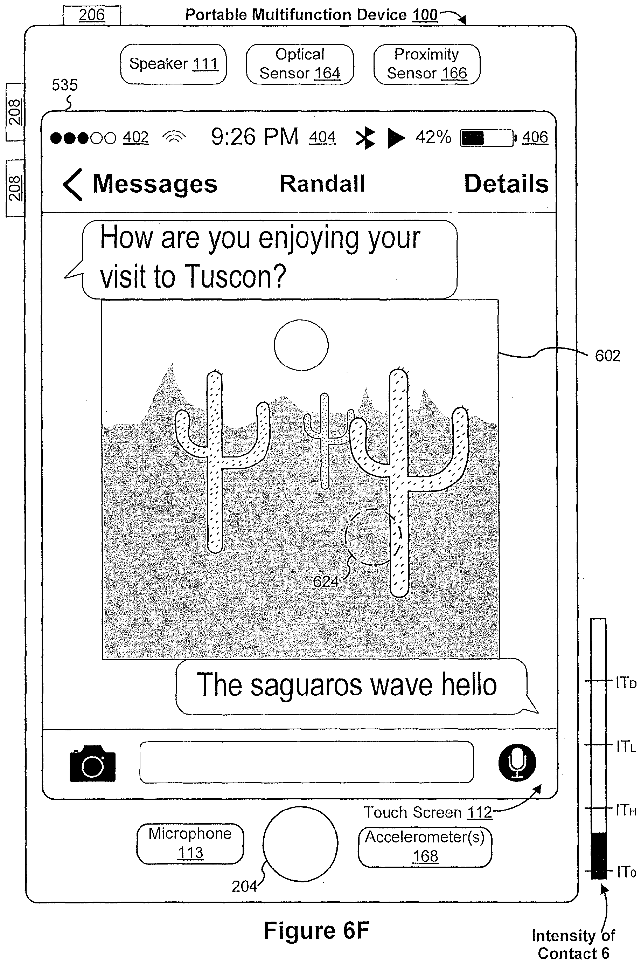

In some embodiments, as shown in Figures 6E-6F, adjusting the property (e.g., increasing the area/display size) of the user interface element (e.g., image 602) includes a "rubber band effect" in which the area of image 602 expands beyond a target level of expansion and then returns to the target level of expansion. For example, the adjustment of the area/display size of image 602 from an initial area/display size (e.g. the area/display size of image 602 as shown in Figure 6A) to a target level of expansion (e.g., the area/display size of image 602 as shown in Figure 6D) includes a first portion in which the area/display size of image 602 expands beyond the target level of expansion (e.g., the area/display size of image 602 expands, as shown in Figure 6E, to an area that is larger than the area/display size of image 602 as shown in Figure 6D) followed by a second portion in which the area/display size of image 602 decreases to the target level of expansion (e.g., the area/display size of image 602 decreases from the level of expansion shown in Figure 6E to the target level of expansion shown in Figure 6F). The area/display size of image 602 as shown in Figure 6F is equal to the area/display size of image 602 as shown in Figure 6D.

In Figure 6F, the characteristic intensity of the contact at the location indicated by focus selector 624 has decreased to an intensity level below the light press intensity threshold IT_{L} (e.g., from an intensity level above the light press intensity threshold IT_{L} as indicated at Figure 6D). Because the characteristic intensity of the contact met intensity criteria (e.g., the characteristic intensity of the contact increased above IT_{L}), in response to the decrease in the characteristic intensity of the contact, the area/display size of image 602 is maintained at the expanded level reached in Figure 6D.

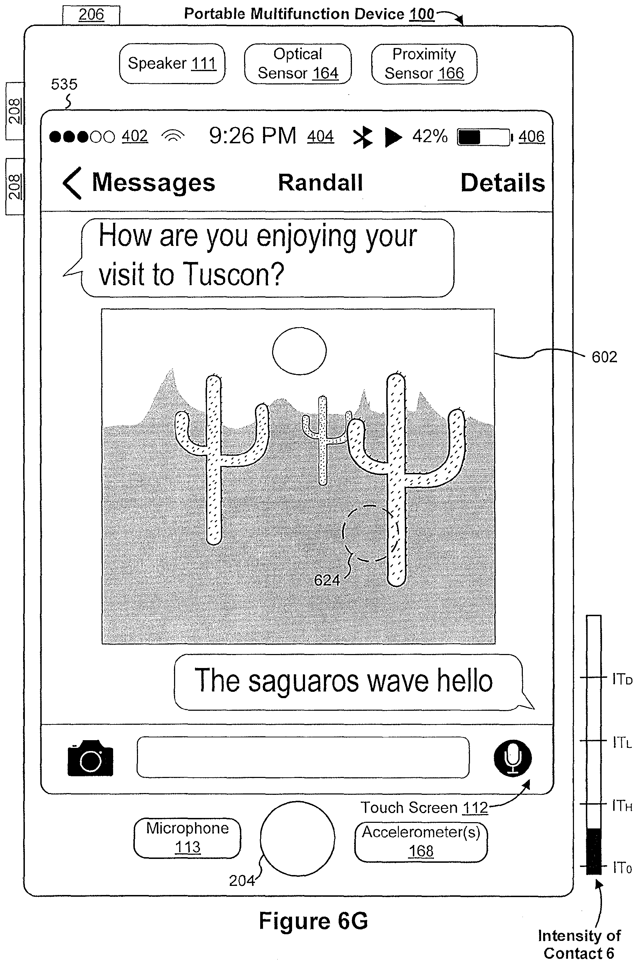

Figure 6G illustrates a user interface in which the property of the user interface element is reduced from a second value of the property while the property is maintained above a first value of the property. In some embodiments, when a property of a user interface element is maintained above an initial value in response to a decrease in the characteristic intensity of a contact (e.g., area of image 602 is maintained above an initial area/display size of image 602), the property is reduced (e.g., until a subsequent intensity increase is detected). For example, an animation showing a continuous reduction in the area/display size of image 602 from the expanded level shown in Figure 6F is shown (e.g., to indicate a "deflation" from the expanded level). In some embodiments, when a property of a user interface element is maintained above an initial value in response to a decrease in the characteristic intensity of a contact, a "rubber band" effect occurs (the area/display size of image 602 is briefly reduced from the expanded level and subsequently returns to the expanded level). Figure 6G illustrates a user interface in which the area/display size of image 602 is reduced to below the expanded level shown in Figure 6F, while the area of image 602 is maintained above an initial area (e.g., the area/display size of image 602 as shown in Figure 6A).

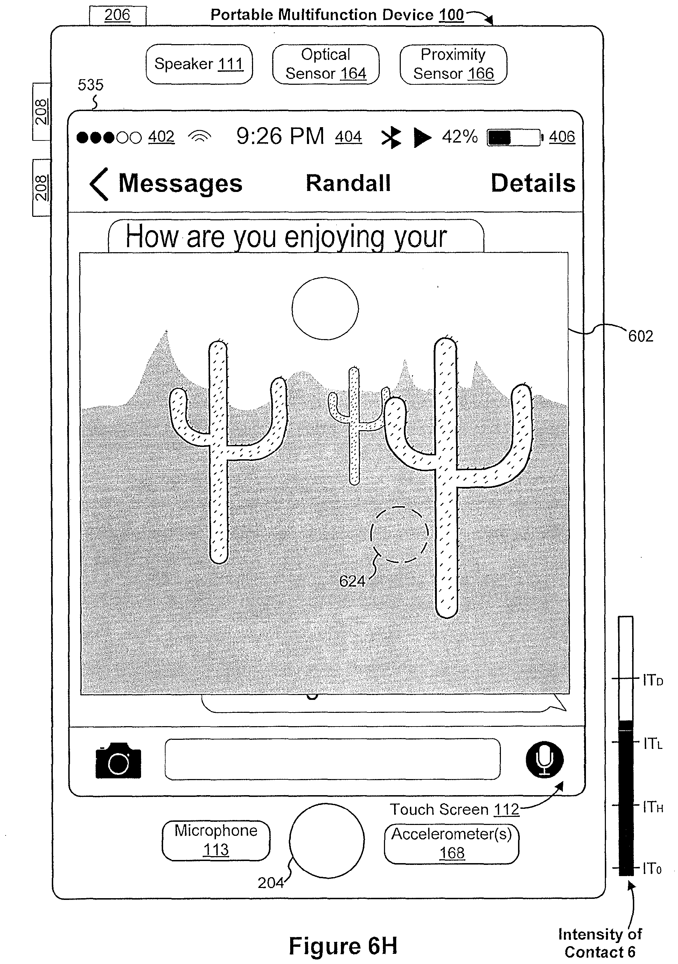

Figures 6H-6J illustrate user interfaces in which the property of the user interface element has been further adjusted in response to a second increase in the characteristic intensity of the contact.

In Figure 6H, the characteristic intensity of the contact at the location indicated by focus selector 624 has increased to an intensity level above the light press intensity threshold IT_{L}, as indicated by intensity meter 622 of Figure 6H, after a previous increase in the characteristic intensity of the contact has been detected (e.g., an increase from an intensity level as indicated by intensity meter 622 in Figure 6A to an intensity level as indicated by intensity meter 622 in Figure 6D), and after a decrease in the characteristic intensity of the contact has been detected (e.g., as described with regard to Figures 6D-6G). In response to the second increase in the characteristic intensity of the contact, the area/display size of image 602 is further increased (e.g., beyond the increase in the area/display size of image 602 from the initial area as indicated in Figure 6A to the expanded area as indicated in Figure 6D).

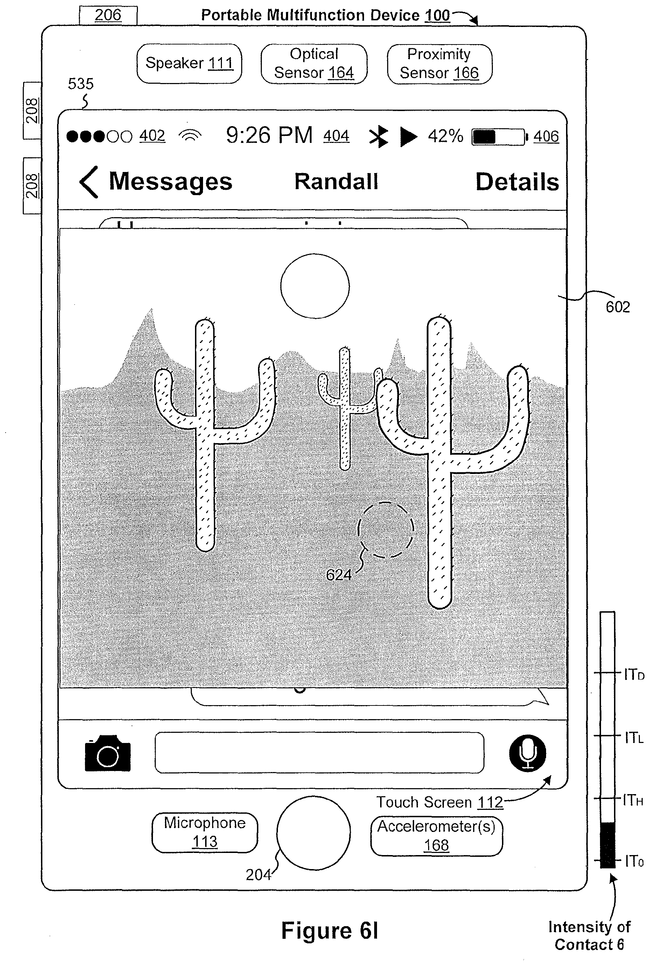

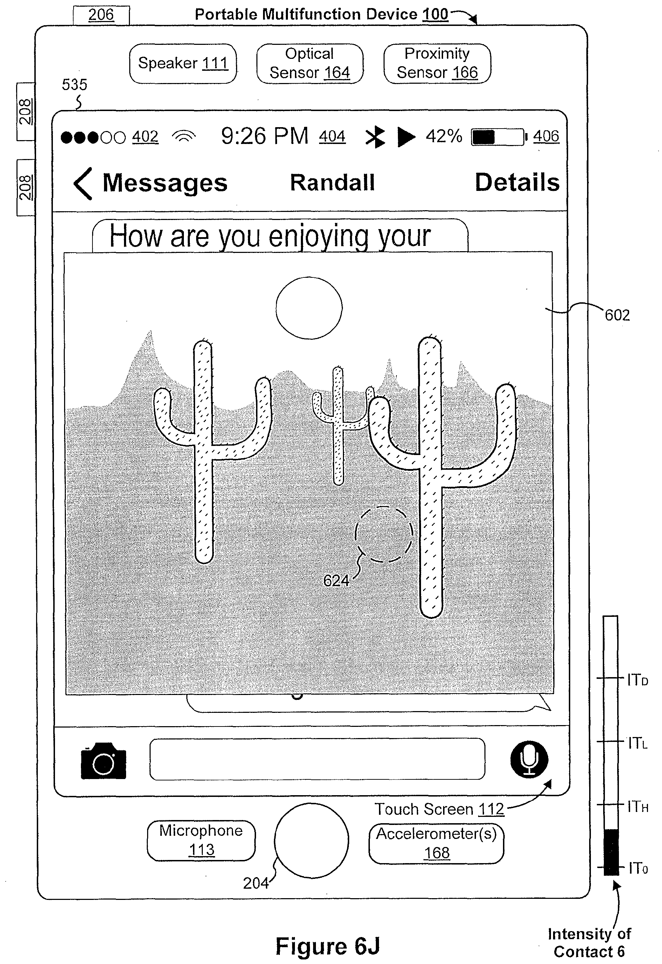

Figures 6I-6J illustrate a "rubber band" effect in which the area/display size of image 602 expands beyond a further expanded area/display size and then returns to the further expanded area/display size. For example, the adjustment of the area/display size of image 602 from an expanded area/display size (e.g. the area/display size of image 602 as shown in Figure 6D) to a further expanded area (e.g., the area/display size of image 602 as shown in Figure 6J) includes a first portion in which the area/display size of image 602 expands beyond the further expanded area/display size (e.g., in Figure 61, the area/display size of image 602 expands to an area/display size that is larger than the further expanded area/display size of image 602 as shown in Figure 6H) followed by a second portion in which the area/display size of image 602 decreases to the further expanded area (e.g., the area/display size of image 602 decreases from the level of expansion shown in Figure 61 to the level of expansion shown in Figure 6J). The area/display size of image 602 as shown in Figure 6J is equal to the area/display size of image 602 as shown in Figure 6H.

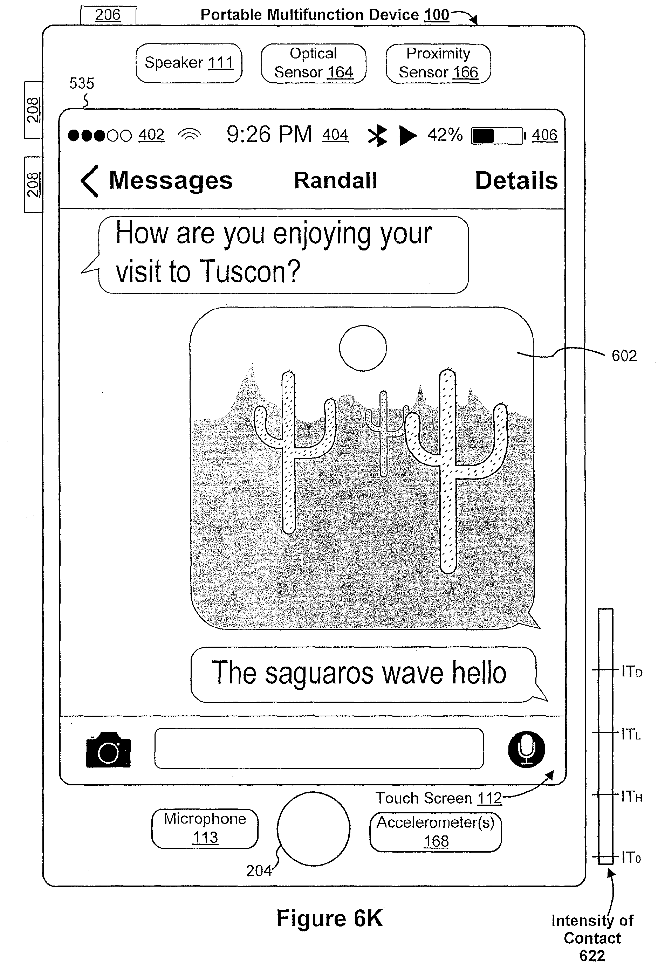

Figures 6K-6M illustrate user interfaces in which the property of the user interface element has been returned to an initial value in response to liftoff of the contact from touch screen 112.

In Figure 6K, the contact has lifted off of touch screen 112. In response to detecting liftoff of the contact, the area/display size of image 602 is decreased (e.g., from an area/display size of image 602 as shown in Figure 6J to an area/display size that is equal to the area/display size of image 602 as shown in Figure 6A).

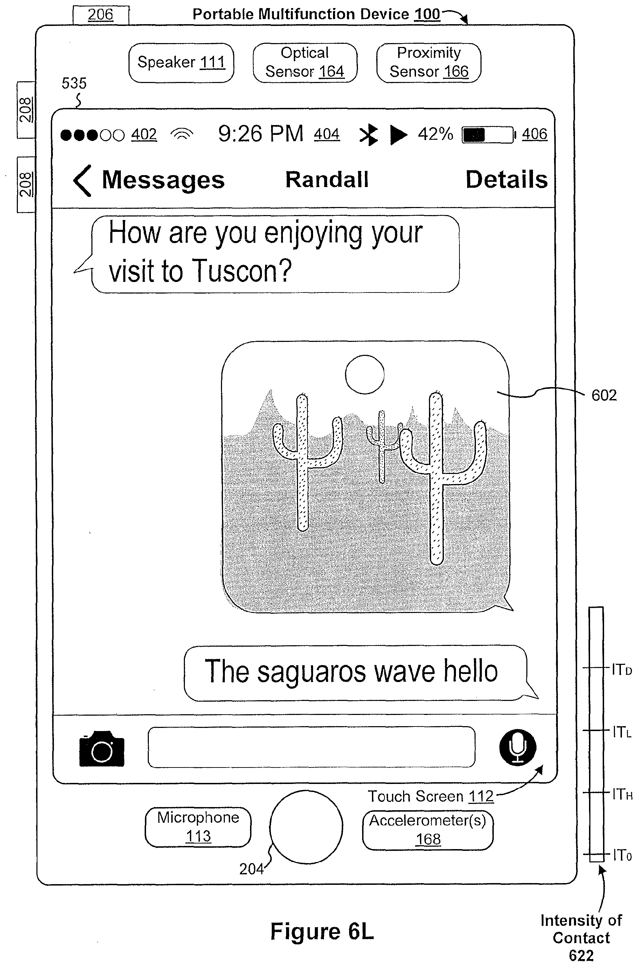

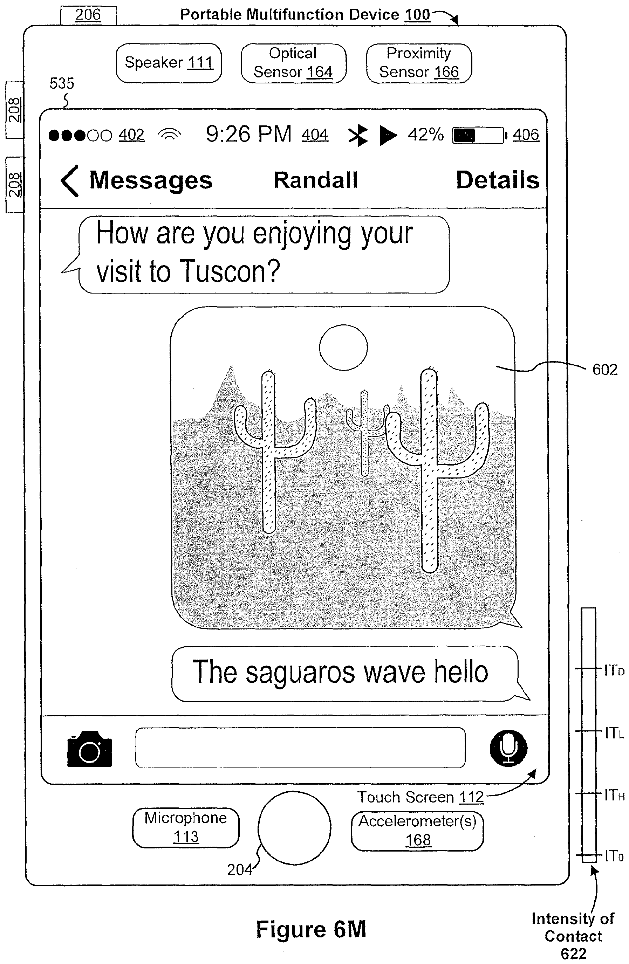

Figures 6L-6M illustrate a "rubber band" effect in which the area/display size of image 602 decreases below an initial area/display size of image 602 and then bounces back to the initial area/display size. For example, returning the area/display size of image 602 from an expanded area/display size (e.g. the expanded area/display size of image 602 as shown in Figure 6F, or the further expanded area/display size of image 602 as shown in Figure 6J) to an initial area/display size (e.g., the area/display size of image 602 as shown in Figure 6A) includes a first portion in which the area/display size of image 602 decreases below the initial area/display size (e.g., the area/display size of image 602 decreases from an initial area/display size as shown in Figure 6K to a smaller area/display size of image 602 as shown in Figure 6L) followed by a second portion in which the area/display size of image 602 increases to the initial area/display size (e.g., the area/display size of image 602 increases from the level of expansion shown in Figure 6L to the initial area/display area of image 602 as shown in Figure 6M). The area/display size of image 602 as shown in Figure 6K is equal to the area/display size of image 602 as shown in Figure 6M.

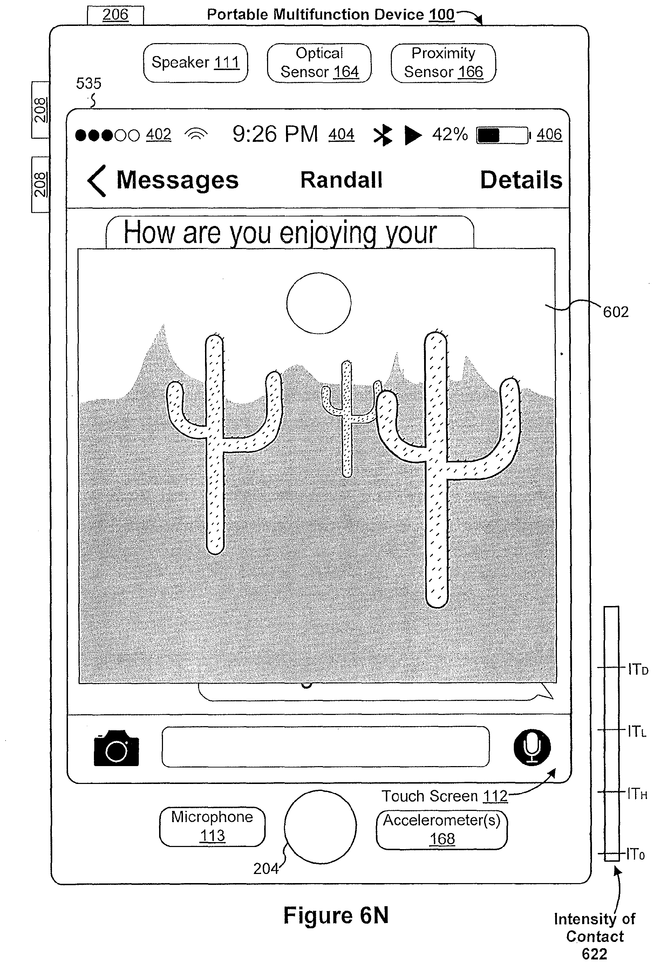

Figure 6N illustrates a user interfaces in which the property of the user interface element has been maintained above an expanded area/display size in response to liftoff of the contact from touch screen 112. In Figure 6N, the contact has lifted off of touch screen 112. In response to liftoff of the contact, the area/display size of image 602 is maintained at a constant level (e.g., as shown in Figure 6N, image 602 is shown with a further expanded area/display size that is equal to the area/display size of image 602 in Figure 6J). Alternatively, the area/display size of image 602 is reduced (e.g., decreases gradually) below the area/display size of image 602 in Figure 6J while remaining above the area/display size of image 602 as shown in Figure 6D.

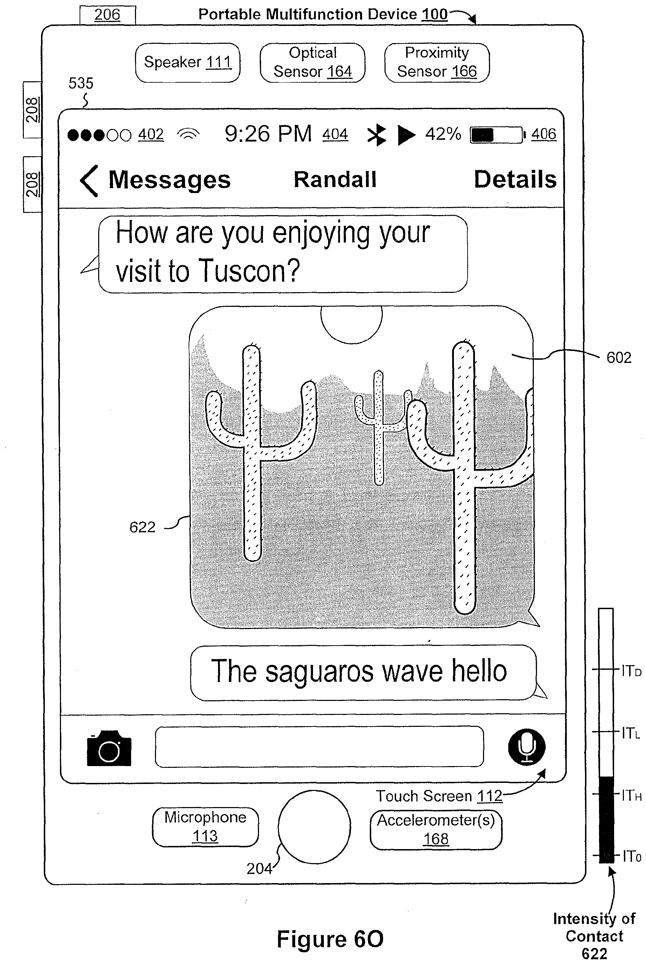

Figure 6O illustrates a user interface in which a magnification property of a user interface element is adjusted. In Figure 6O, the characteristic intensity of the contact at the location indicated by focus selector 624 has increased to an intensity level above the hint intensity threshold IT_{H}, as indicated by intensity meter 622, from an intensity level below the hint intensity threshold IT_{H} (e.g., as indicated by intensity meter 622 of Figure 6A). In comparison with image 602 as shown in Figure 6A, the level of magnification of image 602 as shown in Figure 6O is increased (while the area/display size of image 602 remains the same). In Figures 6A-6N, a magnification level of image 602 is adjusted while the area/display size of image 602 is adjusted.

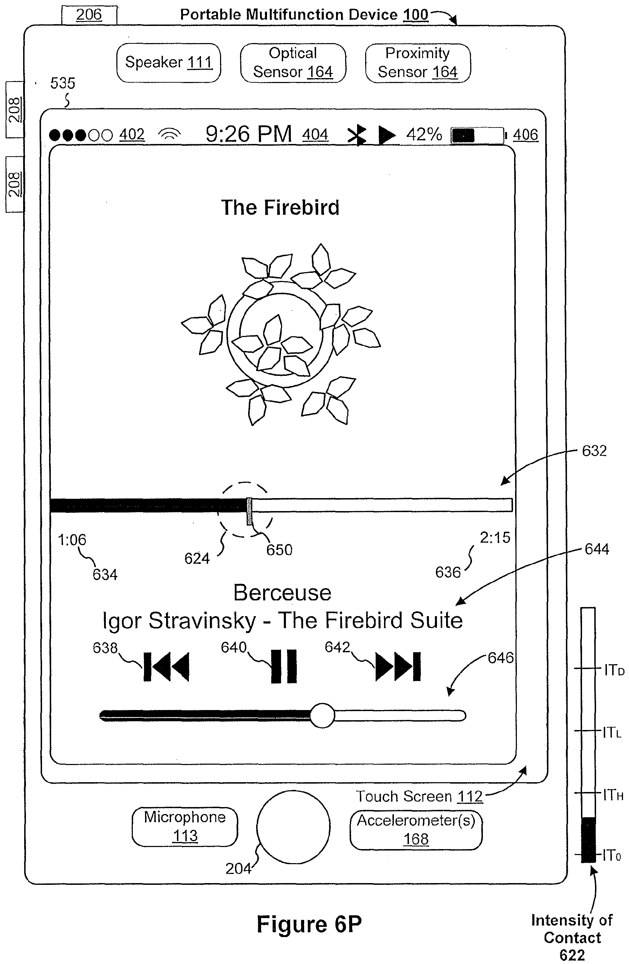

Figure 6P illustrates a user interface for a digital content management application that includes multiple user interface elements, in accordance with some embodiments. User interface elements of Figure 6P include media playback slider 632, lower range value indicator 634, upper range value indicator 636, media playback controls (previous track control 638, pause control 640, next track control 642), content identification information object 644, volume slider 646, signal strength indicators 402, time indicator 404, and battery status indicator 406. Media playback slider 632 represents an audio track. Lower range value indicator 634 indicates a time value (0:00) of a position in the audio track corresponding to the left edge of media playback slider 632 and upper range value indicator 636 indicates a time value (2:15) of a position in the audio track corresponding to the right edge of media playback slider 632. Play progress in the audio track represented by media playback slider 632 has reached time value 1:36, as indicated by the location of play head 650 relative to the time values indicated by lower range value indicator 634 and upper range value indicator 636. In Figure 6P, a contact with touch screen 112 is detected at a location indicated by focus selector 624. Focus selector 624 is at a location of media playback slider 632. The characteristic intensity of the contact is indicated by intensity meter 622. In Figure 6P, the characteristic intensity of the contact (as indicated by intensity meter 622) is between a contact-detection intensity threshold IT₀ and a hint intensity threshold IT_{H}.

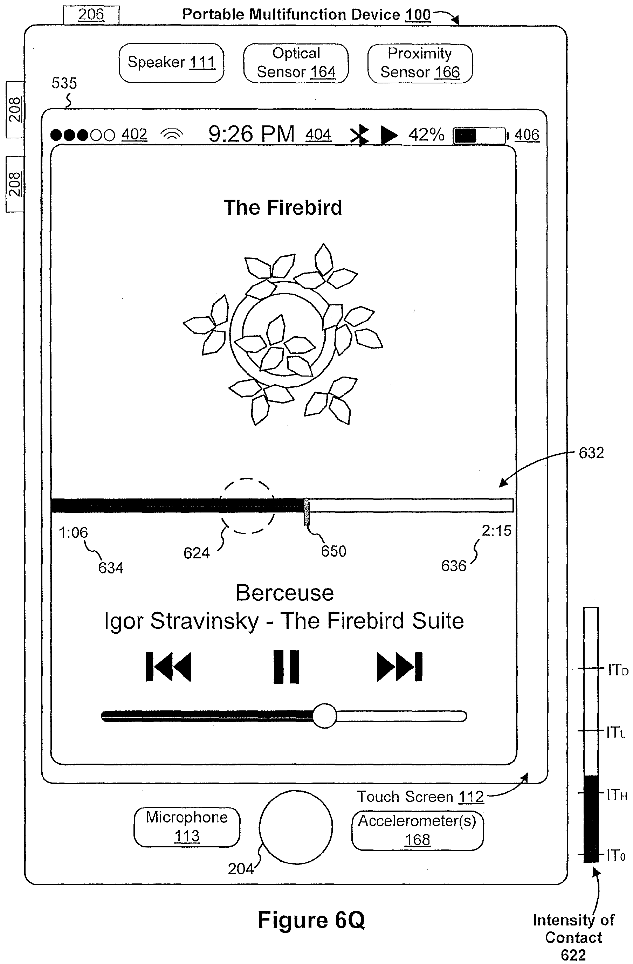

Figure 6Q illustrates a user interface in which a play progress property of a user interface element is adjusted. In Figure 6Q, the characteristic intensity of the contact at the location indicated by focus selector 624 has increased to an intensity level above the hint intensity threshold IT_{H}, as indicated by intensity meter 622, from an intensity level below the hint intensity threshold IT_{H} (e.g., as indicated by intensity meter 622 of Figure 6P). In comparison with media playback slider 632 as shown in Figure 6P, the play progress in the audio track represented by media playback slider 632 has increased (e.g., reached time value 1:46), as indicated by the location of play head 650 relative to the time values indicated by lower range value indicator 634 and upper range value indicator 636 in Figure 6Q.

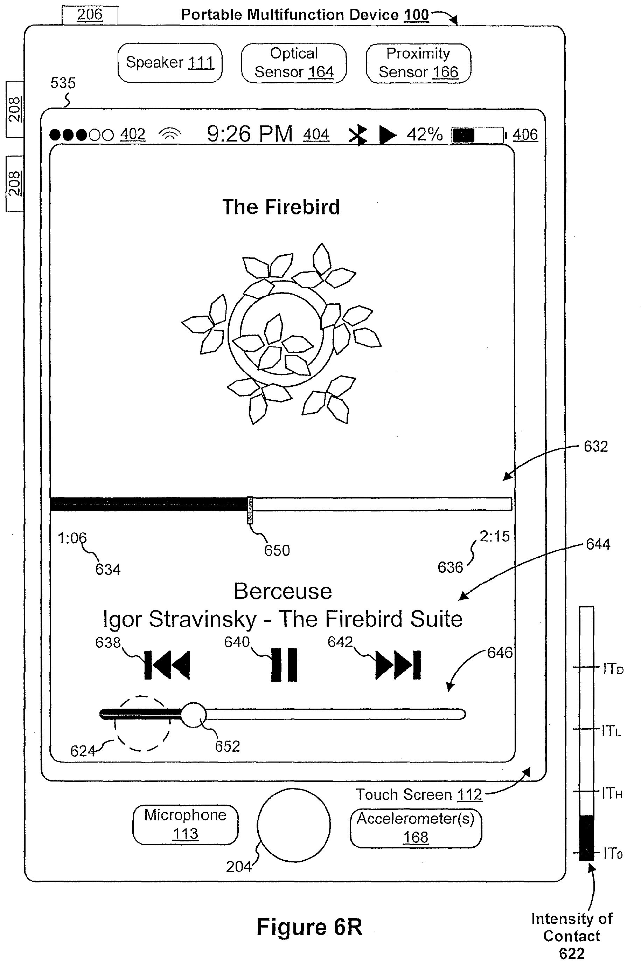

Figure 6R illustrates a user interface for a digital content management application that includes multiple user interface elements, in accordance with some embodiments. User interface elements of Figure 6R include media playback slider 632, lower range value indicator 634, upper range value indicator 636, media playback controls (previous track control 638, pause control 640, next track control 642), content identification information object 644, volume slider 646, signal strength indicators 402, time indicator 404, and battery status indicator 406. In Figure 6R, a contact with touch screen 112 is detected at a location indicated by focus selector 624. Focus selector 624 is at a location of volume slider 646. A first volume level, as indicated by a location of volume control 652 in volume slider 646, is at about a quarter of the maximum volume level. The characteristic intensity of the contact is indicated by intensity meter 622. In Figure 6R, the characteristic intensity of the contact (as indicated by intensity meter 622) is between a contact-detection intensity threshold IT₀ and a hint intensity threshold IT_{H}.

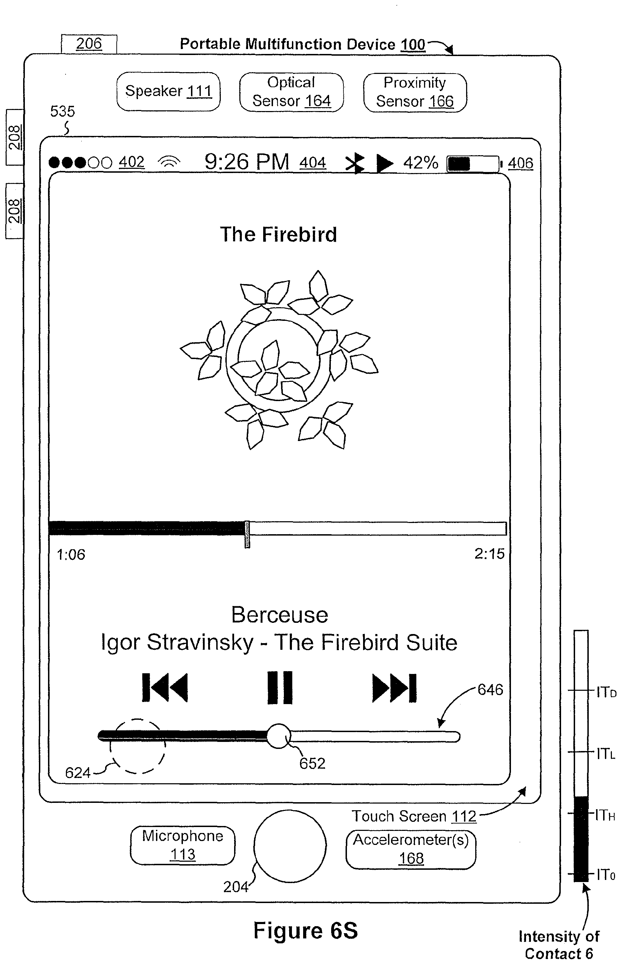

Figure 6S illustrates a user interface in which a volume property of a user interface element is adjusted. In Figure 6S, the characteristic intensity of the contact at the location indicated by focus selector 624 has increased to an intensity level above the light press intensity threshold IT_{H}, as indicated by intensity meter 622, from an intensity level below the light press intensity threshold IT_{H} (e.g., as indicated by intensity meter 622 of Figure 6R). In comparison with volume slider 646 as shown in Figure 6R, the volume level as shown in Figure 6S, has increased (e.g., is at about half of the maximum volume level), as indicated by a location of volume control 652 in volume slider 646 in Figure 6S.

Figures 7A-7D are flow diagrams illustrating a method 700 of displaying an expanded portion of a slider, in accordance with some embodiments. The method 700 is performed at an electronic device (e.g., device 300, Figure 3, or portable multifunction device 100, Figure 1A) with a display, a touch-sensitive surface, and one or more sensors to detect intensity of contacts with the touch-sensitive surface. In some embodiments, the display is a touch-screen display and the touch-sensitive surface is on or integrated with the display. In some embodiments, the display is separate from the touch-sensitive surface. Some operations in method 700 are, optionally, combined and/or the order of some operations is, optionally, changed.

As described below, the method 700 provides an intuitive way to display an expanded portion of a slider. The method reduces the number, extent, and/or nature of the inputs from a user when displaying an expanded portion of a slider, thereby creating a more efficient human-machine interface. For battery-operated electronic devices, enabling a user to display an expanded portion of a slider faster and more efficiently conserves power and increases the time between battery charges.

The device (702) displays a user interface that includes a slider that corresponds to a first range of values and one or more other user interface objects (e.g., controls). Exemplary sliders include, without limitation, media playback slider 502, video timeline slider 560, and other progress bars for scrubbing through content (e.g. audio, video, or image gallery); volume slider 516; slider controls for brightness adjustment, orientation adjustment (e.g., adjustment of an image in image editor, an object in a document, etc.), and zoom/magnification adjustment; and a scroll bar for navigating through a document or set of documents. A first range of values is, e.g., a range of time values corresponding to all or part of an audio track (such as time values indicated by lower range value indicator 504 and upper range value indicator 506). Further examples of a range of values include a range of sound level values, a range of brightness values, and a range of size values. In some embodiments, the other user interface objects (e.g., user interface objects other than the slider) are associated with the same functionality as the slider. For example, previous track control 508, play/pause control 510, and next track control 512 are other controls associated with the functionality of media playback slider 502 for scrubbing through media content. In another example, other controls associated with the functionality of a brightness slider include controls for enabling/disabling communication channels (such as Wi-Fi and Bluetooth) a flashlight control, a control for airport mode, a control for locking screen orientation, and a sleep mode control (e.g., the other controls in a control center screen).

The device detects (704) a contact on the touch-sensitive surface 112 while a focus selector 518 is at the slider (e.g., media playback slider 502).

In some embodiments, initial detection of the contact on the touch-sensitive surface occurs (706) when the focus selector 518 is at a location of a displayed play head in the slider (e.g., play head 520 in media playback slider 502).

The device detects (708) (e.g., with the one or more sensors configured to detect intensity of contacts on the touch-sensitive surface) a first increase in a characteristic intensity of the contact on the touch-sensitive surface 112 while the focus selector 518 is at the slider (e.g., media playback slider 502). For example, in user interfaces 530-532 of Figure 5D, a contact occurs at the location indicated by focus selector 518-1/518-2 at media playback slider 502-0/502-1. A characteristic intensity of the contact increases from below IT_{H}, as indicated at intensity level meter 522 shown adjacent to user interface 530, to above IT_{H}, as indicated at intensity level meter 522 shown adjacent to user interface 532.

In response to detecting the first increase in the characteristic intensity of the contact on the touch-sensitive surface 112 and in accordance with a determination that the characteristic intensity of the contact meets intensity criteria, the device displays (710) an expanded portion, less than all, of the slider (e.g., media playback slider 502) while maintaining an appearance of the one or more other user interface objects (e.g., user interface objects 508, 510, 512, 514, and 516). In some embodiments, the intensity criteria include a criterion that is met when a characteristic intensity of the contact (as indicated by intensity meter 522) increases above a first threshold, such as above a hint intensity threshold IT_{H}, or above another static or dynamically determined preview intensity threshold. For example, in Figure 5D, when the characteristic intensity of the contact increases above IT_{H} while focus selector 518-1 is at media playback slider 502-1, as shown at user interface 532, an expanded portion of media playback slider 502-1 is shown. In some embodiments, displaying an expanded portion includes expanding a vertical dimension of a slider (e.g., vertically expanding an audio waveform as shown at user interface 532), expanding a horizontal dimension of the slider (e.g., horizontally expanding the slider to widen its width), expanding both a vertical dimension and a horizontal dimension of the slider. In some embodiments, expansion results in replacing display of a document (e.g., a book) with a section of the document (the section is, e.g., a chapter or a page). In some embodiments, liftoff of the contact from touch screen 112 returns the slider to its pre-expanded state (e.g., as shown in user interface 538a in Figure 5D).

In some embodiments, displaying an expanded portion of the slider includes modifying (712) range indicator values (e.g., time markers for audio/video, document section titles/markers, numerical representations of volume, brightness, angle, etc.) that are displayed on or adjacent to the slider. For example, the time values indicated by lower range value indicator 504 and upper range value indicator 506 are modified when media playback slider 502 is expanded from an initial state, as shown in Figure 5A, to an expanded state, as shown in Figure 5B, and to a further expanded state, as shown in Figure 5C.

In some embodiments, in response to detecting the first increase in the characteristic intensity of the contact on the touch-sensitive surface and in accordance with a determination that the characteristic intensity of the contact does not meet the first intensity criteria (e.g., the characteristic intensity of the contact does not increase above IT_{H}), the device maintains (714) the appearance of the slider and the one or more other controls without displaying an expanded portion of the slider.

In some embodiments, the device detects (716) movement of the focus 518 selector along the slider (e.g., media playback slider 502). In response to detecting movement of the focus selector 518 along the slider: in accordance with a determination that the first intensity criteria were met (e.g., a characteristic intensity of the contact increased above an intensity threshold, such as IT_{H}), the device shifts a current value of the slider by a first amount, and in accordance with a determination that the first intensity criteria were not met, the device shifts a current value of the slider by a second amount different from the first amount. For example, a gesture along a progress indicator that is not expanded (e.g., because the characteristic intensity of the contact did not meet the first intensity criteria) results in a larger adjustment relative to the same distance of gesture along a progress indicator that is expanded.

In an illustrative example, as shown in user interfaces 540-542 of Figure 5E, focus selector 518 moves along media playback slider 502-0 from a first position 518a to a second position 518b, as indicated by arrow 548. In accordance with a determination that the characteristic intensity of the contact did not increase above an intensity threshold IT_{H} (e.g., while the contact moved along media playback slider 502-0 and/or prior to movement of the contact along media playback slider 502-0), the current value of the slider (e.g., as indicated by play head 520-0) is shifted by a first amount (e.g., shifted from time value 1:00, at focus selector location 518a of user interface 540, to time value 1:40, at focus selector location 518b of user interface 542). As shown in user interfaces 544-546 of Figure 5E, focus selector 518 moves along media playback slider 502-2 from a first position 518c to a second position 518d, as indicated by arrow 550. In accordance with a determination that the characteristic intensity of the contact increased above an intensity threshold (e.g., while the contact moved along media playback slider 502-2 and/or prior to movement of the contact along media playback slider 502-2), the current value of the slider (e.g., as indicated by play head 520-2) is shifted by a second amount (e.g., shifted from time value 1:20, at focus selector location 518c of user interface 544, to time value 1:40, at focus selector location 518d of user interface 546).

In some embodiments, a thumb control (e.g., play head 520, volume control 552, or other sliding control for selecting value along slider) for the slider (e.g. media playback slider 502, volume slider 516, or another slider) remains displayed (718) under the focus selector when the expanded portion of the slider is displayed. For example, play head 520 remains displayed under focus selector 518 when an expanded portion of media playback slider 502 is displayed, as shown in Figure 5B. In some embodiments, the width of the slider expands to the left and to the right so that the thumb control remains centered under the slider.

In some embodiments, after expanding the slider, the device detects (720) a first decrease in the characteristic intensity of the contact on the touch-sensitive surface while the focus selector is at the slider. For example, in Figure 5D, a characteristic intensity of the contact decreases from above an intensity threshold IT_{H}, as indicated by intensity meter 522-1 adjacent to user interface 532, to below IT_{H}, as indicated by intensity meter 522-2 adjacent to user interface 534. In response to detecting the first decrease in the characteristic intensity of the contact, the device maintains (722) display of the expanded portion of the slider (e.g., at the same level of expansion). For example, in Figure 5D, user interface 534 shows the same expanded portion of media playback slider 502-2 as is shown in media playback slider 502-1 of user interface 532. After detecting the decrease in the characteristic intensity of the contact and while the expanded portion of the slider is displayed, the device detects (724) a second increase in the characteristic intensity of the contact on the touch-sensitive surface while the focus selector is at the slider. The second increase in the characteristic intensity of the contact is an increase below, equal to, or above the first increase in the characteristic intensity of the contact (e.g., an increase to above IT_{H}, an increase to above IT_{L}, or an increase to another intensity level). For example, in Figure 5D, after the decrease in the characteristic intensity of the contact as shown in user interfaces 532-534, the characteristic intensity increases from below intensity threshold IT_{H}, as indicated by intensity meter 522-2 adjacent to user interface 534, to above IT_{H}, as indicated intensity meter 522-3 shown adjacent to user interface 536. In response to detecting the second increase in the characteristic intensity of the contact, the device displays (726) a further expanded portion of the slider. For example, in Figure 5D, in response to detecting the second increase in the characteristic intensity of the contact as shown in user interfaces 534-536, user interface 536 displays a further increased media playback slider 502-3. In some embodiments, liftoff of the contact returns the slider to its pre-expanded state (e.g., as shown in user interface 538a of Figure 5D). In some embodiments, the slider maintains its current state of expansion on liftoff of the contact (e.g., as shown in user interface 538b, presented when a contact is lifted off while user interface 536 is displayed). In some embodiments, an amount of expansion of the portion of the slider is determined by an amount and/or speed of change of intensity of the contact.

In some embodiments, after expanding the slider, the device detects (728) a first decrease in the characteristic intensity of the contact on the touch-sensitive surface while the focus selector is at the slider. In response to detecting the first decrease in the characteristic intensity of the contact, the device displays (730) the slider with reduced expansion. In some embodiments, in response to detecting the first decrease in the characteristic intensity of the contact, the displayed slider is returned to its initial state (e.g., the slider is displayed with no expansion).

In some embodiments, a magnification within the expanded portion of the slider increases (732) as the characteristic intensity of the contact increases.

In some embodiments, the slider is a progress indicator (734) for media content (e.g., a progress indicator for an audio track, such as media playback slider 502; a progress indicator for video content, such as video timeline slider 560, or another progress indicator), the first range of values includes a first sequence of frames (e.g., a sequence of frames 560 including frame 562 as shown in Figure 5H) of the media content (e.g., video), and displaying an expanded portion of the slider (e.g., video timeline slider 560) includes displaying a second sequence of frames of the media content, wherein spans of time between frames of the first sequence of frames of the media content are greater than spans of time between frames of the second sequence of video frames of the media content. For example, the span of time between the first frame and the second frame of video timeline slider 560 as shown in Figure 5H is greater than the span of time between the first frame and the second frame of the expanded portion of video timeline slider 560 as shown in Figure 51.

In some embodiments, while detecting the first increase in the characteristic intensity of the contact on the touch-sensitive surface 112, the device provides (736), by the touch-sensitive surface 112, tactile output. For example, the tactile output may include a haptic detent, which may occur, for example, when first intensity criteria are met, when the characteristic intensity of the contact increases above one or more intensity thresholds (e.g., IT_{H}, IT_{L}, or IT_{D}, as indicated by intensity meter 522, or above another static or dynamically determined intensity threshold), periodically as intensity increases, and/or on lateral movement of the contact across touch screen 112 (e.g., movement of a contact as indicated in user interfaces 540-542 and/or as indicated in user interfaces 544-546 of Figure 5E). In some embodiments, tactile output is also provided during a first decrease in the characteristic intensity, during a second increase in the characteristic intensity, and/or during a subsequent increase or decrease in intensity.

In some embodiments, the tactile output occurs (738) in response to detecting that a current value (e.g., as indicated by a thumb control a progress indicator, or other contact on the slider, such volume control 552 on volume slider 516, play head 520 on media playback slider 502, or a contact on video timeline slider 560) of the slider has changed to a predefined reference value within the slider in response to user input. A predefined reference value is, e.g., a reference value that is defined for a slider, such as a chapter, track, or track subdivision boundary in a document, audio content, or video content; 1x zoom for an image; 90 degree rotation of an image or object; or a horizon lock rotation value for a photo. For example, as a contact moves across video timeline slider 560, tactile output occurs each time a boundary of a respective frame 562 is crossed. In another example, as play head 520 moves across media playback slider 502, tactile output occurs each time a boundary of a track subdivision is crossed. In some embodiments, a tactile output is generated in response to determining that the current value of the slider has changed away from the predefined reference value in response to user input (e.g., when the thumb control or progress indicator moves away from the predefined reference value). In some embodiments, a tactile output is generated only when the current value has changed to the predefined reference value but not when the current value has changed away from the predefined reference value. In some embodiments the tactile output is generated in conjunction with snapping behavior where the current value of the slider snaps to the predefined reference value when the current value is moved (in response to user input) within a predefined distance of the predefined reference value.

In some embodiments, immediately prior to detecting the contact on the touch-sensitive surface 112, the slider (e.g., media playback slider 502) has a first value (e.g., as indicated by a position of play head 520); while the contact is detected on the touch-sensitive surface, the current value of the slider changes to a second value (e.g., in response to a dragging input with the contact, such as a movement of play head 520-0 along a path from focus selector position 518a to focus selector 518b of Figure 5E); and the tactile output occurs (740) in response to detecting that a current value of the slider has changed back to the first value in response to user input (e.g., play head 520-0 is returned to position 518a from position 518b). For example, a tactile output is generated to indicate that the thumb has returned to its original position to provide the user with feedback to enable the user to return the original position within the content. In some embodiments, a tactile output (e.g., with a same characteristic waveform or a different characteristic waveform from the tactile output provided in conjunction with snapping behavior) is generated in response to determining that the current value has changed away from the first value in response to user input (e.g., when the thumb moves away from the predefined reference value). In some embodiments, a tactile output is generated only when the current value has changed to the first value but not when the current value has changed away from the first value. In some embodiments the tactile output is generated in conjunction with snapping behavior where the current value of the slider snaps to the first value when the current value is moved (in response to user input) within a predefined distance of the first value.

It should be understood that the particular order in which the operations in Figures 7A-7D have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., method 800) are also applicable in an analogous manner to method 700 described above with respect to Figures 7A-7D. For example, the contacts, gestures, user interface objects, tactile outputs, intensity thresholds, focus selectors, and animations described above with reference to method 700 optionally have one or more of the characteristics of the contacts, gestures, user interface objects, tactile outputs, intensity thresholds, focus selectors, and animations described herein with reference to other methods described herein (e.g., method 800). For brevity, these details are not repeated here.

Figures 8A-8D are flow diagrams illustrating a method 800 of adjusting a property of a user interface element in accordance with some embodiments. The method 800 is performed at an electronic device (e.g., device 300, Figure 3, or portable multifunction device 100, Figure 1A) with a display, a touch-sensitive surface, and one or more sensors to detect intensity of contacts with the touch-sensitive surface. In some embodiments, the display is a touch-screen display and the touch-sensitive surface is on or integrated with the display. In some embodiments, the display is separate from the touch-sensitive surface. Some operations in method 800 are, optionally, combined and/or the order of some operations is, optionally, changed.

As described below, the method 800 provides an intuitive way to adjust a property of a user interface element. The method reduces the number, extent, and/or nature of the inputs from a user when adjusting a property of a user interface element, thereby creating a more efficient human-machine interface. For battery-operated electronic devices, enabling a user to adjust a property of a user interface element faster and more efficiently conserves power and increases the time between battery charges.

The device displays (802) a user interface that includes one or more user interface elements. For example, user interface elements of a user interface shown in Figure 6A include an image message 602, text messages 604 and 606, messaging controls 610 and 612, text entry box 614, back button 616, messaging information objects 618 and 620, signal strength indicators 402, time 404, and battery status indicator 406.

The device detects (804) a contact on the touch-sensitive surface 112. For example, the contact is detected at a location indicated by focus selector 624.

While detecting (806) the contact on the touch-sensitive surface 112, the device detects (808) (e.g., with the one or more sensors configured to detect intensity of contacts on the touch-sensitive surface) a first increase in a characteristic intensity of the contact on the touch-sensitive surface 112. For example, a first increase in the characteristic intensity of the contact may be an increase above an intensity threshold IT_{H} (e.g., an increase from the intensity level indicated by intensity meter 622 shown in Figure 6A to the intensity level indicated by intensity meter 622 in Figure 6B), the first increase in the characteristic intensity of the contact may be an increase above an intensity threshold IT_{L} (e.g., an increase from the intensity level indicated by intensity meter 622 shown in Figure 6A to the intensity level indicated by intensity meter 622 in Figure 6D), or the first increase in the characteristic intensity of the contact is an increase above another static or dynamically determined intensity threshold.

In response to detecting the first increase in the characteristic intensity of the contact, the device adjusts (810) a property of a first user interface element of the one or more user interface elements in the user interface from a first value to a second value. For example, as shown in Figure 6A, a first user interface element is, e.g., image 602 and the property of the first user interface element is, e.g., an area/display size of image 602. The area/display size of image 602 is adjusted from an initial value (e.g., as shown in Figure 6A) to an increased value (e.g., as shown in Figure 6B and as shown in Figure 6D). In some embodiments, increasing the value of a property of the first user interface element also increases the value of a corresponding property of the entire user interface, such as a magnification level. In some embodiments, an amount of increase in the value of the property is determined based on the amount of increase in the characteristic intensity of the contact (e.g., the more the characteristic intensity of the contact increases, the more the value of the property increases).

In some embodiments, the property is a magnification factor (812) of the first user interface element. For example, the magnification of image 602 is adjusted as described with regard to Figures 6A-6O. In some embodiments, the area/display size of the user interface element remains constant as the magnification factor of the first user interface element is adjusted. For example, as shown in the transition of image 602 as shown in Figure 6A to image 602 as shown in Figure 6O, the area/display size of image 602 remains constant as image 602 is magnified. In some embodiments, the area/display size of image 602 increases as the magnification of image 602 is increased. For example, as shown in the transition of image 602 as shown in Figure 6C to image 602 as shown in Figure 6D, the area/display size of image 602 increases as image 602 is magnified.

In some embodiments, the property is play progress (814) (e.g., the user interface element is a representation of media content, such as an audio track or a video) and adjusting the property includes advancing progress in the media content. For example, progress in an audio track is advanced from a first point in the audio track, as indicated by a position of play head 650 along media playback slider 632 in Figure 6P, to a second point in the audio track, as indicated by a position of play head 650 along media playback slider 632 in Figure 6Q. In some embodiments, adjusting play progress occurs when focus selector 624 is at a location of a media playback slider 632, as indicated in Figures 6P-6Q. In some embodiments, adjusting play progress occurs when focus selector is at a location other than media playback slider 632.

In some embodiments, the property is a volume level (816). For example, a volume level is increased from a first volume level, as indicated by a position of volume control 652 along volume slider 646 in the user interface of Figure 6R, to a second volume level, as indicated by a position of volume control 652 along volume slider 646 in the user interface of Figure 6S. In some embodiments, adjusting the volume level occurs when focus selector 624 is at a location of a volume slider 646, as indicated in Figures 6R-6S. In some embodiments, adjusting volume level occurs when focus selector is at a location other than volume slider 646.

In some embodiments, an amount of the adjustment from the first value to the second value is determined (818) based on the first increase in the characteristic intensity of the contact. For example, the amount of the adjustment from the first value to the second value is directly proportional to an amount of increase in the characteristic intensity. In some embodiments, adjustment from a second value to a third value is determined based on a second increase in the characteristic intensity of the contact. For example, the amount of the adjustment from the second value to the third value is directly proportional to an amount of increase in the characteristic intensity. In some embodiments, an amount of the adjustment from the third value to the first value is based on a first decrease in the characteristic intensity of the contact. For example, the amount of the adjustment from the third value to the first value is directly proportional to an amount of decrease in the characteristic intensity.

After adjusting the property of the first user interface element, the device detects (820) a first decrease in the characteristic intensity of the contact (e.g., a decrease below an intensity threshold IT_{H} as indicated by intensity meter 622). For example, the device detects a decrease as indicated by the transition from the intensity level indicated by intensity meter 622 shown in Figure 6D to the intensity level indicated by intensity meter 622 shown in Figure 6F.

In response to detecting the first decrease in the characteristic intensity of the contact, in accordance with a determination that the first increase in the characteristic intensity of the contact met intensity criteria (e.g., that the characteristic intensity of the contact increased above a intensity threshold, such as a light press intensity threshold IT_{L} as indicated by intensity meter 622, or another statically or dynamically determined intensity threshold), the device maintains (822) the property of the first user interface element above the first value (e.g., the device maintains the property of the first user interface element at the second value). For example, as a result of an increase in the characteristic intensity of the contact above IT_{L}, as indicated by intensity meter 622 of Figure 6D, when a decrease in the characteristic intensity of the contact is detected, as indicated by intensity meter 622 of Figure 6F, the area/display size of image 602 is maintained above the initial area/display size of image 602 as shown in Figure 6A. In Figure 6F, the area/display size of image 602 remains at the expanded level (e.g., the expanded area/display size as shown in Figure 6D).

In some embodiments, maintaining the property of the first user interface element above the first value in response to detecting the first decrease in the characteristic intensity of the contact includes (824) maintaining the property at a constant value above the first value. For example, in response to a detected first decrease in the characteristic intensity of the contact, the area of image 602 remains at the expanded level as shown in Figure 6F.

In some embodiments, maintaining the property of the first user interface element above the first value in response to detecting the first decrease in intensity of the contact includes (826) reducing the property of the first user interface element below the second value. For example, as shown in Figure 6G, in response to a detected first decrease in the characteristic intensity of the contact, the area/display size of image 602 decreases to below the expanded level shown in Figure 6F (e.g., to produce a "deflation" effect between "inflations" of the property of the user interface element in response to detected increases in the characteristic intensity of the contact). In some embodiments, reducing the property of the first user interface element below the second value is continuous from when (e.g., the instant at which) the first decrease in intensity of the contact is detected until a subsequent increase in intensity of the contact is detected. In some embodiments, reducing the property of the first user interface element below the second value continues until the property of the first user interface element returns to just above the first value (e.g., the area/display size of image 602 decreases to just above the area/display size of image 602 shown in Figure 6A), such as within a determined margin of the first value. In some embodiments, the reduction in the property of the first user interface element below the second value is limited to a determined margin of the second value (e.g., the reduction in the area/display size of image 602 is limited to a 10% reduction in area from the expanded area/display size of image 602 as shown in Figure 6D while the contact with touch screen 112 is maintained).

In some embodiments, the intensity criteria include (828) a requirement that the characteristic intensity of the contact increases at or above a threshold rate during the first increase in the characteristic intensity. For example, a quick press (e.g., a jab) by the contact that increases the characteristic intensity of the contact at or above a threshold rate satisfies the intensity criteria.

After detecting the decrease in the characteristic intensity of the contact and while the property of the first user interface element is above the first value, the device detects (830) a second increase in the characteristic intensity of the contact. For example, a characteristic intensity of the contact increases from the intensity level indicated by intensity meter 622 shown in Figure 6F to the intensity level indicated by intensity meter 622 shown in Figure 6H. In some embodiments, the intensity level reached by the second increase in the characteristic intensity of the contact is the same as, less than, or greater than the intensity level reached by the first increase in characteristic intensity.

In response to detecting the second increase in the characteristic intensity of the contact, the device adjusts (832) the property of the first user interface element to a third value that is greater than the second value. For example, the area/display size of image 602 is adjusted from an expanded value as shown in Figure 6D to a further expanded value, as shown in Figure 6H. In some embodiments, the amount of increase in the property is determined based on the amount of increase in the characteristic intensity of the contact (e.g., the more the characteristic intensity of the contact increases, the more the value of the property increases).

In some embodiments, after increasing the property of the first user interface element to the third value, the device detects (834) liftoff of the contact and the device maintains the property of the first user interface element above the second value (e.g., the device maintain the property of the first user interface at the third value). For example, as shown in Figure 6N, in response to detecting liftoff of the contact from touch sensitive surface 112, the area/display size of image 602 is maintained above the expanded area/display size of image 602 (e.g., the area/display size of image 602 is maintained at the further expanded level as shown in Figure 6H). In Figure 6N, the area/display size of image 602 remains at the further expanded level (e.g., the further expanded level as shown in Figure 6J). In some embodiments, maintaining the property of the first user interface element above the second value in response to detecting the first decrease in intensity of the contact includes reducing the property of the first user interface element below the third value.

In some embodiments, in response to detecting the first decrease in the characteristic intensity of the contact, in accordance with a determination that the first increase in the characteristic intensity of the contact did not meet the intensity criteria (e.g., the characteristic intensity of the contact did not increase above an intensity threshold, e.g., the light press intensity threshold IT_{L} as indicated by intensity meter 622, or another statically or dynamically determined intensity threshold) the device returns (836) the property of the first user interface element to the first value. For example, after an increase in the area of image 602 occurs, as shown in Figures 6A-6B, because the characteristic intensity of the contact did not increase above IT_{L} (e.g., as indicated by intensity meter 622 as shown in Figure 6B), when a decrease in the characteristic intensity of the contact occurs (e.g., as indicated by intensity meter 622 as shown in Figure 6C), the area/display size of the image 602 is returned to the initial value of the area/display size of the image (e.g., the area/display size of image 602 as shown in Figure 6C is equal to the initial area/display size of image 602 as shown in Figure 6A).

In some embodiments, after increasing the property of the first user interface element to the third value, the device detects liftoff of the contact and the device returns (838) the property of the first user interface element to the first value. For example, as shown in Figure 6K, the area/display size of image 602 returns to an initial area/display size when liftoff of the contact occurs (e.g., the area/display size of image 602 as shown in Figure 6K is equal to the initial area/display size of image 602 as shown in Figure 6A) .

In some embodiments, returning the property of the first user interface element to the first value includes (840) a first portion showing a decrease of the property of the first user interface element from the second value to a fourth value, followed by a second portion showing an increase from the fourth value to the first value. For example, as the area/display size of image 602 is returned to an initial area/display size (e.g., as the area/display size of image 602 is reduced from a further expanded level as shown in Figure 6J to an initial level as shown in Figure 6K, or as the area/display size of image 602 is reduced from an expanded level as shown in Figure 6B to an initial level as shown in Figure 6C), the area/display size of image 602 decreases to a reduced level (e.g., decreases from the initial area/display size as shown in Figure 6K to a reduced area/display size as shown in Figure 6L), followed by a return to the initial area/display size of image 602 (e.g., increases from the reduced area/display size as shown in Figure 6L to the initial area/display size as shown in Figure 6M).

In some embodiments, adjusting the property of the first user interface element from the first value to the second value includes (842) a first portion showing an increase of the property of the first user interface element from the first value to a fifth value, followed by a second portion showing a decrease from the fifth value to the second value. For example, as the area/display size of image 602 increases from an initial area/display size (e.g., as shown in Figure 6A) to an expanded area/display size (e.g., as shown in Figure 6F), the expanded area/display size increases (e.g., increases from the target expanded area/display size as shown in Figure 6D to a larger area/display size as shown in Figure 6E), followed by a return to the expanded area/display size of image 602 (e.g., decreases from the larger area/display size as shown in Figure 6E to the target expanded area/display size as shown in Figure 6F).

In some embodiments, adjusting the property of the first user interface element to the third value includes (844) a first portion showing an increase of the property of the first user interface element from the second value to a sixth value, followed by a second portion showing a decrease from the sixth value to the third value. For example, as the area/display size of image 602 increases from an expanded area/display size (e.g., as shown in Figure 6F) to a further expanded area/display size (e.g., as shown in Figure 6H), the further expanded area/display size increases (e.g., increases from the target further expanded area/display size as shown in Figure 6H to a larger area/display size as shown in Figure 61), followed by a return to the further expanded area/display size of image 602 (e.g., decreases from a larger area/display size as shown in Figure 61 to the target further expanded area/display size as shown in Figure 6J).

In some embodiments, adjusting the property of the first user interface element includes (846) dynamically adjusting the appearance of the first user interface element. For example, a dynamic adjustment of an appearance of the first user interface element includes graphical adjustment to the entire first user interface element (e.g., adjusting an area of image 602), graphical adjustment along one or more axes of the first user interface element (e.g., stretching a first user interface element in a vertical direction, in a horizontal direction, and/or in a z-axis direction), replacement of a first representation of the first user interface element (e.g., document title) with an alternative representation of the first user interface element (e.g., sub-section title), or adjustment of spacing between frames of video.

In some embodiments, the device dynamically adjusts (848) the appearance of the first user interface element based on detected changes in the characteristic intensity of the contact. For example, adjustment of the appearance of the first user interface element is directly proportional to the characteristic intensity of the contact and/or based on an increase above or decrease below an intensity threshold.

In some embodiments, the device adjusts (850) the appearance of the first user interface element based on a respective increase in the characteristic intensity of the contact, wherein the appearance of the first user interface element is not adjusted when a respective decrease in the characteristic intensity of the contact occurs. In some embodiments, the dynamic adjustment of the appearance of the first user interface element only tracks the intensity of the contact when the intensity of the contact is increasing, but does not track the intensity of the contact when the intensity of the contact is decreasing. For example, the area of image 602 expands when increases in characteristic intensity of the contact occur (e.g., as indicated by the expansion of the area/display size of image 602 as shown in Figure 6A to the area/display size of image 602 as shown in Figure 6D, and as indicated by the expansion of the area/display size of image 602 as shown in Figure 6D to the area/display size of image 602 as shown in Figure 6F). The area/display size of image 602 does not decrease when decreases in characteristic intensity of the contact occur (e.g., the area/display size of image 602 as shown in Figure 6D is maintained as shown in Figure 6F, and the area/display size of image 602 as shown in Figure 6H is maintained as shown in Figure 6J).

In some embodiments, the contact is initially detected (852) when a focus selector 624 is at the first user interface element. For example, a contact at a location indicated by focus selector 624 is initially detected when the focus selector 624 is at a user interface element (e.g., focus selector 624 is at image 602 as shown in Figures 6A-6I, at media playback slider 632 as shown in Figures 6P-6Q, or at volume control 652 as shown in Figures 6R-6S).

It should be understood that the particular order in which the operations in Figures 8A-8D have been described is merely exemplary and is not intended to indicate that the described order is the only order in which the operations could be performed. One of ordinary skill in the art would recognize various ways to reorder the operations described herein. Additionally, it should be noted that details of other processes described herein with respect to other methods described herein (e.g., method 700) are also applicable in an analogous manner to method 800 described above with respect to Figures 8A-8D. For example, the contacts, user interface objects, intensity thresholds, focus selectors, and animations described above with reference to method 800 optionally have one or more of the characteristics of the contacts, user interface objects, intensity thresholds, focus selectors, and animations described herein with reference to other methods described herein (e.g., method 700). For brevity, these details are not repeated here.

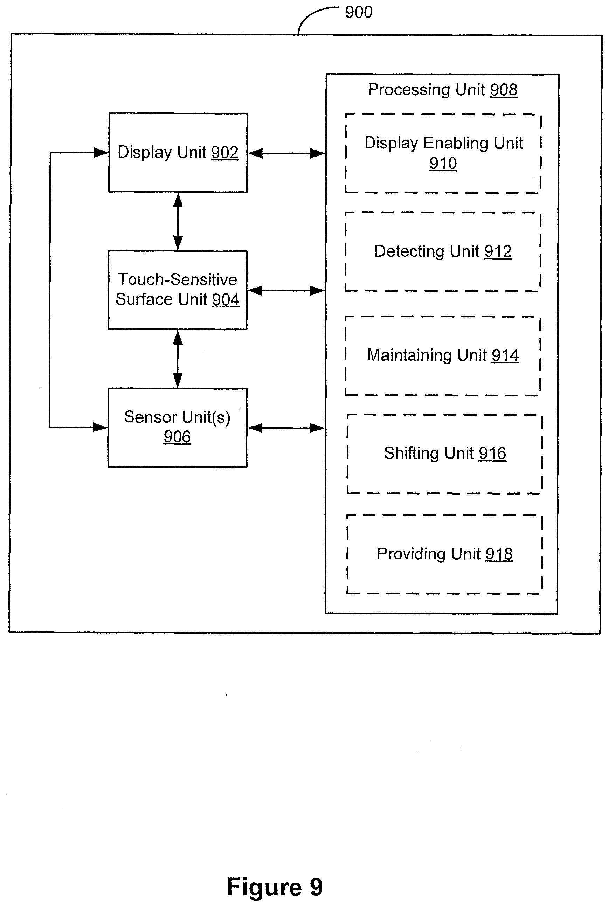

In accordance with some embodiments, Figure 9 shows a functional block diagram of an electronic device 900 configured in accordance with the principles of the various described embodiments. The functional blocks of the device are, optionally, implemented by hardware, software, or a combination of hardware and software to carry out the principles of the various described embodiments. It is understood by persons of skill in the art that the functional blocks described in Figure 9 are, optionally, combined or separated into sub-blocks to implement the principles of the various described embodiments. Therefore, the description herein optionally supports any possible combination or separation or further definition of the functional blocks described herein.

As shown in Figure 9, an electronic device 900 includes a display unit 902 configured to display a user interface, a touch-sensitive surface unit 904 configured to receive contacts, one or more sensor units 906 configured to detect intensity of contacts with the touch-sensitive surface unit 904; and a processing unit 908 coupled with the display unit 902, the touch-sensitive surface unit 904 and the one or more sensor units 906. In some embodiments, the processing unit 908 includes: a display enabling unit 910, a detecting unit 912, a maintaining unit 914, a shifting unit 916, and a providing unit 918.

The processing unit 908 is configured to: enable display (e.g., with display enabling unit 910), on the display unit 902 of a user interface that includes: a slider that corresponds to a first range of values, and one or more other user interface objects; detect (e.g., with detecting unit 912) a contact on the touch-sensitive surface unit while a focus selector is at the slider; detect (e.g., with the detecting unit 912) a first increase in a characteristic intensity of the contact on the touch-sensitive surface unit while the focus selector is at the slider; and, in response to detecting the first increase in the characteristic intensity of the contact on the touch-sensitive surface unit and in accordance with a determination that the characteristic intensity of the contact meets intensity criteria: enable display (e.g., with display enabling unit 910) of an expanded portion, less than all, of the slider while maintaining an appearance of the one or more other user interface objects.

In some embodiments, the processing unit 908 is configured to: after expanding the slider, detect (e.g., with the detecting unit 912) a first decrease in the characteristic intensity of the contact on the touch-sensitive surface unit while the focus selector is at the slider; in response to detecting the first decrease in the characteristic intensity of the contact, maintain (e.g., with the maintaining unit 914) display of the expanded portion of the slider; after detecting the decrease in the characteristic intensity of the contact and while the expanded portion of the slider is displayed, detect (e.g., with the detecting unit 912) a second increase in the characteristic intensity of the contact on the touch-sensitive surface unit while the focus selector is at the slider; and, in response to detecting the second increase in the characteristic intensity of the contact, enable display (e.g., with display enabling unit 910) of a further expanded portion of the slider.

In some embodiments, the processing unit 908 is configured to, after expanding the slider, detect (e.g., with the detecting unit 912) a first decrease in the characteristic intensity of the contact on the touch-sensitive surface unit while the focus selector is at the slider; and, in response to detecting the first decrease in the characteristic intensity of the contact, enable display (e.g., with display enabling unit 910) of the slider with reduced expansion.

In some embodiments, the processing unit 908 is configured to, in response to detecting the first increase in the characteristic intensity of the contact on the touch-sensitive surface unit 904 and in accordance with a determination that the characteristic intensity of the contact does not meet the first intensity criteria, maintain (e.g., with the maintaining unit 914) the appearance of the slider and the one or more other controls without displaying an expanded portion of the slider.

In some embodiments, enabling display of an expanded portion of the slider includes modifying range indicator values that are displayed on or adjacent to the slider.

In some embodiments, the processing unit 908 is configured to detect (e.g., with the detecting unit 912) movement of the focus selector along the slider; and, in response to detecting movement of the focus selector along the slider: in accordance with a determination that the first intensity criteria were met, shift (e.g., with the shifting unit 916) a current value of the slider by a first amount; and in accordance with a determination that the first intensity criteria were not met, shift (e.g., with the shifting unit 916) a current value of the slider by a second amount different from the first amount.

In some embodiments, initial detection of the contact on the touch-sensitive surface unit 904 occurs when the focus selector is at a location of a displayed play head in the slider.

In some embodiments, a thumb control for the slider remains displayed under the focus selector when the expanded portion of the slider is displayed.

In some embodiments, a magnification within the expanded portion of the slider increases as the characteristic intensity of the contact increases.

In some embodiments, the slider is a progress indicator for media content, the first range of values includes a first sequence of frames of the media content and, enabling display of an expanded portion of the slider includes enabling display of a second sequence of frames of the media content, wherein spans of time between frames of the first sequence of frames of the media content are greater than spans of time between frames of the second sequence of video frames of the media content.

In some embodiments, the processing unit 908 is configured to: while detecting the first increase in the characteristic intensity of the contact on the touch-sensitive surface unit 904, provide (e.g., with the providing unit 918), by the touch-sensitive surface unit 904, tactile output.

In some embodiments, the tactile output occurs in response to detecting that a current value of the slider has changed to a predefined reference value within the slider in response to user input.

In some embodiments, immediately prior to detecting the contact on the touch-sensitive surface unit 904, the slider has a first value; while the contact is detected on the touch-sensitive surface unit 904, the current value of the slider changes to a second value; and the tactile output occurs in response to detecting that a current value of the slider has changed back to the first value in response to user input.

The operations described above with reference to Figures 7A-7D are, optionally, implemented by components depicted in Figures 1A-1B or Figure 9. For example, detection operations 704 and 706 are, optionally, implemented by event sorter 170, event recognizer 180, and event handler 190. Event monitor 171 in event sorter 170 detects a contact on touch-sensitive display 112, and event dispatcher module 174 delivers the event information to application 136-1. A respective event recognizer 180 of application 136-1 compares the event information to respective event definitions 186, and determines whether a first contact at a first location on the touch-sensitive surface (or whether rotation of the device) corresponds to a predefined event or sub-event, such as selection of an object on a user interface, or rotation of the device from one orientation to another. When a respective predefined event or sub-event is detected, event recognizer 180 activates an event handler 190 associated with the detection of the event or sub-event. Event handler 190 optionally uses or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figures 1A-1B.

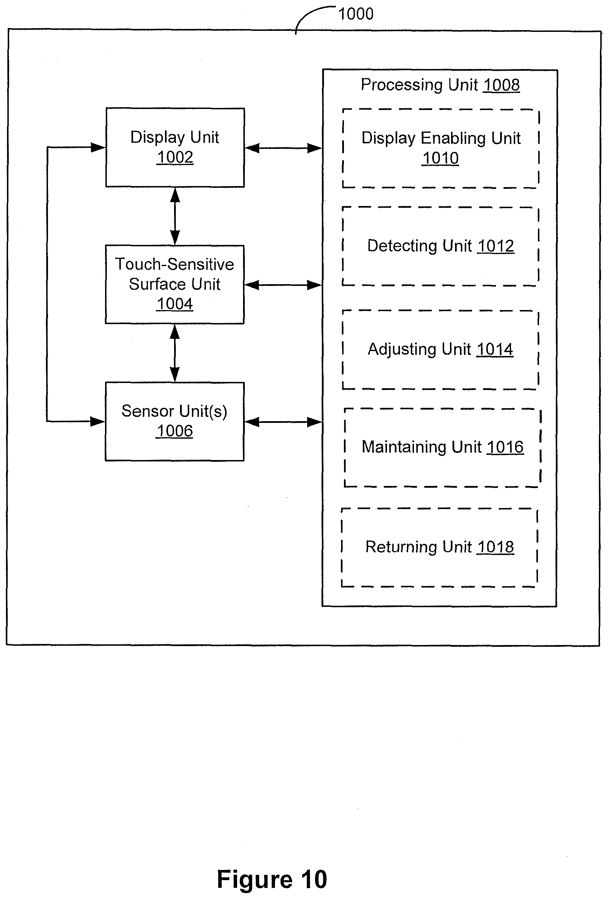

In accordance with some embodiments, Figure 10 shows a functional block diagram of an electronic device 1000 configured in accordance with the principles of the various described embodiments. The functional blocks of the device are, optionally, implemented by hardware, software, or a combination of hardware and software to carry out the principles of the various described embodiments. It is understood by persons of skill in the art that the functional blocks described in Figure 10 are, optionally, combined or separated into sub-blocks to implement the principles of the various described embodiments. Therefore, the description herein optionally supports any possible combination or separation or further definition of the functional blocks described herein.

As shown in Figure 10, an electronic device 1000 includes a display unit 1002 configured to display a user interface, a touch-sensitive surface unit 1004 configured to receive contacts, one or more sensor units 1006 configured to detect intensity of contacts with the touch-sensitive surface unit 1004; and a processing unit 1008 coupled with the display unit 1002, the touch-sensitive surface unit 1004 and the one or more sensor units 1006. In some embodiments, the processing unit 1008 includes: a display enabling unit 1010, a detecting unit 1012, an adjusting unit 1014, a maintaining unit 1016, and a returning unit 1018.

The processing unit 1008 is configured to enable display (e.g., with the display enabling unit 1010), on the display unit, of a user interface that includes one or more user interface elements; detect (e.g., with the detecting unit 1012) a contact on the touch-sensitive surface unit; and, while detecting the contact on the touch-sensitive surface unit: detect (e.g., with the detecting unit 1012) a first increase in a characteristic intensity of the contact on the touch-sensitive surface unit; in response to detecting the first increase in the characteristic intensity of the contact, adjust (e.g., with the adjusting unit 1014) a property of a first user interface element of the one or more user interface elements in the user interface from a first value to a second value; after adjusting the property of the first user interface element, detect (e.g., with the detecting unit 1012) a first decrease in the characteristic intensity of the contact; in response to detecting the first decrease in the characteristic intensity of the contact, in accordance with a determination that the first increase in the characteristic intensity of the contact met intensity criteria, maintain (e.g., with the maintaining unit 1016) the property of the first user interface element above the first value; after detecting the decrease in the characteristic intensity of the contact and while the property of the first user interface element is above the first value, detect (e.g., with the detecting unit 1012) a second increase in the characteristic intensity of the contact; and, in response to detecting the second increase in the characteristic intensity of the contact, adjust (e.g., with the adjusting unit 1014) the property of the first user interface element to a third value that is greater than the second value.

In some embodiments, the processing unit is configured to, after increasing the property of the first user interface element to the third value, detect (e.g., with the detecting unit 1012) liftoff of the contact and maintain (e.g., with the maintaining unit 1016) the property of the first user interface element above the second value.

In some embodiments, the processing unit is configured to, in response to detecting the first decrease in the characteristic intensity of the contact, in accordance with a determination that the first increase in the characteristic intensity of the contact did not meet the intensity criteria, return (e.g., with the returning unit 1018) the property of the first user interface element to the first value.

In some embodiments, the processing unit is configured to, after increasing the property of the first user interface element to the third value, detect (e.g., with the detecting unit 1012) liftoff of the contact and return (e.g., with the returning unit 1018) the property of the first user interface element to the first value.

In some embodiments, returning the property of the first user interface element to the first value includes a first portion showing a decrease of the property of the first user interface element from the second value to a fourth value, followed by a second portion showing an increase from the fourth value to the first value.

In some embodiments, adjusting the property of the first user interface element from the first value to the second value includes a first portion showing an increase of the property of the first user interface element from the first value to a fifth value, followed by a second portion showing a decrease from the fifth value to the second value.

In some embodiments, adjusting the property of the first user interface element to the third value includes a first portion showing an increase of the property of the first user interface element from the second value to a sixth value, followed by a second portion showing a decrease from the sixth value to the third value.

In some embodiments, maintaining the property of the first user interface element above the first value in response to detecting the first decrease in the characteristic intensity of the contact includes maintaining the property at a constant value above the first value.

In some embodiments, maintaining the property of the first user interface element above the first value in response to detecting the first decrease in intensity of the contact includes reducing the property of the first user interface element below the second value.

In some embodiments, the property is a magnification factor of the first user interface element.

In some embodiments, the property is play progress.

In some embodiments, the property is a volume level.

In some embodiments, an amount of the adjustment from the first value to the second value is determined based on the first increase in the characteristic intensity of the contact.

In some embodiments, adjusting the property of the first user interface element includes dynamically adjusting an appearance of the first user interface element.

In some embodiments, the processing unit is configured to dynamically adjust (e.g., with the adjusting unit 1014) the appearance of the first user interface element based on detected changes in the characteristic intensity of the contact.

In some embodiments, the processing unit is configured to adjust (e.g., with the adjusting unit 1014) the appearance of the first user interface element based on a respective increase in the characteristic intensity of the contact, wherein the appearance of the first user interface element is not adjusted when a respective decrease in the characteristic intensity of the contact occurs.

In some embodiments, the contact is initially detected when a focus selector is at the first user interface element.

In some embodiments, the intensity criteria include a requirement that the characteristic intensity of the contact increases at or above a threshold rate during the first increase in the characteristic intensity.

The operations in the information processing methods described above are, optionally implemented by running one or more functional modules in information processing apparatus such as general purpose processors (e.g., as described above with respect to Figures 1A and 3) or application specific chips.

The operations described above with reference to Figures 8A-8D are, optionally, implemented by components depicted in Figures 1A-1B or Figure 10. For example, detection operations 804 and 806 and adjusting operations 810 and 832 are, optionally, implemented by event sorter 170, event recognizer 180, and event handler 190. Event monitor 171 in event sorter 170 detects a contact on touch-sensitive display 112, and event dispatcher module 174 delivers the event information to application 136-1. A respective event recognizer 180 of application 136-1 compares the event information to respective event definitions 186, and determines whether a first contact at a first location on the touch-sensitive surface (or whether rotation of the device) corresponds to a predefined event or sub-event, such as selection of an object on a user interface, or rotation of the device from one orientation to another. When a respective predefined event or sub-event is detected, event recognizer 180 activates an event handler 190 associated with the detection of the event or sub-event. Event handler 190 optionally uses or calls data updater 176 or object updater 177 to update the application internal state 192. In some embodiments, event handler 190 accesses a respective GUI updater 178 to update what is displayed by the application. Similarly, it would be clear to a person having ordinary skill in the art how other processes can be implemented based on the components depicted in Figures 1A-1B.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best use the invention and various described embodiments with various modifications as are suited to the particular use contemplated.

## Claims

1. A method, comprising:
at an electronic device (100) with a display, a touch-sensitive surface (112), and one or more sensors (165) to detect intensities of contacts with the touch-sensitive surface:
displaying, on the display, a user interface (200) that includes one or more user interface elements (602, 604, 606);
detecting a contact on the touch-sensitive surface; and,
while detecting the contact on the touch-sensitive surface:
detecting a first increase in a characteristic intensity of the contact on the touch-sensitive surface to a first intensity value;
in response to detecting the first increase in the characteristic intensity of the contact, adjusting a property of a first user interface element (602) of the one or more user interface elements in the user interface from a first value to a second value;
after adjusting the property of the first user interface element, detecting a first decrease in the characteristic intensity of the contact;
in response to detecting the first decrease in the characteristic intensity of the contact, in accordance with a determination that the first increase in the characteristic intensity of the contact met intensity criteria, the contact intensity criteria including a requirement that the first intensity value is above a respective intensity threshold, maintaining the property of the first user interface element above the first value;
after detecting the decrease in the characteristic intensity of the contact and while the property of the first user interface element is above the first value, detecting a second increase in the characteristic intensity of the contact to a second intensity value that is less than or equal to the first intensity value; and,
in response to detecting the second increase in the characteristic intensity of the contact, adjusting the property of the first user interface element to a third value that is greater than the second value.

2. The method of claim 1, including, after increasing the property of the first user interface element (602) to the third value, detecting liftoff of the contact and maintaining the property of the first user interface element above the second value.

3. The method of any of claims 1-2, including, in response to detecting the first decrease in the characteristic intensity of the contact, in accordance with a determination that the first increase in the characteristic intensity of the contact did not meet the intensity criteria, returning the property of the first user interface element (602) to the first value.

4. The method of any of claims 1-2, including, after increasing the property of the first user interface element (602) to the third value, detecting liftoff of the contact and returning the property of the first user interface element to the first value.

5. The method of any of claims 3-4, wherein returning the property of the first user interface element (602) to the first value includes a first portion showing a decrease of the property of the first user interface element from the second value to a fourth value, followed by a second portion showing an increase from the fourth value to the first value.

6. The method of any of claims 1-5, wherein adjusting the property of the first user interface element (602) from the first value to the second value includes a first portion showing an increase of the property of the first user interface element from the first value to a fifth value, followed by a second portion showing a decrease from the fifth value to the second value.

7. The method of any of claims 1-6, wherein adjusting the property of the first user interface element (602) to the third value includes a first portion showing an increase of the property of the first user interface element from the second value to a sixth value, followed by a second portion showing a decrease from the sixth value to the third value.

8. The method of any of claims 1-7, wherein maintaining the property of the first user interface element (602) above the first value in response to detecting the first decrease in the characteristic intensity of the contact includes maintaining the property at a constant value above the first value.

9. The method of any of claims 1-8, wherein maintaining the property of the first user interface element (602) above the first value in response to detecting the first decrease in intensity of the contact includes reducing the property of the first user interface element below the second value.

10. The method of any of claims 1-9, wherein the property is a magnification factor of the first user interface element (602).

11. The method of any of claims 1-9, wherein the property is play progress.

12. The method of any of claims 1-9, wherein the property is a volume level.

13. The method of any of claims 1-12, wherein an amount of the adjustment from the first value to the second value is determined based on the first increase in the characteristic intensity of the contact.

14. The method of any of claims 1-13, wherein adjusting the property of the first user interface element (602) includes dynamically adjusting an appearance of the first user interface element.

15. The method of claim 14, including dynamically adjusting the appearance of the first user interface element (6020 based on detected changes in the characteristic intensity of the contact.

16. The method of claim 14, including adjusting the appearance of the first user interface element (602) based on a respective increase in the characteristic intensity of the contact, wherein the appearance of the first user interface element is not adjusted when a respective decrease in the characteristic intensity of the contact occurs.

17. The method of any of claims 1-16, wherein the contact is initially detected when a focus selector is at the first user interface element (602).

18. The method of any of claims 1-17, wherein the intensity criteria include a requirement that the characteristic intensity of the contact increases at or above a threshold rate during the first increase in the characteristic intensity.

19. An electronic device (100), comprising:
a display;
a touch-sensitive surface (112);
one or more sensors (165) to detect intensities of contacts with the touch-sensitive surface;
one or more processors (120);
memory (102); and
one or more programs, wherein the one or more programs are stored in the memory and configured to be executed by the one or more processors, the one or more programs including instructions for performing any of the methods of claims 1-18.

20. A computer readable storage medium storing one or more programs, the one or more programs comprising instructions which, when executed by an electronic device (100) with a display, a touch-sensitive surface (112), and one or more sensors (165) to detect intensities of contacts with the touch-sensitive surface, cause the electronic device to perform any of the methods of claims 1-18.

## Patentansprüche

1. Verfahren, umfassend:
an einer elektronischen Vorrichtung (100) mit einer Anzeige, einer berührungsempfindlichen Oberfläche (112) und einem oder mehreren Sensoren (165), um Intensitäten von Kontakten mit der berührungsempfindlichen Oberfläche zu erfassen:
Anzeigen, auf der Anzeige, einer Benutzerschnittstelle (200), die ein oder mehrere Benutzerschnittstellenelemente (602, 604, 606) beinhaltet;
Erfassen eines Kontakts auf der berührungsempfindlichen Oberfläche; und,
während Erfassens des Kontakts auf der berührungsempfindlichen Oberfläche:
Erfassen einer ersten Zunahme einer charakteristischen Intensität des Kontakts auf der berührungsempfindlichen Oberfläche auf einen ersten Intensitätswert;
als Reaktion auf Erfassen der ersten Zunahme der charakteristischen Intensität des Kontakts, Anpassen einer Eigenschaft eines ersten Benutzerschnittstellenelements (602) des einen oder der mehreren Benutzerschnittstellenelemente in der Benutzerschnittstelle von einem ersten Wert auf einen zweiten Wert;
nach Anpassen der Eigenschaft des ersten Benutzerschnittstellenelements, Erfassen einer ersten Abnahme der charakteristischen Intensität des Kontakts;
als Reaktion auf Erfassen der ersten Abnahme der charakteristischen Intensität des Kontakts, in Übereinstimmung mit einer Bestimmung, dass die erste Zunahme der charakteristischen Intensität des Kontakts Intensitätskriterien erfüllte, wobei die Kontaktintensitätskriterien eine Anforderung beinhalten, dass der erste Intensitätswert über einem jeweiligen Intensitätsschwellenwert liegt, Beibehalten der Eigenschaft des ersten Benutzerschnittstellenelements über dem ersten Wert;
nach Erfassen der Abnahme der charakteristischen Intensität des Kontakts und während die Eigenschaft des ersten Benutzerschnittstellenelements über dem ersten Wert liegt, Erfassen einer zweiten Zunahme der charakteristischen Intensität des Kontakts auf einen zweiten Intensitätswert, der kleiner oder gleich dem ersten Intensitätswert ist; und,
als Reaktion auf Erfassen der zweiten Zunahme der charakteristischen Intensität des Kontakts, Anpassen der Eigenschaft des ersten Benutzerschnittstellenelements auf einen dritten Wert, der größer als der zweite Wert ist.

2. Verfahren nach Anspruch 1, beinhaltend, nach Erhöhen der Eigenschaft des ersten Benutzerschnittstellenelements (602) auf den dritten Wert, Erfassen eines Abhebens des Kontakts und Beibehalten der Eigenschaft des ersten Benutzerschnittstellenelements über dem zweiten Wert.

3. Verfahren nach einem der Ansprüche 1-2, beinhaltend, als Reaktion auf Erfassen der ersten Abnahme der charakteristischen Intensität des Kontakts, in Übereinstimmung mit einer Bestimmung, dass die erste Zunahme der charakteristischen Intensität des Kontakts die Intensitätskriterien nicht erfüllte, Zurückkehren der Eigenschaft des ersten Benutzerschnittstellenelements (602) auf den ersten Wert.

4. Verfahren nach einem der Ansprüche 1-2, beinhaltend, nach Erhöhen der Eigenschaft des ersten Benutzerschnittstellenelements (602) auf den dritten Wert, Erfassen eines Abhebens des Kontakts und Zurückkehren der Eigenschaft des ersten Benutzerschnittstellenelements auf den ersten Wert.

5. Verfahren nach einem der Ansprüche 3-4, wobei Zurückkehren der Eigenschaft des ersten Benutzerschnittstellenelements (602) auf den ersten Wert einen ersten Abschnitt beinhaltet, der eine Abnahme der Eigenschaft des ersten Benutzerschnittstellenelements vom zweiten Wert auf einen vierten Wert zeigt, gefolgt von einem zweiten Abschnitt, der eine Zunahme vom vierten Wert auf den ersten Wert zeigt.

6. Verfahren nach einem der Ansprüche 1-5, wobei Anpassen der Eigenschaft des ersten Benutzerschnittstellenelements (602) vom ersten Wert auf den zweiten Wert einen ersten Abschnitt beinhaltet, der eine Zunahme der Eigenschaft des ersten Benutzerschnittstellenelements vom ersten Wert auf einen fünften Wert zeigt, gefolgt von einem zweiten Abschnitt, der eine Abnahme vom fünften Wert auf den zweiten Wert zeigt.

7. Verfahren nach einem der Ansprüche 1-6, wobei Anpassen der Eigenschaft des ersten Benutzerschnittstellenelements (602) auf den dritten Wert einen ersten Abschnitt beinhaltet, der eine Zunahme der Eigenschaft des ersten Benutzerschnittstellenelements vom zweiten Wert auf einen sechsten Wert zeigt, gefolgt von einem zweiten Abschnitt, der eine Abnahme vom sechsten Wert auf den dritten Wert zeigt.

8. Verfahren nach einem der Ansprüche 1-7, wobei Beibehalten der Eigenschaft des ersten Benutzerschnittstellenelements (602) über dem ersten Wert als Reaktion auf Erfassen der ersten Abnahme der charakteristischen Intensität des Kontakts Beibehalten der Eigenschaft auf einem konstanten Wert über dem ersten Wert beinhaltet.

9. Verfahren nach einem der Ansprüche 1-8, wobei Beibehalten der Eigenschaft des ersten Benutzerschnittstellenelements (602) über dem ersten Wert als Reaktion auf Erfassen der ersten Abnahme der Intensität des Kontakts Reduzieren der Eigenschaft des ersten Benutzerschnittstellenelements unter den zweiten Wert beinhaltet.

10. Verfahren nach einem der Ansprüche 1-9, wobei die Eigenschaft ein Vergrößerungsfaktor des ersten Benutzerschnittstellenelements (602) ist.

11. Verfahren nach einem der Ansprüche 1-9, wobei die Eigenschaft ein Spielfortschritt ist.

12. Verfahren nach einem der Ansprüche 1-9, wobei die Eigenschaft ein Lautstärkepegel ist.

13. Verfahren nach einem der Ansprüche 1-12, wobei ein Betrag der Anpassung vom ersten Wert auf den zweiten Wert basierend auf der ersten Zunahme der charakteristischen Intensität des Kontakts bestimmt wird.

14. Verfahren nach einem der Ansprüche 1-13, wobei Anpassen der Eigenschaft des ersten Benutzerschnittstellenelements (602) dynamisches Anpassen eines Erscheinungsbilds des ersten Benutzerschnittstellenelements beinhaltet.

15. Verfahren nach Anspruch 14, beinhaltend dynamisches Anpassen des Erscheinungsbilds des ersten Benutzerschnittstellenelements (6020) basierend auf erfassten Änderungen der charakteristischen Intensität des Kontakts.

16. Verfahren nach Anspruch 14, beinhaltend Anpassen des Erscheinungsbilds des ersten Benutzerschnittstellenelements (602) basierend auf einer jeweiligen Zunahme der charakteristischen Intensität des Kontakts, wobei das Erscheinungsbild des ersten Benutzerschnittstellenelements nicht angepasst wird, wenn eine jeweilige Abnahme der charakteristischen Intensität des Kontakts auftritt.

17. Verfahren nach einem der Ansprüche 1-16, wobei der Kontakt anfänglich erfasst wird, wenn sich ein Fokus-Auswähler am ersten Benutzerschnittstellenelement (602) befindet.

18. Verfahren nach einem der Ansprüche 1-17, wobei die Intensitätskriterien eine Anforderung beinhalten, dass die charakteristische Intensität des Kontakts bei oder über einer Schwellenwertrate während der ersten Zunahme der charakteristischen Intensität zunimmt.

19. Elektronische Vorrichtung (100), umfassend:
eine Anzeige;
eine berührungsempfindliche Oberfläche (112);
einen oder mehrere Sensoren (165), um Intensitäten von Kontakten mit der berührungsempfindlichen Oberfläche zu erfassen;
einen oder mehrere Prozessoren (120);
Speicher (102); und
ein oder mehrere Programme, wobei das eine oder die mehreren Programme im Speicher gespeichert sind und konfiguriert sind, um durch den einen oder die mehreren Prozessoren ausgeführt zu werden, wobei das eine oder die mehreren Programme Anweisungen zum Durchführen eines der Verfahren der Ansprüche 1-18 beinhalten.

20. Computerlesbares Speichermedium, das ein oder mehrere Programme speichert, wobei das eine oder die mehreren Programme Anweisungen umfassen, die, wenn sie durch eine elektronische Vorrichtung (100) mit einer Anzeige, einer berührungsempfindlichen Oberfläche (112) und einem oder mehreren Sensoren (165) ausgeführt werden, um Intensitäten von Kontakten mit der berührungsempfindlichen Oberfläche zu erfassen, bewirken, dass die elektronische Vorrichtung eines der Verfahren der Ansprüche 1-18 durchführt.

## Revendications

1. Un procédé, comprenant :
sur un dispositif électronique (100) avec un afficheur, une surface sensible au toucher (112), et un ou plusieurs capteurs (165) pour détecter des intensités de contacts avec la surface sensible au toucher :
l'affichage, sur l'afficheur, d'une interface utilisateur (200) qui comprend un ou plusieurs éléments d'interface utilisateur (602, 604, 606) ;
la détection d'un contact sur la surface sensible au toucher ; et
pendant la détection du contact sur la surface sensible au toucher :
la détection d'une première augmentation d'une intensité caractéristique du contact sur la surface sensible au toucher à une première valeur d'intensité ;
en réponse à la détection de la première augmentation de l'intensité caractéristique du contact, l'ajustement d'une propriété d'un premier élément d'interface utilisateur (602) des un ou plusieurs éléments d'interface utilisateur de l'interface utilisateur, d'une première valeur à une seconde valeur ;
après l'ajustement de la propriété du premier élément d'interface utilisateur, la détection d'une première diminution de l'intensité caractéristique du contact ; en réponse à la détection de la première diminution de l'intensité caractéristique du contact, suite à une détermination que la première augmentation de l'intensité caractéristique du contact vérifie des critères d'intensité, les critères d'intensité du contact comprenant une exigence que la première valeur d'intensité soit au-dessus d'un seuil d'intensité respectif, le maintien de la propriété du premier élément d'interface utilisateur au-dessus de la première valeur ;
après la détection de la diminution de l'intensité caractéristique du contact et pendant que la propriété du premier élément d'interface utilisateur est au-dessus de la première valeur, la détection d'une seconde augmentation de l'intensité caractéristique du contact à une seconde valeur d'intensité qui est inférieure ou égale à la première valeur d'intensité ; et
en réponse à la détection de la seconde augmentation de l'intensité caractéristique du contact, l'ajustement de la propriété du premier élément d'interface utilisateur à une troisième valeur qui est supérieure à la seconde valeur.

2. Le procédé de la revendication 1, comprenant, après l'augmentation de la propriété du premier élément d'interface utilisateur (602) à la troisième valeur, la détection d'un relâchement du contact et le maintien de la propriété du premier élément d'interface utilisateur au-dessus de la seconde valeur.

3. Le procédé de l'une des revendications 1 à 2, comprenant, en réponse à la détection de la première diminution de l'intensité caractéristique du contact, suite à une détermination que la première augmentation de l'intensité caractéristique du contact ne vérifie pas les critères d'intensité, le retour de la propriété du premier élément d'interface utilisateur (602) à la première valeur.

4. Le procédé de l'une des revendications 1 à 2, comprenant, après l'augmentation de la propriété du premier élément d'interface utilisateur (602) à la troisième valeur, la détection d'un relâchement du contact et le retour de la propriété du premier élément d'interface utilisateur à la première valeur.

5. Le procédé de l'une des revendications 3 à 4, dans lequel le retour de la propriété du premier élément d'interface utilisateur (602) à la première valeur inclut une première partie montrant une diminution de la propriété du premier élément d'interface utilisateur de la seconde valeur à une quatrième valeur, suivie par une seconde partie montrant une augmentation de la quatrième valeur à la première valeur.

6. Le procédé de l'une des revendications 1 à 5, dans lequel l'ajustement de la propriété du premier élément d'interface utilisateur (602) de la première valeur à la seconde valeur comprend une première partie montrant une augmentation de la propriété du premier élément d'interface utilisateur de la première valeur à une cinquième valeur, suivie par une seconde partie montrant une diminution de la cinquième valeur à la seconde valeur.

7. Le procédé de l'une des revendications 1 à 6, dans lequel l'ajustement de la propriété du premier élément d'interface utilisateur (602) à la troisième valeur comprend une première partie montrant une augmentation de la propriété du premier élément d'interface utilisateur de la seconde valeur à une sixième valeur, suivie par une seconde partie montrant une diminution de la sixième valeur à la troisième valeur.

8. Le procédé de l'une des revendications 1 à 7, dans lequel le maintien de la propriété du premier élément d'interface utilisateur (602) au-dessus de la première valeur en réponse à la détection de la première diminution de l'intensité caractéristique du contact comprend le maintien de la propriété à une valeur constante au-dessus de la première valeur.

9. Le procédé de l'une des revendications 1 à 8, dans lequel le maintien de la propriété du premier élément d'interface utilisateur (602) au-dessus de la première valeur en réponse à la détection de la première diminution d'intensité du contact comprend la réduction de la propriété du premier élément d'interface utilisateur au-dessous de la seconde valeur.

10. Le procédé de l'une des revendications 1 à 9, dans lequel la propriété est un facteur de grossissement du premier élément d'interface utilisateur (602).

11. Le procédé de l'une des revendications 1 à 9, dans lequel la propriété est la progression d'une lecture.

12. Le procédé de l'une des revendications 1 à 9, dans lequel la propriété est un niveau de volume.

13. Le procédé de l'une des revendications 1 à 12, dans lequel un degré d'ajustement de la première valeur à la seconde valeur est déterminé en fonction de la première augmentation de l'intensité caractéristique du contact.

14. Le procédé de l'une des revendications 1 à 13, dans lequel l'ajustement de la propriété du premier élément d'interface utilisateur (602) comprend l'ajustement dynamique d'une apparence du premier élément d'interface utilisateur.

15. Le procédé de la revendication 14, comprenant l'ajustement dynamique de l'apparence du premier élément d'interface utilisateur (6020) en fonction de modifications détectées de l'intensité caractéristique du contact.

16. Le procédé de la revendication 14, comprenant l'ajustement de l'apparence du premier élément d'interface utilisateur (602) en fonction d'une augmentation respective de l'intensité caractéristique du contact, l'apparence du premier élément d'interface utilisateur n'étant pas ajustée lorsqu'il y a une diminution respective de l'intensité caractéristique du contact.

17. Le procédé de l'une des revendications 1 à 16, dans lequel le contact commence à être détecté lorsqu'un sélecteur d'accentuation se trouve sur le premier élément d'interface utilisateur (602).

18. Le procédé de l'une des revendications 1 à 17, dans lequel les critères d'intensité comprennent une exigence que l'intensité caractéristique du contact augmente avec un taux de variation seuil, ou plus, pendant la première augmentation de l'intensité caractéristique.

19. Un dispositif électronique (100), comprenant :
un afficheur ;
une surface sensible au toucher (112) ;
un ou plusieurs capteurs (165) pour détecter des intensités de contacts avec la surface sensible au toucher ;
un ou plusieurs processeurs (120) ;
une mémoire (102) ; et
un ou plusieurs programmes, les un ou plusieurs programmes étant stockés dans la mémoire et étant configurés pour être exécutés par les un ou plusieurs processeurs, les un ou plusieurs programmes comprenant des instructions pour mettre en œuvre l'un des procédés des revendications 1 à 18.

20. Un support de stockage lisible par calculateur stockant un ou plusieurs programmes, les un ou plusieurs programmes comprenant des instructions qui, lorsqu'elles sont exécutées par un dispositif électronique (100) avec un afficheur, une surface sensible au toucher (112), et un ou plusieurs capteurs (165) de détection d'intensités de contacts avec la surface sensible au toucher, font en sorte que le dispositif électronique mette en œuvre l'un des procédés des revendications 1 à 18.
